# EUROPÄISCHE PATENTSCHRIFT

(11) **EP 4 139 042 B1**
(45) Veröffentlichungstag und Bekanntmachung des Hinweises auf die Patenterteilung: **09.09.2026**
(21) Anmeldenummer: 21722112.6
(22) Anmeldetag: 19.04.2021
(51) Int. Cl.: B01J 19/00, C40B 30/08, B01D 5/00, B01J 8/00, B01J 8/08, G01N 31/10

(54) **VORRICHTUNG UND VERFAHREN ZUR UNTERSUCHUNG VON HETEROGEN KATALYSIERTEN REAKTIONEN**
DEVICE AND METHOD FOR ANALYZING HETEROGENEOUS CATALYSED REACTIONS
DISPOSITIF ET PROCÉDÉ D'EXAMEN DES RÉACTIONS CATALYSÉES HÉTÉROGÈNES

(30) Priorität: 20.04.2020 EP 20170459; 14.10.2020 CN 202011095513
(43) Veröffentlichungstag der Anmeldung: 01.03.2023
(73) Patentinhaber: HTE GmbH The High Throughput Experimentation Company, 69123 Heidelberg (DE)
(72) Erfinder: KIRCHMANN, Marius, 69123 Heidelberg (DE); FINGER, Kurt-Erich, 69123 Heidelberg (DE); FRIESS, Markus, 69123 Heidelberg (DE)
(74) Vertreter: BASF IP Association
(86) Internationale Anmeldenummer: PCT/EP2021/060076
(87) Internationale Veröffentlichungsnummer: WO 2021/213974

(56) Entgegenhaltungen:
- WO-A1-2015/141624
- WO-A1-2019/020655
- CN-B- 104 028 051
- CN-U- 203 816 363
- US-A- 5 266 270
- US-A1- 2005 145 542
- US-B2- 7 378 059

## Beschreibung

Die Erfindung geht aus von einer Vorrichtung zur Untersuchung von heterogen katalysierten Reaktionen, umfassend mindestens einen Reaktor, durch den ein partikelförmiger Katalysator strömt, und mindestens eine Eduktzufuhr, wobei stromab jedes Reaktors eine Abscheidevorrichtung zur Abtrennung des partikelförmigen Katalysators von einem kondensierbare Gase enthaltenden Reaktionsprodukt angeordnet ist und stromab der Abscheidevorrichtung einen Flüssigkeitsabscheider zur Abtrennung von flüssigen Bestandteilen aus dem Reaktionsprodukt. Die Erfindung betrifft weiterhin ein Verfahren zur Durchführung heterogen katalysierter Reaktionen.

Heterogen katalysierte Reaktionen, die untersucht werden können, sind insbesondere solche, die kurze Kontaktzeiten, vorzugsweise im Bereich von 0,1 bis 10 Sekunden aufweisen. Derartige Reaktionen sind insbesondere katalytische Crack-Reaktionen (Fluid Catalytic Cracking - FCC) die großtechnisch in sogenannten Riser-Reaktoren, in denen der Katalysator von unten nach oben strömt, durchgeführt werden. Mittlere großtechnische Anlagen sind üblicherweise mit einer Katalysatormenge von 100 bis 200 Tonnen bestückt. Eine gute Abbildung beziehungsweise Simulation des großtechnischen FCC-Prozesses lässt sich mit Pilotanlagen realisieren, die mit Riser-Reaktoren ausgestattet sind und mit Katalysatormengen von 2 bis 10 kg oder mehr betrieben werden. Die Versuche mit Pilotanlagen zeigen bezüglich der katalytischen Umsetzung eine gute Übereinstimmung mit den großtechnischen Anlagen, sind jedoch aufwendiger im Betrieb als Laboranlagen, die mit Katalysatormengen im Bereich von 1 bis 50 g betrieben werden können. Zur Abbildung einer großtechnischen Anlage sollte ein Verfahren im Labormaßstab mit möglichst geringen Mengen an Katalysator durchführbar sein. Gleichzeitig sollte die technischen Betriebsparameter mit möglichst hoher Genauigkeit mit den Betriebsparametern der großtechnischen Anlage übereinstimmen. Zu diesen Betriebsparametern zählen insbesondere Temperatur, Kontaktzeit, Katalysatorbelastung (Weight Hourly Space Velocity - WHSV), Katalysator-zu-Feed-Verhältnis und Druck.

Aus dem Stand der Technik sind unterschiedliche Vorrichtungen zur Untersuchung von heterogen katalysierten Reaktionen mit Feststoffkatalysatoren, wie sie zum Beispiel auch in FCC-Prozessen eingesetzt werden, bekannt. Hierbei ist zu unterscheiden, ob der Katalysator in Form eines Festbetts oder eines fluidisierten Betts eingesetzt wurde. Die Testeinheit mit Festbettkatalysator ist zum Beispiel in der ASTM D-3907 aus dem Jahr 1987 beschrieben. Eine Laboreinheit mit einem fluidisierten Katalysatorbett ist beispielsweise in der US 6,069,012 beschrieben, ein stromabgeführter Strömungsreaktor in der WO-A 2019/020655.

Weitere Vorrichtungen zur Untersuchung von Katalysatoren, insbesondere für FCC-Prozesse, sind in der US-A 2003/0040116 oder der US-B 7,378,059 beschrieben. In der in der US-A 2003/0040116 beschriebenen Vorrichtung ein Reaktionsblock mit einem Satz Reaktionskammern umfasst ist und die Reaktionskammern mit einem Katalysator befüllt werden können. Der Katalysator liegt dabei in Form eines Festbetts vor. Im Unterschied dazu wird in der US-B 7,378,059 beschriebenen Vorrichtung ein Reaktor eingesetzt, der von einem partikelförmigen Katalysator von oben nach unten durchströmt wird. Die hier beschriebene Vorrichtung eignet sich insbesondere zur Untersuchung schnell deaktivierender Katalysatoren.

Um Untersuchungen von Reaktionsgemischen durchführen zu können, werden üblicherweise während der Reaktion Proben genommen. Hierzu ist zum Beispiel aus DE 101 57 664 A1 bekannt, eine Probenziehvorrichtung einzusetzen, die einen Zylinder mit einem darin verschiebbaren Kolben umfasst. Um zu verhindern, dass reaktionsschädliche Gase in den Reaktor eindringen oder Gase aus dem Reaktor entweichen, wird die Vorrichtung mit einem Ventil an den Reaktor angeschlossen, über das der Auslass aus dem Reaktor verschlossen werden kann oder eine Verbindung aus dem Reaktor in die Probenziehvorrichtung oder eine Verbindung aus der Probenziehvorrichtung zu einem Auslass geöffnet werden kann.

Nachteil aller aus dem Stand der Technik bekannten Verfahren ist, dass die Probennahme von Reaktionen zu vergleichbaren Zeitpunkten oder die Untersuchung von Reaktionsparametern über den Reaktionsverlauf, insbesondere von solchen, die nicht kontinuierlich gemessen werden können sondern die Auswertung der Probe über einen bestimmten Zeitraum erfordern, nur schwer möglich ist. auch ist es mit den bekannten Vorrichtungen schwierig, Reihenuntersuchungen durchzuführen und dabei Proben zu vergleichbaren Zeitpunkten zu nehmen. Ein weiterer Nachteil ist, dass übliche im Labor eingesetzte Flüssigkeitsabscheider bei Drücken oberhalb von 1 bar nicht eingesetzt werden können, so dass eine Untersuchung der im Reaktionsprodukt enthaltenen kondensierbaren oder flüssigen Komponenten nur schwer möglich ist.

Aufgabe der vorliegenden Erfindung ist es daher, eine Vorrichtung und ein Verfahren bereitzustellen, die die aus dem Stand der Technik bekannten Nachteile nicht aufweisen.

Diese Aufgabe wird gelöst durch eine Vorrichtung zur Untersuchung von heterogen katalysierten Reaktionen, umfassend mindestens einen Reaktor, durch den ein partikelförmiger Katalysator strömt, und mindestens eine Eduktzufuhr, wobei stromab jedes Reaktors eine Abscheidevorrichtung zur Abtrennung des partikelförmigen Katalysators von einem kondensierbare Gase enthaltenden Reaktionsprodukt angeordnet ist und stromab der Abscheidevorrichtung einen Flüssigkeitsabscheider zur Abtrennung von flüssigen Bestandteilen aus dem Reaktionsprodukt, dadurch gekennzeichnet, dass der Flüssigkeitsabscheider ein metallisches Rohr und einen Umlenkkörper aufweist, wobei das metallische Rohr an seinen Enden geschlossen ist und der Umlenkkörper im metallischen Rohr aufgenommen ist, und das metallische Rohr an einem ersten Ende einen Seitenzulauf und einen Gasauslass an einem zweiten Ende aufweist und der Gasauslass mit mindestens einem Probengefäß verbunden ist, wobei der Reaktor ein Rohrreaktor ist, den der partikelförmige Katalysator von oben nach unten durchströmen kann, die Abscheidevorrichtung mit einer Katalysatorentnahmevorrichtung verbunden ist, über die Katalysator in Probengefäße, die auf einem Karussell angeordnet sind, transferiert werden kann und die Abscheidevorrichtung weiterhin mit einem Verteilerkanal verbunden ist, mit dem mehrere Flüssigkeitsabscheider verbunden sind und wobei jeweils ein Flüssigkeitsabscheider mit einem Probengefäß zur Aufnahme von gasförmigem Reaktionsprodukt verbunden ist und/oder wobei mehrere Flüssigkeitsabscheider über einen Verteilerkanal mit mehreren Probengefäßen zur Aufnahme des gasförmigen Reaktionsprodukts verbunden sind.

Weiterhin wird die Aufgabe gelöst durch ein Verfahren zur Untersuchung heterogen katalysierter Reaktionen, umfassend:
(a) Zugabe von flüssigen und/oder gasförmigen Edukten und eines partikelförmigen Katalysators in jeden der Reaktoren der Vorrichtung zur Untersuchung heterogen katalysierter Reaktionen;
(b) Umsetzen der flüssigen und/oder gasförmigen Edukte in Gegenwart des partikelförmigen Katalysators in jedem Reaktor, wobei ein kondensierbare und/oder flüssige Komponenten enthaltendes gasförmiges Reaktionsprodukt entsteht;
(c) Abtrennen des partikelförmigen Katalysators von dem kondensierbare und/oder flüssige Komponenten enthaltenden gasförmigen Reaktionsprodukt;
(d) gegebenenfalls Kühlen des kondensierbare und/oder flüssige Komponenten enthaltenden gasförmigen Reaktionsprodukts, um die kondensierbaren Komponenten zu kondensieren;
(e) Abtrennen der kondensierten und/oder flüssigen Komponenten in dem Flüssigkeitsabscheider;
(f) Entnehmen einer Probe des gasförmigen Reaktionsprodukts nach Abtrennung der kondensierten und/oder flüssigen Komponenten zu einem vorgegebenen Zeitpunkt in das Probengefäß, wobei aus dem gasförmigen Reaktionsprodukt jedes Reaktors zum vorgegebenen Zeitpunkt eine Probe entnommen wird oder gepulste Entnahme von Proben, wobei mit jedem Entnahmepuls eine Probe des gasförmigen Reaktionsprodukts in ein neues Probengefäß eingebracht wird;
(g) Untersuchung der in den Probengefäßen enthaltenen Proben;
(h) gegebenenfalls Wiegen der Flüssigkeitsabscheider zur Bestimmung der Masse der abgetrennten kondensierbaren und/oder flüssigen Komponenten.

Durch die Verbindung eines Reaktors mit mindestens zwei Probengefäßen ist es möglich, unabhängig vom Zeitpunkt der Probennahme Untersuchungen durchzuführen. Insbesondere ist es möglich, zu definierten Zeitpunkten Proben zu nehmen und an diesen auch Untersuchungen durchzuführen, die länger dauern als die Abstände zwischen zwei Zeitpunkten zur Probennahme. Bei einer Vorrichtung mit mehr als einem Reaktor, bei der jeder Reaktor mit mindestens einem Probengefäß verbunden ist, ist es möglich, mit entsprechend schaltbaren Ventilen aus jedem Reaktor zum gleichen Zeitpunkt eine Probe zu entnehmen. Hierbei kann in allen Reaktoren die gleiche Reaktion durchgeführt werden, um so auch Schwankungen im Reaktionsverlauf zu erfassen oder alternativ kann in jedem Reaktor eine Reaktion mit veränderten Parametern durchgeführt werden, um auf diese Weise den Einfluss von Änderungen von Reaktionsparametern auf die Reaktion zu untersuchen. Auch hierzu ist es notwendig, dass die Probennahme jeweils zum gleichen Zeitpunkt erfolgt. Wenn zusätzlich auch die Zeitabhängigkeit untersucht werden soll, werden auch bei der Vorrichtung mit mehreren Reaktoren jeweils mindestens zwei Probengefäße mit jedem Reaktor verbunden. Durch die Verbindung jedes Reaktors mit mindestens zwei Probengefäßen, bevorzugt mit mindestens vier Probengefäßen, mehr bevorzugt mit mindestens acht Probengefäßen und insbesondere mit mindestens sechzehn Probengefäßen ist es möglich, über den Verlauf der Reaktion zu vorgegebenen Zeitpunkten jeweils eine Probe zu entnehmen und diese unabhängig vom Reaktionsverlauf zu untersuchen. Die maximale Anzahl an Probengefäßen wird durch den zur Verfügung stehenden Bauraum und die Größe der Probengefäße vorgegeben. Vorzugsweise liegt die maximale Anzahl an Probengefäßen für jeden Reaktor bei 100, insbesondere bei 50. Wenn eine größere Anzahl an Proben genommen werden soll als Probengefäße mit dem Reaktor verbunden sind, ist es weiterhin möglich, die Probengefäße so mit dem Reaktor zu verbinden, dass diese während der Durchführung der Reaktion nach Probenentnahme entnommen und durch ein neues, leeres Probengefäß ersetzt werden können. Bei fest installierten Probengefäßen ist es alternativ möglich, diese mit einem geeigneten Ventil mit dem Reaktor zu verbinden, das erlaubt, nach der Probennahme die in dem Probengefäß enthaltene Probe in ein weiteres Gefäß zu transferieren. Hierbei ist es für Untersuchungen, die jeweils Ergebnisse für einen bestimmten Zeitpunkt der Reaktion liefern sollen, möglich, die Proben einzeln in kleine Untersuchungsgefäße zu transferieren. Soll ein Mittelwert über die Reaktionsdauer erfasst werden, können die einzelnen erfassten Proben auch in einem größeren Behälter gesammelt und in diesem gemischt werden, wobei dann die Untersuchungen an der so gesammelten Mischung durchgeführt werden.

Wenn für die Verbindung der Probengefäße mit dem Reaktor steuerbare Ventile eingesetzt werden, ist es möglich, die Proben automatisiert zu entnehmen. Wenn die steuerbaren Ventile über eine geeignete Schnittstelle verfügen, ist es weiterhin möglich, die Probennahme online über geeignete Eingabegeräte wie an die Schnittstelle angeschlossene Prozessleitsysteme, Computer, Smartphones oder Tablet-Computer zu steuern.

Durch den Aufbau des Flüssigkeitsabscheiders mit einem metallischen Rohr ist es möglich, diesen auch bei hohen Drücken und Temperaturen einzusetzen. Zudem kann die Abtrennung von flüssigen Komponenten in Laboreinheiten bei wesentlich höheren Drücken erfolgen als bei der Verwendung von üblichem Laborgeräten, die in der Regel aus Glas gefertigt sind.

Am Umlenkkörper im Inneren des metallischen Rohrs lagern sich Flüssigkeitströpfchen, die in dem gasförmigen Reaktionsprodukt enthalten sind, ab und formen größere Tropfen, die am Umlenkkörper abfließen oder sich vom Umlenkkörper lösen und in einen Sammelraum für flüssige Komponenten fallen, aus dem die flüssigen Komponenten aus dem Flüssigkeitsabscheider entnommen werden können.

Die Konstruktion des Flüssigkeitsabscheiders mit einem metallischen Rohr und einem Umlenkkörper, das innerhalb des metallischen Rohrs positioniert ist, wird eine Wirkung des Flüssigkeitsabscheiders erzielt, die der von bekannten Laborgeräten aus Glas entspricht, die jedoch nicht auf gleiche Weise aus einem Metall hergestellt werden können.

Um den Katalysator kontinuierlich dem Reaktor zuführen zu können, ist es bevorzugt, wenn ein Katalysatorvorlagebehälter umfasst ist, aus dem der partikelförmige Katalysator dem Reaktor über eine Dosierstelle zugeführt wird. Der Einsatz eines Katalysatorvorlagebehälters hat den weiteren Vorteil, dass der Katalysator vortemperiert werden kann und so zum Beispiel dem Reaktor mit einer konstanten Temperatur zugeführt werden kann. Auch ist es möglich, den Katalysator im Vorlagebehälter zu regenerieren, wobei hierzu gegebenenfalls geeignete Regenerationssubstanzen zuzuführen sind. Um den partikelförmigen Katalysator im Katalysatorvorlagebehälter gleichmäßig zu temperieren und gegebenenfalls gleichmäßig zu regenerieren ist es weiterhin möglich, Mittel zur Durchmischung des partikelförmigen Katalysators einzusetzen. Geeignete Mittel zur Durchmischung sind zum Beispiel Rührer oder auch ein Gas, mit dem der Katalysator durchgewirbelt wird. Das hierzu verwendete Gas kann inert sein oder ein Gas, das die Regeneration des Katalysators unterstützt. Geeignete Inertgase sind zum Beispiel Stickstoff, Kohlendioxid oder Edelgase. Geeignete Gase, die die Regeneration des Katalysators unterstützen sind von der Art des eingesetzten Katalysators abhängig und dem Fachmann bekannt. Zusätzlich kann der Katalysatorvorlagebehälter mit einer Vibrationseinrichtung verbunden werden. Durch die Vibration bildet der Katalysator eine gleichmäßige Oberfläche aus und eventuell vorhandene Klumpen, die den Auslass blockieren könnten werden zerrieben. Dies hat den weiteren Vorteil, dass der partikelförmige Katalysator gleichmäßig aus dem Katalysatorvorlagebehälter entnommen werden kann und kein Katalysator an den Wandungen des Katalysatorvorlagebehälters haften bleibt.

Mittel zur Temperierung des Katalysators können alle geeigneten Mittel sein, mit denen der Katalysator geheizt oder gekühlt werden kann, zum Beispiel ein mit einem Temperiermedium durchströmter Doppelmantel oder ein durchströmtes Rohr im Inneren des Katalysatorvorlagebehälters. Insbesondere für die Untersuchung von Reaktionen, die bei hohen Temperaturen durchgeführt werden, wird der Katalysator im Katalysatorvorlagebehälter vorzugsweise vorgeheizt werden. Hierzu kann jedes beliebige Heizelement eingesetzt werden, beispielsweise ein mit einem Heizmedium durchströmter Doppelmantel oder eine mit einem Heizmedium durchströmte Rohrleitung im Inneren des Katalysatorvorlagebehälters. Weitere geeignete Heizelemente sind zum Beispiel elektrische Heizelemente, Induktionsheizelemente oder ein heißes Gas, mit dem der partikelförmige Katalysator durchströmt wird.

Um den partikelförmigen Katalysator dem Katalysatorvorlagebehälter entnehmen zu können, ist es bevorzugt, das untere Ende des Katalysatorvorlagebehälters trichterförmig auszugestalten. Das Ende des Trichters ist mit einer Auslassleitung verbunden, die nur einen geringen Durchmesser aufweist, wobei der Durchmesser der Auslassleitung vorzugsweise kleiner als 2 mm ist. Die Auslassleitung ist vorzugsweise mit einer Gasleitung verbunden, durch die Permanentgase in die Auslassleitung geleitet wird. Durch die permanente Zufuhr von Gas wird der Katalysator in der Auslassleitung im fluidisierten Zustand gehalten und so Verstopfungen vermieden. Vom Verbindungspunkt der Auslassleitung und der Gasleitung führt eine gemeinsame Leitung zum Eingang des Reaktors. Um die Katalysatorzufuhr in den Reaktor zu starten und zu beenden, ist in der gemeinsamen Leitung vorzugsweise ein Ventil angeordnet. Wenn Reaktionen bei hohen Temperaturen untersucht werden sollen, handelt es sich bei dem Ventil vorzugsweise um ein Hochtemperaturventil. Der Durchmesser der Auslassleitung hat einen Einfluss auf die Dosierrate an Katalysator. Weitere Parameter, durch die die Katalysatordosierrate beeinflusst wird, sind durch die Höhe des Differenzdrucks, durch die Gasströmungsgeschwindigkeit und durch die Katalysatorbeschaffenheit gegeben. Wenn der Katalysatorvorlagebehälter trichterförmig ausgestaltet ist, hat der Einsatz der Vibrationsvorrichtung den weiteren Vorteil, dass verhindert wird, dass der partikelförmige Katalysator über der Auslassöffnung aus dem Katalysatorvorlagebehälter schneller in die Auslassleitung abfließt und sich so eine kegelförmige Mulde bildet. Diese kann zu einem unkontrollierten Gasdurchbruch führen, der eine gleichmäßige Katalysatordosierung verhindert.

Alternativ zu der trichterförmigen Gestaltung des Katalysatorvorlagebehälters ist es für einen kontrollierten Transfer des partikelförmigen Katalysators aus dem Katalysatorvorlagebehälter in den Reaktor möglich, beispielsweise eine Förderschnecke, die den partikelförmigen Katalysator in kontrollierter Weise aus dem Katalysatorvorlagebehälter in den Reaktor befördert, einzusetzen. Von Bedeutung ist, dass der Katalysatorvorlagebehälter mit einer ausreichenden Menge an Katalysator befüllt wird, so dass der Behälter während der Durchführung des erfindungsgemäßen Verfahrens nicht völlig entleert wird.

Um Reaktionen untersuchen zu können, die bei bestimmten Drücken durchgeführt werden sollen, insbesondere Reaktionen, die bei hohem Druck durchgeführt werden, beispielsweise katalytische Crack-Reaktionen wie Fluid Catalytic Cracking (FCC), ist es bevorzugt, wenn in einer Auslassleitung aus der Abscheidevorrichtung, durch die das gasförmige Reaktionsprodukt nach Abtrennung des partikelförmigen Katalysators strömt, ein kontinuierlich wirkendes Ventil aufweist, das über einen Regler mit einem Drucksensor verbunden ist, wobei das kontinuierlich wirkende Ventil und der Drucksensor mit einem Regler einen Druckregelkreis bildet.

Vorzugsweise weisen, wie in der WO-A 2019/020655 beschrieben, der Katalysatorvorlagebehälter und die Abscheidevorrichtung eine Wirkverbindung auf, die mit einem Differenzdruckregler ausgestattet ist, der ein kontinuierlich wirkendes Ventil ansteuert, wobei die Ausgangsseite des kontinuierlich wirkenden Ventils entweder eine Verbindungsleitung zur Abscheidevorrichtung oder eine Abluftleitung aufweist. Wenn die Ausgangsseite des kontinuierlich wirkenden Ventils eine Abluftleitung aufweist, umfasst die Abscheidevorrichtung eine Gaszufuhr und der Teil der Wirkverbindung von der Abscheidevorrichtung zum Differenzdruckregler ist mit dem Drucksensor des Differenzdruckreglers verbunden.

Der Differenzdruckregler ermöglicht es, ein definiertes Druckgefälle zwischen dem Katalysatorvorlagebehälter und dem Reaktor einzustellen. In dieser bevorzugten Ausführungsform dient das Druckgefälle als Triebkraft, um den Katalysator aus dem Katalysatorvorlagebehälter in den Reaktor zu überführen. Der Druckregelkreis umfasst ein kontinuierlich wirkendes Ventil mit einem Eingang und einem Ausgang, wobei der Eingang mit dem Katalysatorvorlagebehälter in Wirkverbindung steht und der Ausgang mit der Abscheidevorrichtung oder dessen Gaszufuhr. Alternativ ist es auch möglich, dass der Ausgang des kontinuierlich wirkenden Ventils des Differenzdruckreglers mit der Abluftleitung in Wirkverbindung steht. Das kontinuierlich wirkende Ventil wird von einem Differenzdruckregler angesteuert, wobei der Differenzdruckregler seine Istwerte aus dem Innenbereich des Katalysatorvorlagebehälters und aus einem Bereich bezieht, der in direkter Verbindung mit dem Reaktor steht.

In der Ausgangsleitung aus der Abscheidevorrichtung befindet sich vorzugsweise ein weiterer Druckregler, dessen kontinuierlich wirkendes Ventil von einem Regler angesteuert wird. Vorzugsweise wird der Istwert des Regelkreises in der Leitung zwischen der Abscheidevorrichtung und dem kontinuierlich wirkenden Ventil erfasst.

Die Druckregelung ist dabei vorzugsweise jeweils als Hauptstromregelung ausgestaltet.

Alternativ ist es auch möglich, in der Ausgangsleitung aus der Abscheidevorrichtung eine Nebenstromregelung vorzusehen, wobei in diesem Fall der Istwert aus der Leitung zwischen dem kontinuierlich wirkenden Ventil und dem Probengefäß erfasst wird und eine Gaszufuhrleitung stromab der Erfassungsstelle des Istwertes in die Leitung mündet.

Der Begriff Regelkreis umfasst auch Überströmventil oder Membranüberströmventil.

Einzelne Elemente der Vorrichtung können mit Überdruckventilen ausgestattet sein. Falls innerhalb der Vorrichtung ein Überdruck auftritt, kann durch die Überdruckventile eine Schädigung der Vorrichtung verhindert werden. Bevorzugt sind der Katalysatorvorlagebehälter und die Abscheidevorrichtung mit einem Überdruckventil versehen.

Vorzugsweise weist das kontinuierlich wirkende Ventil im Druckregler eine Wirkverbindung zu einem Drucksensor auf, wobei diese Wirkverbindung zum Eingangsbereich des Reaktors, zum Ausgangsbereich des Reaktors oder zur Ausgangsleitung zur Produktstromableitung führt. Weiterhin ist es bevorzugt, dass das kontinuierlich wirkende Ventil im Druckregler mit der Ausgangsleitung zur Produktstromableitung in Wirkverbindung steht, weiter vorzugsweise ist das kontinuierliche wirkende Ventil Bestandteil des Druckreglers.

Um einen Regler zu bilden, muss das kontinuierlich wirkende Ventil, das in der Ausgangsleitung angeordnet ist, über einen Regler mit einem Drucksensor verbunden sein. Der Druck-Istwert kann dabei aus dem Bereich der Gaszufuhr zur Abscheidevorrichtung, aus dem Bereich des Reaktoreingangs oder aus dem Bereich der Ausgangsleitung, die der Abscheidevorrichtung nachgeschaltet ist, bezogen werden. Alternativ ist es auch möglich, dass beispielsweise eine Wirkverbindung den Druck-Istwert aus dem Leitungsbereich bezieht, der zwischen dem Ausgang des Reaktors und der Abscheidevorrichtung liegt.

Um den Katalysator wiederverwenden zu können ist es möglich, dass ein Katalysatorumlauf umfasst ist, so dass der in der Abscheidevorrichtung abgetrennte Katalysator wieder zu der Dosierstelle am Einlass in den Reaktor zugeführt werden kann. Hierbei ist es besonders vorteilhaft, wenn der Katalysatorvorlagebehälter im Katalysatorumlauf angeordnet ist. Alternativ ist es jedoch auch möglich, den Katalysator zunächst aus der Abscheidevorrichtung zu entnehmen.

Der entnommene Katalysator kann dann gegebenenfalls regeneriert werden und in den Katalysatorvorlagebehälter zurückgegeben werden.

Wenn die Vorrichtung mehr als einen Reaktor umfasst, ist es möglich, jeden Reaktor mit einem separaten Katalysatorvorlagebehälter zu verbinden oder einen gemeinsamen Katalysatorvorlagebehälter für alle Reaktoren vorzusehen. Bevorzugt ist es jedoch, jeden Reaktor mit einem Katalysatorvorlagebehälter zu verbinden. Da bei Einsatz mehrerer Reaktoren in der Regel unterschiedliche Einflussgrößen untersucht werden sollen, ist es weiterhin bevorzugt, jeden Reaktor mit einer eigenen Druckregelung zu versehen.

Der Reaktor, der in der erfindungsgemäßen Vorrichtung zur Untersuchung heterogen katalysierter Reaktionen eingesetzt wird, ist ein Rohrreaktor. Dieser ist vorzugsweise mit einem Winkel im Bereich von 45 bis 90° zur Horizontalen ausgerichtet, wobei der partikelförmige Katalysator den Rohrreaktor von oben nach unten oder von unten nach oben durchströmen kann. Mehr bevorzugt ist der Rohrreaktor in einem Winkel von 30 bis 90° zur Horizontalen, weiter bevorzugt mit einem Winkel im Bereich von 80 bis 90° zur Horizontalen und insbesondere mit einem Winkel im Bereich von 85 bis 90° zur Horizontalen ausgerichtet. Ganz besonders bevorzugt ist der Reaktor vertikal, das heißt mit einem Winkel von 90° innerhalb der Messgenauigkeit zur Horizontalen ausgerichtet.

Der als Rohrreaktor ausgebildete Reaktor weist vorzugsweise eine Länge im Bereich von 0,3 bis 3 m, weiter vorzugsweise von 0,5 bis 2,5 m auf. Der Durchmesser des Reaktors liegt vorzugsweise im Bereich von 3 bis 100 mm, weiter vorzugsweise im Bereich von 5 bis 50 mm und insbesondere im Bereich von 6 bis 20 mm. Neben einer zylindrischen Ausgestaltung des Rohrreaktors ist auch eine schraubenförmig absteigend gewundene Ausbildung des Reaktionsrohrs möglich.

Neben einer Ausgestaltung derart, dass der Katalysator den Reaktor von oben nach unten durchströmt ist es in einer nicht erfindungsgemäßen Ausführungsform auch möglich, dass der Katalysator den Reaktor von unten nach oben durchströmt. In diesem Fall ist es besonders vorteilhaft, wenn der Katalysatorbehälter über einen Rohrbogen mit einem Radius von 25 bis 75 mm mit der Dosierstelle verbunden ist. Im Rohrbogen wird der Katalysator dabei vorzugsweise um mindestens 90° umgelenkt, besonders bevorzugt um 180°, wobei der partikelförmige Katalysator nach unten aus dem Katalysatorvorlagebehälter ausströmt und durch den Rohrbogen so umgelenkt wird, dass dieser von unten parallel zur Rohrachse des als Rohrreaktor ausgeführten Reaktors in den Reaktor einströmen kann.

Der für die Lagerung des partikelförmigen Katalysators eingesetzte Katalysatorvorlagebehälter weist vorzugsweise ein Fassungsvermögen an Katalysator im Bereich von 0,1 bis 5 Liter auf, weiter vorzugsweise ist das Fassungsvermögen an Katalysator im Bereich von 0,2 bis 3,5 Liter. Im Fall von FCC-Katalysatoren liegt die Schüttdichte in der Regel im Bereich von ca. 0,9 g/cm³. Daher können vom Katalysatorvorlagebehälter - je nach der Auslegung des Behälters - etwa 0,1 bis 4,5 kg Katalysator aufgenommen werden. In der Regel wird die Untersuchung der heterogen katalysierten Reaktion so durchgeführt, dass die Dauer der Katalysatorzuführung im Bereich von etwa 30 bis 300 Sekunden liegt, wobei die Katalysatordosierrate vorzugsweise im Bereich von 30 bis 150 g/min liegt.

Das Verfahren zur Untersuchung heterogen katalysierter Reaktionen wird vorzugsweise so durchgeführt, dass unter der Maßgabe, dass das Verfahren in einer Anordnung mit abwärts transportiertem Katalysator durchgeführt wird, das Massenverhältnis von Katalysator zu flüssigem oder gasförmigem Edukt im Bereich von 1 bis 100 liegt. Weiter bevorzugt liegt das Verhältnis von Katalysator zu Edukt im Bereich von 2 bis 30 und insbesondere im Bereich von 3 bis 15. Unter der Maßgabe, dass das Verfahren in einer Anordnung mit aufwärts transportiertem Katalysator durchgeführt wird, liegt das Massenverhältnis von Katalysator zu Edukt vorzugsweise im Bereich von 1 bis 20. Bevorzugt ist es, dass jeweils mit einer Befüllung des Katalysatorvorlagebehälters und einer Befüllung eines Vorlagebehälters für das flüssige Edukt eine Serie von Versuchen vorgenommen werden kann, die alle gemäß dem erfindungsgemäßen Verfahren durchgeführt werden. Die Dosierung des flüssigen oder gasförmigen Edukts erfolgt dabei vorzugsweise über eine Programmsteuerung, wobei gleichzeitig die Menge an zudosiertem Edukt erfasst wird. Die Menge an zugeführtem partikelförmigem Katalysator lässt sich mit einer Kalibrierung der Dosiervorrichtung für den Katalysator oder durch Wiegen des in der Abscheidevorrichtung abgetrennten Katalysators bestimmen.

In einer bevorzugten Ausführungsform ist jeder Reaktor mit mehr als einem Katalysatorvorlagebehälter ausgestattet. Dies hat den Vorteil, dass die einzelnen Katalysatorvorlagebehälter während des Betriebs der Vorrichtung mit Katalysator befüllt werden können. Hierbei werden die Katalysatorvorlagebehälter mit Katalysator befüllt, die gerade nicht für die Dosierung eingesetzt werden. Der Einsatz von mehreren Katalysatorvorlagebehältern zu jedem Reaktor hat den weiteren Vorteil, dass dem Reaktor eine größere Menge an Katalysator zugeführt werden kann, da die Zugabe des Katalysators gleichzeitig aus zwei oder mehr Katalysatorvorlagebehältern vorgenommen werden kann.

Die erfindungsgemäße Vorrichtung kann insbesondere zur Untersuchung von heterogen katalysierten Reaktionen eingesetzt werden, die bei einer Temperatur im Bereich von 50 bis 1200°C und insbesondere bei Temperaturen im Bereich von 250 bis 800 °C betrieben werden. Wenn die zu untersuchenden Reaktionen katalysierte Crack-Reaktionen, zum Beispiel FCC-Reaktionen, sind, wird die Reaktion in der Regel bei Temperaturen zwischen 490 und 560°C durchgeführt.

Insbesondere bei endothermen Reaktionen wie katalysierten Crack-Reaktionen, ist es notwendig, die für die Reaktion erforderliche Energie zuzuführen. Dies erfolgt vorzugsweise über die Beheizung des Katalysators im Katalysatorvorlagebehälter. Zur weiteren Wärmezufuhr ist es möglich, den Katalysatorvorlagebehälter über eine Vorheizstrecke mit dem Reaktor zu verbinden, wobei in der Vorheizstrecke weiter Wärme zugeführt wird. Vorzugsweise wird der Katalysator im Katalysatorvorlagebehälter auf eine Temperatur im Bereich von 500 bis 800°C, insbesondere im Bereich von 600 bis 700°C vorgeheizt und in der Vorheizstrecke weiter auf eine Temperatur bis zu 1200°C, vorzugsweise bis zu 1100°C geheizt.

Um Reaktionen bei diesen Temperaturen durchführen zu können, ist es bevorzugt, wenn insbesondere der Katalysatorvorlagebehälter einschließlich der Katalysatorzuführung in den Reaktor, der Reaktor, die Eduktzufuhr, die Abscheidevorrichtung, der Flüssigkeitsabscheider, die Probengefäße sowie sämtliche Leitungen, die Katalysator, flüssiges Edukt und gasförmiges Produkt transportieren, temperiert werden können. Bei der Durchführung von exothermen Reaktionen ist es vorteilhaft, den Reaktor kühlen zu können, um bei der Reaktion freiwerdende Wärme abtransportieren zu können. Für die Untersuchung von endothermen Reaktionen ist eine Wärmezufuhr und damit Beheizung erforderlich. Zur Temperierung kann jedes, dem Fachmann bekannte Mittel eingesetzt werden. So können die einzelnen Elemente der Vorrichtung zum Beispiel mit einem Doppelmantel versehen sein, der von einem Temperiermedium durchströmt wird. Insbesondere für die Beheizung ist weiterhin eine elektrische Beheizung oder eine induktive Beheizung möglich.

Der Reaktor ist besonders bevorzugt mit mehreren Temperierzonen versehen, die separat temperiert werden können.

Reaktionen, die mit der erfindungsgemäßen Vorrichtung und dem erfindungsgemäßen Verfahren untersucht werden können, sind insbesondere solche, bei denen gasförmige und/oder flüssige Edukte eingesetzt werden. Besonders bevorzugt entsteht bei der Reaktion ein gasförmiges Reaktionsprodukt, das jedoch noch flüssige oder kondensierbare Komponenten enthalten kann.

Besonders bevorzugt werden das Verfahren und die Vorrichtung zur Untersuchung von Reaktionen eingesetzt, bei denen Edukte eingesetzt werden, die in einem Temperaturbereich von 25 bis 250°C als Flüssigkeiten vorliegen. Besonders bevorzugt sind die eingesetzten flüssigen Edukte ausgewählt aus der Gruppe der Öle, Schweröle, VGO, Rückstandsöle, Bioöle, Pyrolyseöle, Torföl, Benzin, Diesel und Naphtha. Gemäß weiterer Ausführungsformen werden gasförmige Edukte oder Mischungen aus Gasen und Flüssigkeiten eingesetzt.

Neben den vorstehend genannten katalytischen Crack-Reaktionen können die erfindungsgemäße Vorrichtung und das erfindungsgemäße Verfahren auch zur Untersuchung der Umsetzung von gasförmigen Edukten zu chemischen Wertprodukten eingesetzt werden, zum Beispiel die Umsetzung von Ethan zu Ethen, die Umsetzung von Propan zu Propen, die Umsetzung von Butan zu Buten oder die Umsetzung von Synthesegas zu Methanol.

Weiterhin eignen sich die Vorrichtung und das Verfahren auch zur Untersuchung von Dampfreformierung, Untersuchungen unter Bedingungen von Steam Cracking von Kohlenwasserstoffen und insbesondere schweren Einsatzstoffen (sogenannten Heavy Feeds), von Einsatzstoffen zu Wertprodukten (den sogenannten Crude-to-Chemicals-Verfahren), von FCC-Verfahren unter extrem harschen Prozessbedingungen (dem sogenannten High-severity FCC), der Simulation von technisch großtechnischen abwärts transportierenden Fließbettprozessen, von unkonventionellen Einsatzstoffen (Biomasse, Algenschlamm, zucker- und/oder zellulosehaltigen Materialien, Lignin), Naphtha-Einsatzstoffen und Rückstandsölen sowie Einsatzstoffen, die Beimischungen von kohlenwasserstoffhaltigen Feststoffen umfassen, Untersuchungen zur Aufarbeitung von geschmolzenen Polymermaterialien (beispielsweise Polyethylen), zur Pyrolyse von Kunststoffen nach dem sogenannten ChemCycling-Prozess.

Mit der erfindungsgemäßen Vorrichtung und dem erfindungsgemäßen Verfahren können auch Untersuchungen bei Temperaturen, die oberhalb von 800 °C liegen, vorzugsweise oberhalb von 900 °C, weiter vorzugsweise oberhalb von 1000 °C, durchgeführt werden. Bei der Durchführung der Verfahren im hohen Temperaturbereich, wie beispielsweise bei Temperaturen oberhalb von 900 °C ist es möglich, dass als pulverförmiger Katalysator ein pulverförmiger Wärmeträger eingesetzt wird, der beispielsweise in der Form von Quarzpartikeln, oder Aluminiumoxidpartikeln vorliegt. Die Funktion des pulverförmigen Wärmeträgers besteht darin, die thermische Energie in den Reaktor einzutragen, der für die Durchführung des Verfahrens erforderlich ist.

Das Verfahren kann eine Programmsteuerung zur Steuerung der Vorrichtung und/oder ein Auswertungsprogramm zu Analyse der Messdaten umfassen. Vorzugsweise wird die Datenauswertung zumindest teilweise automatisiert vorgenommen, weiter vorzugsweise erfolgt die Datenevaluierung vollautomatisch und ist in das Programm zu Auswertung integriert.

Als Analysengeräte werden vorzugsweise gaschromatographische Analysenmethoden verwendet. Mittels der gaschromatographischen Analysenmethoden ist auch eine detaillierte Analyse von PIANO möglich, einschließlich der Bestimmung von RON der Benzinfraktion oder leichteren Fraktionen Darüber hinaus oder anstelle von gaschromatographischen Analyseeinheiten kann die Vorrichtung und das Verfahren auch HPLC-Analysengeräte umfassen.

Das erfindungsgemäße Verfahren kann sowohl zur Untersuchung von frischen als auch zur Untersuchung deaktivierten Katalysatoren eingesetzt werden. Vorzugsweise umfasst die Programmsteuerung auch eine Datenbank, in der sämtliche Prozessparameter des Verfahrens gespeichert werden. Zusätzlich werden in der Datenbank auch die Daten der Analysen gespeichert, so dass die einzelnen Prozessparameter mit den Analysedaten in Beziehung gesetzt werden können. Vorzugsweise unterstützt die Datenbank die Auswertung der Analysenergebnisse mittels Algorithmen, die eine Mustererkennung zulassen. Die Daten zu Analysenergebnissen und Prozessparametern werden in einer Weise abgelegt, dass diese als Vergleichsdaten zur Verfügung gestellt werden.

Das bei der Reaktion entstehende Reaktionsprodukt kann neben gasförmigen Komponenten auch flüssige Komponenten enthalten oder Edukt, das nicht bei der Reaktion umgesetzt wurde. Für die Untersuchung des Reaktionsprodukts ist es bevorzugt, die im Reaktionsprodukt enthaltenen Komponenten zu separieren. Um flüssige Komponenten oder kondensierbare Komponenten abzutrennen, wird der Flüssigkeitsabscheider eingesetzt. Insbesondere für die Abtrennung von kondensierbaren Komponenten ist es dabei bevorzugt, das gasförmige Reaktionsprodukt vor dem Eintritt in den Flüssigkeitsabscheider oder im Flüssigkeitsabscheider abzukühlen, so dass die kondensierbaren Komponenten kondensieren und als Flüssigkeit aus dem gasförmigen Reaktionsprodukt abgetrennt werden können. Bei der Crackung von Ölen bildet sich Koks auf der Oberfläche des Katalysators beziehungsweise wird Koks abgeschieden. Je schwerer das Einsatzöl ist, desto höher ist die Tendenz zur Koksbildung. Zur Regenerierung wird der Katalysator mit einem sauerstoffhaltigen Gasstrom in Kontakt gebracht. Das Abbrennen des Koks, das nach dem Abstrippen der Kohlenwasserstoffe vorgenommen kann, kann sowohl innerhalb als auch außerhalb der Abscheidevorrichtung durchgeführt werden.

Um die Störanfälligkeit des vorzugsweise eingesetzten Druckreglers zu minimieren, wird der Druckregler besonders bevorzugt stromab des Flüssigkeitsabscheiders positioniert. Hierdurch wird gewährleistet, dass nur der gasförmige Teil des Reaktionsprodukts durch das Ventil des Druckreglers geführt wird.

Durch den Aufbau des Flüssigkeitsabscheiders mit dem metallischen Rohr und dem Umlenkkörper ist es möglich, auch bei hohen Drücken und hohen Temperaturen die flüssigen oder kondensierbaren Komponenten aus dem gasförmigen Reaktionsprodukt abzutrennen.

Der Umlenkkörper kann aus jedem geeigneten Material gefertigt sein, das gegenüber den Temperaturen beständig ist, die während des Einsatzes des Flüssigkeitsabscheiders auftreten können. Geeignete Materialien für den Umlenkkörper sind zum Beispiel Glas, Keramik oder Metalle, insbesondere Metalle. Besonders bevorzugt ist es, das metallische Rohr und den Umlenkkörper aus dem gleichen Metall zu fertigen.

Geeignete Metalle für das metallische Rohr und, wenn aus Metall gefertigt, für den Umlenkkörper, sind zum Beispiel Gusseisen oder Stahl, insbesondere Edelstahl, Aluminium, Messing oder Kupfer. Edelstahl ist dabei besonders bevorzugt, insbesondere da Armaturen und Rohre aus Edelstahl kommerziell erhältlich sind.

Der Umlenkkörper umfasst vorzugsweise eine zentrale Achse und 1 bis 20 Ablenkplatten, mehr bevorzugt 1 bis 10 Ablenkplatten und insbesondere 3 bis 6 Ablenkplatten.

Zu Abtrennung kondensierbarer Komponenten aus dem gasförmigen Reaktionsprodukt, ist es notwendig zuerst die kondensierbaren Komponenten zu kondensieren und diese anschließend aus dem gasförmigen Reaktionsprodukt abzutrennen. Dies ist insbesondere dann bevorzugt, wenn das gasförmige Reaktionsprodukt Komponenten enthält, die aufgrund der Temperatur des gasförmigen Reaktionsprodukts bei Eintritt in den Flüssigkeitsabscheider noch gasförmig sind. Um diese Komponenten zu kondensieren, ist es bevorzugt, den Flüssigkeitsabscheider zu kühlen. Hierzu kann der Flüssigkeitsabscheider zum Beispiel in ein Kühlbad eingebracht werden. Als Kühlflüssigkeit kann entweder ein Kühlmedium eingesetzt werden, das während des Betriebs des Flüssigkeitsabscheiders flüssig bleibt oder das verdampft, während das gasförmige Reaktionsprodukt abkühlt. Unabhängig davon, ob ein Kühlmedium eingesetzt wird, das flüssig bleibt oder das verdampft, ist es bevorzugt, dass das Kühlmedium durch das Kühlbad fließt und in einem separaten Wärmeübertrager gekühlt werden kann, um die vom gasförmigen Reaktionsprodukt aufgenommene Wärme abzugeben. Insbesondere dann, wenn das Kühlmittel zumindest teilweise verdampft ist es bevorzugt, ein Kühlbad einzusetzen, das gegenüber der Umgebung dicht verschlossen ist, zum Beispiel durch einen Deckel und eine geeignete Dichtung.

Neben dem Einsatz eines Kühlbads ist es auch möglich, den Flüssigkeitsabscheider mit einem Doppelmantel zu versehen, durch den das Kühlmedium strömen kann.

Insbesondere wenn ein Kühlbad eingesetzt wird, ist es bevorzugt, wenn der Flüssigkeitsabscheider eine Zufuhrleitung umfasst, die mit dem Seitenzulauf verbunden ist und das metallische Rohr spiralförmig umläuft. In diesem Fall befindet sich auch die Zufuhrleitung im Kühlbad und das gasförmige Reaktionsprodukt wird bereits in der Zufuhrleitung gekühlt, so dass die kondensierbaren Komponenten beginnen zu kondensieren. Hierdurch wird ein zweiphasiger Strom, der eine gasförmige Phase und flüssige Komponenten enthält, in das metallische Rohr eingeleitet.

Der Umlenkkörper ist vorzugsweise so gestaltet, dass die Achse und die Seite der Ablenkplatten, die zum ersten Ende weisen, einen Winkel im Bereich von 30 bis 90°, mehr bevorzugt im Bereich von 60 bis 90° und insbesondere von 90° einschließen. Durch diesen Winkel wird das vom ersten Ende zum zweiten Ende strömende gasförmige Reaktionsprodukt umgelenkt, wenn er sich den Ablenkplatten nähert und im Reaktionsprodukt enthaltende Tröpfchen treffen aufgrund ihrer Trägheit auf die Ablenkplatten, auf denen sie zu größeren Tropfen agglomerieren. die größeren Tropfen tropfen von den Ablenkplatten und sammeln sich am ersten Ende des Flüssigkeitsabscheiders.

Insbesondere wenn der Umlenkkörper mehr als eine Ablenkplatte aufweist, ist es weiterhin bevorzugt, wenn die Achse und die Seite der Ablenkplatten, die zum zweiten Ende weisen, einen Winkel im Bereich von 90 bis 150° und insbesondere im Bereich von 90 bis 120° einschließen. Ein Winkel von mehr als 90° führt dazu, dass Flüssigkeitströpfchen, die auf die Ablenkplatte fallen nach außen zum Rand der Ablenkplatte fließen und von dort nach unten fallen, so dass sich auch diese am ersten Ende des Flüssigkeitsabscheiders sammeln.

Für eine ausreichende Abtrennung der flüssigen Komponenten aus dem Gasstrom ist es besonders bevorzugt, wenn zwischen jeder Ablenkplatte und der inneren Wandung des metallischen Rohrs ein Spalt ausgebildet wird, der im Bereich von 0,05 bis 1 mm, mehr bevorzugt im Bereich von 0,2 bis 0,8 mm und insbesondere im Bereich von 0,4 bis 0,6 mm liegt. Durch einen solchen Spalt wird das gasförmige Reaktionsprodukt, das um die Ablenkplatten strömt, beschleunigt und nur ein sehr geringer Teil des gasförmigen Reaktionsprodukts strömt direkt aufwärts ohne durch die Ablenkplatten umgelenkt zu werden. Daher wird nur ein sehr geringer Anteil der flüssigen Komponenten mit dem die Ablenkplatten umströmenden gasförmigen Reaktionsprodukt mitgerissen und prallt nicht gegen die Ablenkplatten und lagert sich dort an. Zumindest ein Teil der flüssigen Komponenten, die mit dem gasförmigen Reaktionsprodukt mitgerissen werden und eine Ablenkplatte umströmen, lagern sich an einer nachfolgenden Ablenkplatte an. Aus diesem Grund ermöglicht es ein Umlenkkörper, der mehr als eine Ablenkplatte aufweist, die jeweils so gestaltet ist, dass der Spalt zwischen der Ablenkplatte und der inneren Wandung des metallischen Rohrs in dem oben genannten Bereich ist, die flüssigen Komponenten nahezu vollständig oder sogar vollständig aus dem gasförmigen Reaktionsprodukt zu entfernen.

Um die flüssigen Komponenten nahezu vollständig oder sogar vollständig aus dem gasförmigen Reaktionsprodukt zu entfernen ist es weiterhin notwendig, dass der Abstand zwischen zwei Ablenkplatten ausreichend groß ist, dass das gasförmige Reaktionsprodukt in den gesamten Bereich zwischen den Ablenkplatten strömen kann und dass Toträume, in denen sich Wirbel bilden und somit kein frisches gasförmiges Reaktionsprodukt eintritt, vermieden werden. Derartige Toträume resultieren zum Beispiel aus einer im Wesentlichen laminaren Strömung des gasförmigen Reaktionsprodukts parallel zur Wandung des metallischen Rohrs. Hieraus resultiert ein Mitriss der flüssigen Komponenten, die sich nicht an den Ablenkplatten ablagert. Der erforderliche Abstand zwischen den Ablenkplatten hängt vom Durchmesser des metallischen Rohrs, dem Volumenstrom des gasförmigen Reaktionsprodukts und der Breite des Spalts zwischen den Ablenkplatten und der inneren Wandung des metallischen Rohrs ab. Besonders bevorzugt liegt das Verhältnis des Abstandes zwischen dem äußeren Rand zweier benachbarter Ablenkplatten und dem Innendurchmesser des metallischen Rohrs im Bereich von 15 bis 1, mehr bevorzugt im Bereich von 10 bis 1 und insbesondere im Bereich von 8 bis 2. Durch einen solchen Abstand zwischen zwei Ablenkplatten liegt das Verhältnis der Länge des metallischen Rohrs zum Innendurchmesser des metallischen Rohrs im Bereich von 1 bis 125, bevorzugt im Bereich von 5 bis 50 und insbesondere im Bereich von 5 bis 25.

Das Innenvolumen des Flüssigkeitsabscheiders liegt vorzugsweise im Bereich von 1 bis 1000 ml, mehr bevorzugt im Bereich von 5 bis 500 ml und insbesondere im Bereich von 5 bis 100 ml. Der Flüssigkeitsabscheider kann dabei bei Drücken im Bereich von 0,01 bis 50 bara, mehr bevorzugt im Bereich von 0,1 bis 20 bara und insbesondere im Bereich von 1 bis 15 bara eingesetzt werden. Dies hat den Vorteil, dass der Druck des gasförmigen Reaktionsprodukts nach dem Verlassen des Reaktors und vor Eintritt in den Flüssigkeitsabscheider nicht reduziert werden muss. Aufgrund der eingesetzten Materialien kann der Flüssigkeitsabscheider bei einer Temperatur im Bereich von -50 bis 200°C, mehr bevorzugt im Bereich von -20 bis 180°C und insbesondere im Bereich von -10 bis 100°C eingesetzt werden.

Da nicht ausgeschlossen werden kann, dass ein kleiner Teil der flüssigen Komponenten mit dem gasförmigen Reaktionsprodukt mitgerissen wird und sich nicht an den Ablenkplatten absetzt, umfasst der Flüssigkeitsabscheider vorzugsweise einen Tropfenabscheider, der zwischen dem Umlenkkörper und dem Gasauslass positioniert ist. Der Tropfenabscheider kann jeder beliebige geeignete Tropfenabscheider sein, zum Beispiel ein Filter, der nur gasförmige Komponenten passieren lässt. Besonders bevorzugt ist es jedoch, wenn der Tropfenabscheider aus Fasern gefertigt ist, die ein Faserpad bilden. Besonders bevorzugt wird der Tropfenabscheider aus Glaswolle gefertigt. Neben Gas eignen sich jedoch auch Quarzwolle und synthetische Fasern, die gegenüber den flüssigen und gasförmigen Komponenten im Reaktionsprodukt beständig sind, als Material für das Faserpad. Besonders bevorzugt ist es, einen Tropfenabscheider einzusetzen, wenn verhindert werden soll, dass ein Teil der flüssigen Komponenten an die Umgebung abgegeben wird und/oder das Druckhalteventil vor dem Ansammeln der Flüssigkeit geschützt werden soll oder wenn die Gesamtmenge der Flüssigkeit erfasst werden soll.

Um die Herstellung des Flüssigkeitsabscheiders zu erleichtern und nach Gebrauch eine Reinigung zu ermöglichen, ist es bevorzugt, den Flüssigkeitsabscheider demontierbar zu gestalten.

Hierzu ist es zum Beispiel möglich, dass das metallische Rohr am ersten Ende geschlossen ist. Das zweite Ende ist dann vorzugsweise mit einem abnehmbaren Deckel verschlossen und der Gasauslass ist im abnehmbaren Deckel ausgebildet. Die Flüssigkeit kann dann von dort entweder abgesaugt oder ausgekippt werden.

Alternativ ist es auch möglich, dass das metallische Rohr am zweiten Ende geschlossen ist und am ersten Ende mit einem abnehmbaren Deckel verschlossen wird. In diesem Fall befindet sich der Gasauslass am geschlossenen zweiten Ende und der Deckel, mit dem das erste Ende verschlossen werden kann, umfasst vorzugsweise einen Flüssigkeitsauslass.

Neben den Varianten mit einem geschlossenen Ende und einem mit einem Deckel verschlossenen Ende ist es weiterhin möglich, das erste Ende mit einem Deckel zu verschließen, in dem vorzugsweise ein Flüssigkeitsauslass ausgebildet ist und das zweite Ende mit einem Deckel, in dem sich der Gasauslass befindet.

Der abnehmbare Deckel kann zum Beispiel mittels eines Innengewindes oder eines Außengewindes am metallischen Rohr befestigt sein. Weiterhin ist es auch möglich, den Deckel zum Beispiel mit einem Bajonettverschluss oder mittels einer Klammer oder Klemme am metallischen Rohr zu befestigen. Besonders bevorzugt ist es, den abnehmbaren Deckel mit einem Außengewinde am metallischen Rohr und einem entsprechenden Innengewinde am Deckel auf das metallische Rohr aufzuschrauben.

Um die Verbindung des abnehmbaren Deckels am metallischen Rohr abzudichten, ist es bevorzugt, wenn ein Dichtungselement zwischen dem metallischen Rohr und dem abnehmbaren Deckel positioniert ist. Das Dichtungselement ist besonders bevorzugt ein O-Ring. Durch eine solche dichte Verbindung wird ermöglicht, dass die Apparatur bei Drucken bis zu 50 bara betrieben werden kann.

Neben der lösbaren Verbindung des Deckels am metallischen Rohr ist es auch möglich, den Deckel nicht-lösbar mit dem metallischen Rohr zu verbinden, beispielsweise durch Löten, Schweißen oder Kleben. Da eine solche nicht-lösbare Verbindung jedoch dazu führt, dass der Flüssigkeitsabscheider nicht zum Reinigen geöffnet werden kann, ist dies nur dann sinnvoll, wenn keine Komponenten den Flüssigkeitsabscheider verunreinigen können. Daher ist es bevorzugt, den Flüssigkeitsabscheider mit zumindest einem abnehmbaren Deckel zu versehen.

Der Tropfenabscheider ist vorzugsweise an der Einlassseite des Gasauslasses positioniert und wird mit der Achse des Umlenkkörpers fixiert. Insbesondere wenn das metallische Rohr mit einem abnehmbaren Deckel am zweiten Ende verschlossen wird, ist es bevorzugt, wenn der Tropfenabscheider im abnehmbaren Deckel positioniert wird und mit der Achse des Umlenkkörpers fixiert wird. Durch Positionierung des Tropfenabscheiders im abnehmbaren Deckel und Fixierung mit der Achse des Umlenkkörpers, bleibt der Tropfenabscheider während des Betriebs des Flüssigkeitsabscheiders an seiner Position. Zudem kann der Tropfenabscheider auf einfache Weise durch Öffnen des abnehmbaren Deckels ausgetauscht werden, wenn dieser mit Flüssigkeit vollgesogen ist oder durch Ablagerungen den Gasauslass verstopft. Die Positionierung des Tropfenabscheiders am oberen Ende des metallischen Rohres hat den weiteren Vorteil, dass im Tropfenabscheider abgeschiedene Flüssigkeit zum ersten Ende des Flüssigkeitsabscheiders ablaufen kann.

Insbesondere wenn die zu untersuchenden Reaktionen bei Drücken oberhalb oder unterhalb des Umgebungsdrucks durchgeführt werden, ist es bevorzugt, den Flüssigkeitsauslass mit einem geeigneten Ventil zu verschließen. Wenn der Flüssigkeitsabscheider am ersten Ende mit Flüssigkeit gefüllt ist, kann das Ventil geöffnet werden, um die Flüssigkeit zu entnehmen.

Wenn die Flüssigkeit in das Verfahren zurückgeführt werden soll, kann der Flüssigkeitsauslass mit einer Rückführleitung verbunden werden. In diesem Fall ist es nicht notwendig, ein Ventil am Flüssigkeitsauslass vorzugsehen, da die Flüssigkeit direkt aus dem Flüssigkeitsabscheider ablaufen und in den Prozess zurückgeführt werden kann.

Der Gasauslass kann mit einem Sammler, beispielsweise einer Gasbürette oder einem pneumatischen Zylinder, verbunden sein, um das gasförmige Reaktionsprodukt, aus dem die flüssigen Komponenten entfernt wurden, zu sammeln. Das gasförmige Reaktionsprodukt kann auch einem Durchflussmesser zugeführt werden, um den Volumenstrom zu messen. Unabhängig davon, ob das gasförmige Reaktionsprodukt zunächst in einem Sammler gesammelt wurde oder einen Durchflussmesser durchströmt hat, wird das gasförmige Reaktionsprodukt nach Abtrennung der flüssigen Komponenten zumindest teilweise in mindestens einem Probengefäß gesammelt. Ein Vorteil des Probengefäßes ist, dass das Probengefäß im Gegensatz zu einer Wasserbürette kein flüssiges Medium enthält. Wenn ein flüssiges Medium enthalten ist, kann dies zu Störeffekten führen, wodurch die Genauigkeit des Verfahrens beeinträchtigt wird, zum Beispiel wenn wasserlösliche Gasanteile des gasförmigen Reaktionsprodukts im Wasser verbleiben und dadurch nicht für die Auswertung zugänglich sind.

Der Flüssigkeitsabscheider ermöglicht es, die Menge an flüssigen Komponenten, die aus dem gasförmigen Reaktionsprodukt abgetrennt wurden, zu bestimmen. Hierzu kann zum Beispiel eine Präzisionswaage genutzt werden. Eine solche Präzisionswaage hat üblicherweise eine Messgenauigkeit kleiner als ±100 mg, mehr bevorzugt kleiner ±10 mg und insbesondere ±1 mg. Bevorzugt wird eine Präzisionswaage mit einem Messbereich bis 30 kg oder bis 5 kg eingesetzt. Der Messbereich der Präzisionswaage ist dabei insbesondere abhängig von der Masse des Flüssigkeitsabscheiders. Zur Bestimmung der aus dem gasförmigen Reaktionsprodukt abgetrennten flüssigen Komponenten wird der leere Flüssigkeitsabscheider vor Beginn des Versuchs gewogen. Eine weitere Wiegung erfolgt nach Abschluss des Versuchs. Die Massendifferenz entspricht der Masse der aus dem gasförmigen Reaktionsprodukt abgetrennten flüssigen Komponenten.

Bei bekannter Dichte der flüssigen Komponenten kann dann mit Hilfe der Dichte aus der Masse auch das Volumen der flüssigen Komponenten bestimmt werden.

Wenn mehrere Reaktoren eingesetzt werden, ist es auch hier besonders bevorzugt, wenn jeder Reaktor mit einem Flüssigkeitsabscheider verbunden ist, da nur so eine Analyse der in den einzelnen Reaktoren durchgeführten Reaktionen möglich ist.

Zur Untersuchung des gasförmigen Reaktionsprodukts wird dieses nach Abtrennung der flüssigen und/oder kondensierbaren Komponenten zumindest teilweise von einem Probengefäß aufgenommen. Das im Probengefäß aufgenommene gasförmige Reaktionsprodukt kann dann zum Beispiel hinsichtlich seiner Zusammensetzung analysiert werden.

Um mehrere Untersuchungen parallel durchführen zu können oder nacheinander mehrere Proben nehmen zu können, ist vorzugsweise bei einer Vorrichtung mit einem Reaktor der Reaktor mit mindestens zwei Probengefäßen verbunden und bei einer Vorrichtung mit mehr als einem Reaktor jeder Reaktor mit mindestens einem Probengefäß verbunden.

Um das gasförmige Reaktionsprodukt zu untersuchen, wird nach Abtrennung der kondensierten und/oder flüssigen Komponenten zu einem vorgegebenen Zeitpunkt eine Probe aus dem gasförmigen Reaktionsprodukt in das Probengefäß eingebracht, wobei aus dem gasförmigen Reaktionsprodukt jedes Reaktors zum vorgegebenen Zeitpunkt eine Probe entnommen wird oder Proben gepulst entnommen werden, wobei mit jedem Entnahmepuls eine Probe des gasförmigen Reaktionsprodukts in ein neues Probengefäß eingebracht wird.

Um zu verhindern, dass neben dem zu untersuchenden Reaktionsprodukt, das dem Reaktor entnommen wurde, auch Verunreinigungen im Probengefäß enthalten sind und um die Probennahme zu erleichtern, weist jedes Probengefäß vorzugsweise ein einstellbares Volumen auf. Besonders bevorzugt ist das Volumen vor Beginn der Probennahme null und nimmt während der Probennahme entsprechend der entnommenen Probe zu. Hierbei ist es auch möglich, durch Vergrößerung des Volumens des Probengefäßes einen Unterdruck zu erzeugen, so dass Reaktionsgas aufgrund des erzeugten Unterdrucks in das Probengefäß strömt. Um das Volumen des Probengefäßes einstellen zu können, ist es besonders vorteilhaft, wenn das Probengefäß einen Zylinder mit einem darin verschiebbaren Kolben umfasst. Wenn ein Unterdruck zur Probenentnahme erzeugt werden soll, kann dies auf einfache Weise durch Verschieben des Kolbens erfolgen. Durch die Bewegung des Kolbens wird in dem Zylinder ein Raum erzeugt, in den die Probe einströmen kann. Wenn das Reaktionsgemisch, das als Probe genommen werden soll, einen Druck aufweist, der oberhalb des Umgebungsdrucks liegt, wird der Kolben vorzugsweise durch das einströmende Reaktionsgemisch aus dem Zylinder herausgedrückt, wodurch das Volumen des Probengefäßes vergrößert wird. Alternativ ist es auch möglich, einen Unterdruck an den Kolben anzulegen und so den Kolben aufgrund des angelegten Unterdrucks zu bewegen und den Raum zu erzeugen, in den die Probe einströmen kann. Hierbei ist sowohl eine hydraulische als auch eine pneumatische Steuerung des Kolbens möglich. Bei einer pneumatischen Steuerung kann jedes beliebige Gas genutzt werden, bevorzugt ist Luft. Eine hydraulische Steuerung lässt sich beispielsweise mit einer beliebigen Flüssigkeit, insbesondere Hydrauliköl oder Wasser realisieren.

Der das Probengefäß bildende Zylinder kann jede beliebige Querschnittsform aufweisen. So ist es zum Beispiel möglich, einen Zylinder mit einer kreisförmigen Grundfläche oder einen Zylinder mit einer eckigen Grundfläche, beispielsweise einer dreieckigen, viereckigen, fünfeckigen oder sechseckigen Grundfläche einzusetzen. Auch alle anderen Formen sind möglich. Besonders bevorzugt ist jedoch ein Zylinder mit einer kreisförmigen Grundfläche. Der in dem Zylinder verschiebbare Kolben weist eine Form auf, die der Grundfläche des Zylinders entspricht, so dass der Kolben bei einer Bewegung an der Innenwandung des Zylinders anliegt. Vorzugsweise ist der Kolben zusätzlich von einem Dichtelement, beispielsweise einem O-Ring oder einer Dichtschnur umschlossen, die vom Kolben gegen die Innenwandung des Zylinders gedrückt wird, um zu verhindern, dass als Probe genommenes Reaktionsgemisch durch einen möglichen Spalt zwischen Kolben und Innenwandung des Zylinders austreten kann.

Um mögliche Verunreinigungen aus dem Probengefäß zu entfernen ist es vorteilhaft, das Probengefäß vor Einsatz mit einem gegenüber dem aufzunehmenden Reaktionsgemisch inerten Spülmittel zu spülen. Hierzu können zum Beispiel Gase wie Stickstoff oder Edelgase eingesetzt werden. Das inerte Spülmittel wird vorzugsweise über eine Spülleitung dem Probengefäß zugeführt, wobei die Spülleitung entweder direkt mit dem Probengefäß verbunden ist oder in die Zuleitung in das Probengefäß mündet. Wenn die Spülleitung in die Zuleitung in das Probengefäß mündet, wird vorzugsweise ein Ventil eingesetzt, in das die Zuleitung und die Spülleitung münden und aus dem dann die Zuleitung in das Probengefäß abzweigt. Vorzugsweise wird hier ein steuerbares Ventil eingesetzt, so dass auch das Spülen des Probengefäßes automatisiert werden kann. Wenn das als Probe entnommene Reaktionsgemisch mit einem inerten Medium verdünnt werden soll, ist es vorteilhaft, wenn zum Spülen das gleiche inerte Medium verwendet wird.

Um die entnommene Probe mit einem inerten Medium mischen zu können, sind die Probengefäße vorzugsweise mit einer Quelle für ein Inertmedium verbunden. Hierzu kann zum Beispiel eine Inertleitung in das Probengefäß oder eine Zuleitung in das Probengefäß münden. Die Quelle für das Inertmedium ist zum Beispiel ein Vorratsbehälter, der das inerte Medium enthält. Bei einer Flüssigkeit als inertem Medium kann beispielsweise ein Flüssigkeitstank oder beliebiger anderer Flüssigkeitsbehälter als Quelle für das Inertmedium eingesetzt werden. Wenn das inerte Medium ein Gas ist, ist die Quelle für das Inertmedium zum Beispiel ein geeigneter Gasvorrat, zum Beispiel ein das Gas enthaltender Druckbehälter. Wenn das Inertmedium nicht nur zur Verdünnung des Reaktionsgemisches verwendet wird, sondern auch zum Spülen, ist es vorteilhaft, das Inertmedium zum Spülen über die gleiche Leitung zuzuführen, über die es auch zur Verdünnung des Reaktionsgemisches zugeführt wird. In diesem Fall ist es somit nicht erforderlich, separate Inertleitungen und Spülleitungen vorzusehen.

Um mit jedem Probengefäß eine eindeutig definierte Probenmenge zu entnehmen, ist es bevorzugt, wenn bei Verwendung eines Zylinders mit darin verschiebbarem Kolben als Probengefäß am Zylinder mindestens ein Positionssensor angebracht ist, mit dem die Position des Kolbens erfasst werden kann. Hierzu eignen sich zum Beispiel Sensoren, mit denen die jeweiligen Endpositionen des Kolbens, das heißt die Position bei leerem Probengefäß und die Position bei vollem Probengefäß nach Entnahme der Probe erfasst werden. Dies kann zum Beispiel durch optische, induktive, mechanische oder Ultraschallsensoren erfolgen. Alternativ ist es auch möglich, zum Beispiel durch Verwendung eines Schrittmotors für die Bewegung des Kolbens die genaue Position und damit das exakte Probenvolumen zu jedem Zeitpunkt der Probennahme zu erfassen. Ein weiterer Vorteil der Verwendung eines Probengefäßes mit einem verschiebbaren Kolben ist, dass zur Entnahme der Probe kein zusätzliches Gas zur Verdrängung benötigt wird. Bei Verfahren, mit denen die Probe durch ein Gas aus dem Probengefäß verdrängt wird, um diese zu einer Analyseneinheit zu transportieren besteht das Risiko, dass sich das zur Verdrängung eingesetzte Gas mit dem Reaktionsgemisch vermischt und so zu verfälschten Ergebnissen führt. Ein weiterer Vorteil ist, dass bei einer Ansteuerung des Kolbens über einen geeigneten Antrieb, beispielsweise einen Schrittmotor, auch eine automatisierte Entnahme der Probe zur Zufuhr in eine Analyseneinheit möglich ist. Wenn der Kolben hydraulisch oder pneumatisch gesteuert wird, kann dies alternativ durch Erzeugung eines Überdrucks auf der der Probe abgewandten Seite des Kolbens geschehen, so dass der Kolben in Richtung der Probe bewegt wird und diese aus dem Probengefäß herausdrückt. Dies erlaubt es zum Beispiel, voll automatisiert eine Probe in ein Probengefäß aufzunehmen, die Probe zur Analyseneinheit zu transportieren und anschließend das Probengefäß vor Aufnahme einer weiteren Probe zu spülen.

Um aus einem Reaktor nacheinander zu vorgegebenen Zeitpunkten Proben entnehmen zu können, weist der Reaktor vorzugsweise einen Auslass auf, der mit einem Mehrwegeventil verbunden ist und jeder Ausgang des Mehrwegeventils ist mit einem Probengefäß verbunden. Der Einsatz des Mehrwegeventils erlaubt es, unmittelbar nacheinander Proben zu entnehmen und jede Probe in ein neues Probengefäß einzufüllen. Hierzu kann jeweils nach Abschluss der Entnahme einer Probe, zum Beispiel nach einer vorgegebenen Entnahmedauer oder einer vorgegebenen Probenmenge das Mehrwegeventil weitergeschaltet werden und der Zulauf in ein weiteres noch leeres Probengefäß freigegeben werden. Alternativ ist es auch möglich, nach der Entnahme einer Probe zunächst alle Probengefäße zu verschließen und zu einem späteren vorgegebenen Zeitpunkt den Zulauf in ein weiteres, noch leeres Probengefäß zu öffnen und eine weitere Probe zu entnehmen. Auch in diesem Fall wird die Probennahme vorzugsweise nach Ablauf einer vorgegebenen Entnahmedauer oder nach Entnahme einer vorgegebenen Probenmenge durch verschließen des entsprechenden Probengefäßes beendet. Bevorzugt ist es in allen Varianten, die Probennahme nach Entnahme einer vorgegebenen Probenmenge zu beenden.

Das Mehrwegeventil kann entweder zwischen der Abscheidevorrichtung für den partikulären Katalysator und dem Flüssigkeitsabscheider oder stromab des Flüssigkeitsabscheiders angeordnet sein. Wenn das Mehrwegeventil zwischen der Abscheidevorrichtung und dem Flüssigkeitsabscheider positioniert ist, ist vorzugsweise in jeder Leitung, mit der das Mehrwegeventil mit einem Probengefäß verbunden ist, ein Flüssigkeitsabscheider aufgenommen. Bevorzugt ist es jedoch, wenn das Mehrwegeventil stromab des Flüssigkeitsabscheiders positioniert ist.

Die Probenmenge wird dabei vorzugsweise über die Position des Kolbens des Probengefäßes erfasst. Sobald der Kolben eine vorgegebene Position erreicht hat, die der zu entnehmenden Probenmenge entspricht, wird die Probennahme beendet. Bei einer Probenentnahme durch Anlegen eines Unterdrucks, indem der Kolben aus dem Zylinder herausgezogen wird, kann die Probennahme entweder durch Messung des Drucks im Probengefäß oder auch durch eine vorgegebene Entnahmedauer eingestellt werden. Abhängig von der Dauer der Reaktion und der Größe der verwendeten Reaktoren können unterschiedlich große Probengefäße eingesetzt werden. Für eine häufige Probennahme in kurzen Abständen, um beispielsweise den Reaktionsverlauf zu untersuchen, werden vorzugsweise kleinere Probengefäße mit einem Volumen im Bereich von 20 bis 1000 ml, vorzugsweise im Bereich von 100 bis 500 ml eingesetzt, wohingegen bei Untersuchungen von längeren Reaktionen, bei denen über einen längeren Zeitraum kontinuierlich Proben entnommen werden sollen und diese in einem Probengefäß gemischt werden oder auch bei größeren Reaktoren, Probengefäße eingesetzt werden können, die ein Volumen von 100 ml bis 20 I, bevorzugt 1 bis 15 l aufweisen.

Insbesondere, wenn mehrere Reaktoren parallel betrieben werden und für eine Untersuchung aus jedem Reaktor zum gleichen Reaktionszeitpunkt eine Probe entnommen werden soll, ist es vorteilhaft, wenn zwischen jedem Reaktor und dem damit verbundenen Probengefäß ein schaltbares Ventil aufgenommen ist, mit dem der Zulauf in das Probengefäß gesteuert werden kann. So erlaubt es der Einsatz von schaltbaren Ventilen zum Beispiel, alle Ventile gleichzeitig zu öffnen und zu schließen, so dass aus allen Reaktoren zum gleichen Zeitpunkt eine Probe entnommen wird. Dies ist insbesondere dann sinnvoll, wenn in den Reaktoren jeweils die gleiche Reaktion durchgeführt wird und alle Reaktoren mit einem gemeinsamen Eduktzulauf verbunden sind, so dass auch in allen Reaktoren gleichzeitig die Reaktion gestartet wird. Alternativ erlaubt es ein steuerbares Ventil auch, zu definierten Zeitpunkten nach Start der Reaktion in einem Reaktor Proben zu entnehmen. In diesem Fall werden die Intervalle, zu denen Proben genommen werden sollen, vorgegeben und der Startpunkt für die Messung des ersten Intervalls ist zum Beispiel das Erreichen eines vorgegebenen Prozessparameters oder der Beginn der Zufuhr von Edukt in den entsprechenden Reaktor.

Wenn die zu entnehmenden Probenmengen größer sind als die Probengefäße, ist es weiterhin möglich, mehrere Probengefäße mit einem Reaktor zu verbinden. Hierbei ist vor jedem Probengefäß ein schaltbares Ventil positioniert. Zur Probenentnahme wird das schaltbare Ventil vor einem ersten Probengefäß geöffnet, so dass die Probe in das Probengefäß strömen kann. Sobald das Probengefäß befüllt ist, wird das schaltbare Ventil geschlossen und das schaltbare Ventil eines weiteren Probengefäßes geöffnet. Dies kann so lange wiederholt werden, bis alle Probengefäße befüllt sind. Weiterhin ist es in diesem Fall auch möglich, bereits eine Probe aus einem bereits befüllten Probengefäß zu entnehmen und zu analysieren, während noch weitere Probengefäße befüllt werden. In diesem Fall kann nach dem Entnehmen der Probe aus dem Probengefäß und einem möglichen Spülen des Probengefäßes wieder eine neue Probe aufgenommen werden.

Wenn zu unterschiedlichen Zeiten Proben aus mehreren Reaktoren entnommen werden sollen, ist es auch möglich, die gleichen Probengefäße mit mehreren Reaktoren zu verbinden, zum Beispiel durch Einsatz eines Mehrwegeventils zwischen den Reaktoren und den Probengefäßen, bei dem jeder Reaktor mit einem Eingang des Mehrwegeventils verbunden ist und das Mehrwegeventil einen Ausgang aufweist, der mit einer Leitung verbunden ist, aus der jeweils eine Verbindung zu jedem Probengefäß abzweigt. In jeder Verbindung zu den Probengefäßen befindet sich dann das schaltbare Ventil.

Alternativ zu den vorstehend beschriebenen Probengefäßen mit einem verschiebbaren Kolben ist es auch möglich, Probengefäße einzusetzen, die ein definiertes Volumen aufweisen und vor der Probenentnahme evakuiert werden. Vor jedes Probengefäß wird auch hier ein schaltbares Ventil positioniert. Aufgrund des Unterdrucks im Probengefäß wird beim Öffnen des schaltbaren Ventils eine Probe in das Probengefäß gesaugt. Um die Probe zu entnehmen ist es möglich, diese durch ein inertes Gas zu verdrängen oder es werden Einwegkartuschen als Probengefäße eingesetzt, aus denen die Probe zur Analyse entnommen werden kann oder die alternativ in eine geeignete Analysenvorrichtung eingesetzt werden können.

Wenn die Vorrichtung zur Untersuchung von Reaktionen mehrere Reaktoren umfasst, ist es möglich, in allen Reaktoren die gleiche Reaktion durchzuführen, um auf diese Weise Schwankungen und Unterschiede im Reaktionsverlauf zu untersuchen. Alternativ erlaubt es der Einsatz von mehreren Reaktoren auch, einzelne Reaktionsparameter zu variieren und so den Einfluss der einzelnen Reaktionsparameter auf die Reaktion zu untersuchen. Mögliche Reaktionsparameter, die variiert werden können, sind zum Beispiel Temperatur, Druck und bei kontinuierlichen Reaktionen die Mengenströme der eingesetzten Edukte und das Mengenverhältnis der einzelnen Edukte, bei batchweise betriebenen Reaktionen entsprechend die Menge der einzelnen eingesetzten Edukte. Weiterhin ist es auch möglich, unterschiedliche Katalysatoren einzusetzen und so die Wirksamkeit unterschiedlicher Katalysatoren für eine Reaktion zu untersuchen.

Um für solche Untersuchungen, bei denen die Reaktionsparameter variiert werden oder unterschiedliche Katalysatoren eingesetzt werden, vergleichbare Untersuchungsergebnisse zu erhalten, ist es erforderlich, dass die Proben jeder Reaktion jeweils zu definierten Zeitpunkten entnommen werden und auch die Probenmengen jeweils gleich groß sind. Die in den einzelnen Probengefäßen enthaltenen Proben können nach der Probenentnahme analysiert werden, zum Beispiel um den Umsatz zu ermitteln oder auch während der Reaktion entstandene Nebenprodukte zu erfassen. Hierzu können die aus der chemischen Analytik bekannten Untersuchungsverfahren, zum Beispiel chromatographische Verfahren wie Gaschromatographie oder Hochleistungsflüssigkeitschromatographie, spektrometrische Verfahren wie Massenspektroskopie, spektroskopische Verfahren wie Infrarotspektroskopie und UV/VIS oder auch Kombinationen unterschiedlicher Verfahren eingesetzt werden.

Die Vorrichtung eignet auch sich zur Kalibrierung von Analysegeräten, da aus einem veränderlichen Produktgemisch aus einem Reaktor durch Sammeln und thermische Equilibrierung im Probengefäß eine homogene Probe erzeugt werden kann. Die Probe kann dann durch eine Kombination unterschiedlicher analytischer Verfahren geleitet werden, wodurch mit einem Verfahren bekannter Kalibrierung andere Verfahren mit unbekannter Kalibrierung kalibriert werden können. Zum Beispiel können ein Analysegerät mit einem einfach zu kalibrierenden chromatographischen Verfahren (z.B. Gaschromatographie) und ein Analysegerät mit einem spektroskopischen Verfahren (z.B. IR) mit der gleichen Probe durchströmt werden, um eine Kalibrierung für das Analysengerät mit spektroskopischem Verfahren zu erhalten, welches nachfolgend mit höherer Zeitauflösung als das chromatographische Verfahren die Reaktionsprodukte eines Reaktors verfolgen kann. Dies kann insbesondere im Bereich der Chemometrie zum Einsatz kommen, bei welcher chemische Informationen durch mathematische und statistische Methoden aus experimentellen Messdaten extrahiert werden können und im Vorfeld ein entsprechendes Model aus Proben bekannter Zusammensetzung generiert werden muss.

Insbesondere, wenn das gasförmige Reaktionsgemisch einen Kondensationspunkt aufweist, der oberhalb der Umgebungstemperatur liegt, so dass zumindest ein Teil des Reaktionsgemisches bei Abkühlung kondensiert, ist es bevorzugt, wenn die Probengefäße beheizbar sind. Hierdurch lassen sich die Probengefäße auf eine Temperatur oberhalb der Kondensationstemperatur des Reaktionsgemischs aufwärmen, so dass das Reaktionsgemisch im Probengefäß gasförmig bleibt. Dies ist insbesondere dann vorteilhaft, wenn die anschließenden Reaktionen oder Analysen in der Gasphase durchgeführt werden sollen oder wenn bei Abkühlung eine Auftrennung des Reaktionsgemischs in eine Flüssigphase und eine Gasphase erfolgt, die zu fehlerhaften oder ungenauen Messergebnissen führen kann, insbesondere wenn die genaue Zusammensetzung des Reaktionsgemischs erfasst werden soll. Vorzugsweise können die Probengefäße auf eine Temperatur bis zu 100°C, und insbesondere auf eine Temperatur bis zu 150°C aufgeheizt werden, wobei bei Untersuchung von Reaktionen mit entsprechend hochsiedenden Komponenten auch eine Beheizung auf höhere Temperaturen denkbar ist. Vorzugsweise werden die Probengefäße elektrisch beheizt, wobei bei stationärem Einbau der Probengefäße auch eine Beheizung mit einem Heizmedium, beispielsweise einem Thermalöl oder auch Dampf möglich ist. Bei einem nicht stationären Einbau, beispielsweise, wenn die Probengefäße nach der Probenentnahme entnommen werden sollen, um diese zu einer Analyseneinheit zu transportieren, ist es vorteilhaft, eine elektrische Beheizung vorzusehen, die mit einem geeigneten Akkumulator während des Transports aufrechterhalten werden kann. Alternativ kann für den Transport auch eine Isolierung des Probengefäßes ausreichend sein, wobei hier für die einfachere Handhabbarkeit durch Ein- und Ausstecken einer elektrischen Spannungsversorgung eine elektrische Beheizung bevorzugt ist.

Der Druck im Probengefäß entspricht vorzugsweise dem Druck der Reaktion. Es ist jedoch auch möglich, unterschiedliche Drücke im Probengefäß und im Reaktor einzustellen, wobei in diesem Fall vorzugsweise bei einer Reaktion unter erhöhtem Druck ein niedrigerer Druck im Probengefäß, beispielsweise Umgebungsdruck, und bei einer Reaktion unterhalb Umgebungsdruck einen höheren Druck im Probengefäß, beispielsweise Umgebungsdruck, eingestellt wird.

Wie vorstehend bereits dargelegt unterscheidet sich der Betrieb der Reaktoren in Schritt (b) in Abhängigkeit von den zu untersuchenden Eigenschaften. Wenn beabsichtigt ist, Schwankungen in einer Reaktion zu untersuchen, werden alle Reaktionen unter den gleichen Bedingungen durchgeführt. Wenn der Einfluss von unterschiedlichen Reaktionsbedingungen, beispielsweise unterschiedlichen Eduktmengen, unterschiedlichen Temperaturen oder unterschiedlichen Drücken oder auch verschiede Katalysatoren, untersucht werden soll, werden vorzugsweise in jedem Reaktor die Reaktionsbedingungen variiert. Sollen in diesem Fall auch Schwankungen in den Reaktionen untersucht werden, ist es weiterhin auch möglich, jeweils eine bestimmte Anzahl der Reaktoren mit den gleichen Reaktionsbedingungen zu betreiben.

Zur Untersuchung des Reaktionsverlaufs werden in Schritt (f) die Proben gepulst entnommen, wobei hier die Entnahme in vorgegebenen Intervallen erfolgt. Hierbei ist es auch möglich, jeweils sofort nachdem die Entnahme in ein Probengefäß beendet ist, mit der Entnahme in ein nachfolgendes Probengefäß zu beginnen. Die Entnahmedauer ist dabei entweder fest vorgegeben oder es wird jeweils eine Probe entnommen, bis eine vorgegebene Probenmenge im Probengefäß enthalten ist. Hierzu kann beispielsweise die Position des Kolbens des Probengefäßes erfasst werden.

Bei einer Probenentnahme bis eine bestimmte Menge an Probe im Gefäß enthalten ist, ist es weiterhin vorteilhaft, wenn parallel aus mehreren Reaktoren Proben entnommen werden sollen, jeweils mit der Probennahme in ein nachfolgendes Probengefäß erst dann zu beginnen, wenn die Probenentnahme in ein Probengefäß an allen Reaktoren beendet ist. Hierdurch wird sichergestellt, dass die Proben jeweils zum gleichen Zeitpunkt entnommen wurden, so dass die Untersuchung der entnommenen Proben vergleichbare Ergebnisse liefert.

Die Untersuchung der Proben in Schritt (g) kann mit bekannten Analysegeräten durchgeführt werden, zum Beispiel, wie vorstehend bereits erwähnt, mit chromatographischen, spektrometrischen oder spektroskopischen Verfahren.

Um die Reaktionen zu untersuchen, werden vorzugsweise neben den entnommenen Proben, deren Zusammensetzung erfasst werden kann, auch weitere Reaktionsparameter erfasst. Diese weiteren Reaktionsparameter umfassen zum Beispiel den Druck und die Temperatur im Reaktor.

In Abhängigkeit von den untersuchten Reaktionen und den durchzuführenden Untersuchungen ist es möglich, die entnommenen Proben mit einem inerten Medium zu mischen. Das Mischen mit dem inerten Medium kann dabei im Probengefäß erfolgen. Alternativ ist es auch möglich, die Probe aus dem Probengefäß in ein weiteres Gefäß zu transferieren und das inerte Medium in dem weiteren Gefäß zuzumischen.

Insbesondere bei der Untersuchung von kontinuierlich durchgeführten Reaktionen kann auch gewünscht sein, über den Reaktionsverlauf gemittelte Werte zu erfassen. Hierzu können zum Beispiel die nacheinander aus einem Reaktor entnommenen Proben in ein weiteres Gefäß eingebracht und in diesem Gefäß gemischt werden. Anhand dieser gemischten nacheinander entnommenen Proben kann dann zum Beispiel eine mittlere Zusammensetzung des Reaktionsgemischs ermittelt werden. Das Transferieren des als Probe entnommenen Reaktionsgemischs in das weitere Gefäß erfolgt dann vorzugsweise vor der Untersuchung in Schritt (g). Wenn in mehreren Reaktoren die gleiche Reaktion durchgeführt wird und gemittelte Werte erfasst werden sollen, die sich zu vorgegebenen Zeitpunkten einstellen, ist es alternativ auch möglich, die Proben, die den einzelnen Reaktoren jeweils zum gleichen Zeitpunkt entnommen wurden, in ein gemeinsames Gefäß zu transferieren und in diesem vor der Untersuchung zu mischen.

Mit der erfindungsgemäßen Vorrichtung ist es somit möglich, Reihenuntersuchungen durchzuführen und vergleichbare Daten für jede der durchgeführten Reaktionen zu erfassen oder auch einen Reaktionsverlauf präzise zu analysieren.

Um bei Reaktionen, bei denen sich Kohlenstoff auf dem Katalysator ablagern kann, zum Beispiel katalytische Crack-Reaktionen, den Kohlenstoffanteil zu bestimmen, ist es bevorzugt, wenn die Abscheidevorrichtung zur Abtrennung des partikelförmigen Katalysators eine Oxidationsgaszufuhr aufweist, so dass es möglich ist, den Kohlenstoff auf dem Katalysator durch Verbrennen zu bestimmen. In diesem Fall ist es weiterhin bevorzugt in der Ausgangsleitung aus der Abscheidevorrichtung eine Analyseneinheit vorzusehen, die vorzugsweise über ein Ventil mit der Ausgangsleitung verbunden ist.

In der Verbindung vom Ventil zur Analyseneinheit kann weiterhin ein Reaktor mit einem Oxidationskatalysator aufgenommen sein. Das beim Abbrennen freigesetzte Gas wird zunächst mittels des Oxidationskatalysators vollständig oxidiert und anschließend der Analyseneinheit zugeführt. Bei der Analyseneinheit kann es sich beispielsweise um eine IR-Messzelle oder ein Massenspektrometer handeln. Als Analyseneinheit können sämtliche analytischen Messgeräte verwendet werden, die dem Fachmann zur Analyse der jeweils vorliegenden Produkte bekannt sind.

Alternativ ist es auch möglich, wenn mit der mit dem Probengefäß verbundenen Analyseeinrichtung auch der Kohlendioxid- und Kohlenmonoxidgehalt im gasförmigen Reaktionsprodukt bestimmt werden können auf die zusätzliche Analyseneinheit und den Reaktor mit Oxidationskatalysator zu verzichten.

In einer bevorzugten Ausführungsform ist die erfindungsgemäße Vorrichtung mit einer Steuerung ausgestattet, die es ermöglicht, dass zumindest Teile der Vorrichtung automatisch betrieben werden können. Weiter bevorzugt ist, dass die gesamte Vorrichtung vollautomatisch betrieben werden kann.

Die Abscheidevorrichtung für den partikelförmigen Katalysator ist vorzugsweise mit einem Sammelbehälter verbunden. Der in der Abscheidevorrichtung aufgenommene Katalysator kann nach der Beendigung der Reaktion und gegebenenfalls nach Entfernung des auf dem Katalysator abgelagerten Kohlenstoffs von der Abscheidevorrichtung durch eine Verbindungsleitung in den Sammelbehälter überführt werden. Die Verbindungsleitung ist dabei vorzugsweise mit einem Ventil ausgestattet, das vor der Entleerung der Abscheidevorrichtung geöffnet wird. Die Überführung des Katalysators erfolgt entweder mittels Einstellung eines entsprechenden Trägergasstroms, der ausreichend stark ist, um den Katalysator von der Abscheidevorrichtung in den Sammelbehälter zu überführen, oder dadurch, dass die gesamte Vorrichtung mehrfach unter Druck gesetzt wird und der Katalysator dann jeweils nach Öffnen des Ventils zwischen der Abscheidevorrichtung und dem Sammelbehälter in den Sammelbehälter getrieben wird.

Der Druckregler in der Ausgangsleitung zur Ableitung des gasförmigen Reaktionsprodukts weist vorzugsweise eine Regeldynamik auf, die im Bereich von 1 : 100 liegt, vorzugsweise im Bereich von 1 : 1.000, weiter vorzugsweise im Bereich von 1 : 10.000. Die Regeldynamik ergibt sich aus dem Verhältnis des kleinsten und größten Leitwerts des Ventils.

Insbesondere weist der Druckregler in der Ausgangsleitung zur Ableitung des gasförmigen Reaktionsprodukts eine Regelgüte auf, deren Abweichung in Bezug auf den Sollwert < 10 % ist, vorzugsweise ist die Abweichung in Bezug auf den Sollwert < 5 % und weiter vorzugsweise ist die Abweichung in Bezug auf den Sollwert < 1 %, und/oder die Einschwingzeit des Reglers liegt im Bereich von 0,1 bis 30 Sekunden, vorzugsweise bei weniger als 10 Sekunden, weiter vorzugsweise bei weniger als 5 Sekunden, und insbesondere bei weniger als 2 Sekunden.

Weiter vorzugsweise bilden der Druckregler in der Ausgangsleitung zur Ableitung des gasförmigen Reaktionsprodukts und der damit verbundene Druckmesssensor und ein Regler einen Druckregelkreis, der aus der Gruppe analoger oder digitalen Rückdruckregler ausgewählt ist. Vorzugsweise handelt es sich um ein Element aus der Gruppe aktiv geregelter Rückdruckregler mit proportionaler (p), integraler (i), proportional-integraler (pi), proportional-differentieller (pd), integral-differentieller (id) oder proportional-integral-differentieller (pid) Zeitcharakteristik. Die Nennung der Zeitcharakteristiken ist hinsichtlich der Regelverfahren nicht ausschließend. Die Regelung kann dabei sowohl als Hauptstromregelung als auch als Nebenstromregelung ausgestaltet sein. Vorzugsweise ist die Regelung als Hauptstromregelung ausgestaltet.

Die Dosiereinheit für die Zuführung von flüssigem Edukt weist vorzugsweise einen Doppelnadelinjektor und/oder eine Hochdruckpumpe auf. Vorzugsweise wird ein Doppelnadelinjektor eingesetzt, wie er in der WO-A 2016/166153 A1 im Detail beschrieben wird. Mittels eines solchen Doppelnadelinjektors können Flüssigkeiten in Form von sehr kleinen Tröpfchen beziehungsweise ein Flüssigkeitsnebel mit sehr kleinen Tropfen in den Rieselbettreaktor eingeführt werden. Bei dem Doppelnadelinjektor gemäß WO-A 2016/166153 handelt es sich um eine Vorrichtung zum Versprühen von Flüssigkeiten, die einen Nadelinjektor, eine Flüssigkeitszufuhr und eine Gaszufuhr umfassen, wobei der Nadelinjektor zumindest eine Kapillarleitung und zumindest ein Außenrohr umfasst und der Nadelinjektor einen Innendurchmesser jeder Kapillarleitung im Bereich von 2 bis 400 µm aufweist. Vorzugsweise liegt der Innendurchmesser jeder Kapillarleitung im Bereich von 4 bis 300 µm, weiter vorzugsweise im Bereich von 5 bis 250 µm, und die Kapillarleitung ist koaxial im Innenraum des jeweiligen Außenrohrs angeordnet und steht in Wirkverbindung mit der Gaszufuhr und das Außenrohr steht in Wirkverbindung mit der Flüssigkeitszufuhr. Vorzugsweise ist die Spitze der Vorrichtung so ausgestaltet, dass die Kapillarleitung und das Außenrohr eine Längendifferenz im Bereich von 0 bis 10 mm aufweisen, vorzugsweise liegt die Längendifferenz im Bereich von 2 bis 7 mm, wobei es bevorzugt ist, dass die Kapillarleitung länger ist als das Außenrohr. Weiter bevorzugt ist es, wenn der Doppelnadelinjektor mittels einer Beheizungsvorrichtung beheizt wird. Die Dosiereinheit für die Zuführung von flüssigem Edukt, die mit zumindest einem Doppelnadelinjektor ausgestattet ist, ermöglicht eine sehr gut kontrollierte Zuführung von flüssigem Edukt in die Vorrichtung. Das Trägergas, welches die zur Zerstäubung erforderliche Strömungsenergie in das System einträgt, wird durch die Kapillarleitung geführt und die Flüssigkeit wird durch die Außenleitung geführt. An der Spitze des Doppelnadelinjektors werden Gas und Flüssigkeit in Kontakt gebracht und ein sehr feinteiliger Flüssigkeitsnebel erzeugt. Der Flüssigkeitsvolumenstrom kann sehr genau kontrolliert werden und liegt vorzugsweise in einem Bereich von 0,1 bis 20 ml/min. Der Gasvolumenstrom liegt vorzugsweise im Bereich von 10 bis 300 Nml/min. Die Temperatur der Gaszufuhr liegt vorzugsweise im Bereich von 20 bis 300°C, weiter vorzugsweise im Bereich von 80 bis 250°C. Die Temperatur der Flüssigkeitszufuhr liegt vorzugsweise im Bereich von 50 bis 300°C, weiter vorzugsweise im Bereich von 100 bis 250°C. Die Temperatur des Gehäuses liegt vorzugsweise im Bereich von 80 bis 700°C, weiter vorzugsweise im Bereich von 100 bis 650°C, darüber hinaus bevorzugt im Bereich von 150 bis 550°C. Mittels der Dosiereinheit für die Zuführung von flüssigem Edukt, die mit dem Doppelnadelinjektor ausgestattet ist, ist es möglich, eine kontinuierliche Dosierung oder eine Dosierung in Pulsform vorzunehmen. Die Pulse liegen vorzugsweise im Bereich von 1 bis 300 Sekunden. Vorzugsweise ist der Doppelnadelinjektor vertikal angeordnet. Dies bedeutet, dass die Achse der Nadelrohrs vorzugsweise parallel in Bezug auf die Längsachse des Reaktors ausgerichtet ist. Bei der Dosierung von Flüssigkeiten in Gegenwart von Gasen mittels des Doppelnadelinjektors ist das Verhältnis von Gasvolumenstrom zu Flüssigkeitsvolumenstrom vorzugsweise im Bereich 10 bis 200, weiter vorzugsweise im Bereich von 12 bis 100.

Die Druckänderung an der Ausgangsseite des Reaktors während des Verfahrens beträgt vorzugsweise weniger als 200 mbarg, mehr bevorzugt weniger als 100 mbarg und insbesondere weniger als 50 mbarg.

Vorzugsweise ist die heterogen katalysierte Reaktion eine katalytische Crack-Reaktion, so dass der partikelförmige Katalysator insbesondere ein FCC-Katalysator ist.

Wenn die Reaktion bei erhöhtem Druck durchgeführt wird, wird der Katalysatorvorlagebehälter vorzugsweise mit einem definierten, kontrollierten Überdruck beaufschlagt. Mittels einer Differenzdruckmessung beziehungsweise einer Differenzdruckregelung, die in der Verbindungsleitung zwischen dem Katalysatorvorlagebehälter und der Abscheidevorrichtung vorgenommen wird, wird im Innenraum des Katalysatorvorlagebehälters ein definierter Überdruck bezüglich des Reaktors eingestellt. Durch den Überdruck wird der Katalysator aus dem Katalysatorvorlagenbehälter in den Eingangsbereich des Reaktors überführt. Die Verbindungsleitung vom Katalysatorvorlagebehälter zum Reaktor kann eine Fluidisierungsgaszufuhr aufweisen. Im Anschluss an die Fluidisierungsgaszufuhr durchlaufen der partikelförmige Katalysator und das zugeführte Fluidisierungsgas vorzugsweise eine kurze Mischstrecke, die stromauf des Reaktors oder im Eingangsbereich des Reaktors angeordnet ist. Die Reaktion beginnt in der Regel zu dem Zeitpunkt, bei dem das Edukt mit dem Katalysator in Kontakt kommt. Vorzugsweise werden Vorrichtung und Verfahren zur Umsetzung von Öl oder Vakuumgasöl eingesetzt. Die Hauptreaktion ist die katalytische Crackung der kohlenwasserstoffhaltigen Komponenten in kleinere Moleküle. Nicht ausgeschlossen ist, dass neben katalytischen Crack-Reaktionen auch thermisch ausgelöste Crack-Reaktionen ablaufen.

Die Verweilzeit des Katalysators im Reaktor ist vorzugsweise relativ kurz und liegt im Bereich von 0,1 bis 10 Sekunden. Dabei hängt die Verweilzeit insbesondere von der Länge des Reaktors und den Verfahrensparametern ab. Die erfindungsgemäße Vorrichtung und das erfindungsgemäße Verfahren werden daher insbesondere zur Untersuchung von Reaktionen eingesetzt, die schnell ablaufen sowie von einer raschen Desaktivierung des Katalysators begleitet werden und bei denen sich bereits im Zeitbereich von einigen Millisekunden bis ein oder zwei Sekunden ein stationärer Zustand einstellt. Vorzugsweise liegt der Zeitraum für die Durchführung des Verfahrens in einem Bereich von 10 bis 500 Sekunden, weiter bevorzugt in einem Bereich von 15 bis 300 Sekunden und insbesondere in einem Bereich von 30 bis 300 Sekunden. Innerhalb des betrachteten Zeitraums kann eine repräsentative Menge an Produktkomponenten aufgefangen werden, die für einen gegebenen Satz von Verfahrensparametern charakteristisch ist. Am Ende eines vorgegebenen Zeitraums werden die Zufuhr des Katalysators und die Zuführung der Eduktkomponenten in den Reaktor abgebrochen.

Nach Abbruch der Zufuhr von Katalysator und Edukten in den Reaktor können noch restliche Mengen an Katalysator und Edukt durch den Reaktor in die Abscheidevorrichtung geführt werden. Nachdem die Zufuhr von gasförmigem Reaktionsprodukt und Katalysator in die Abscheidevorrichtung abgeschlossen ist, wird der in der Abscheidevorrichtung aufgefangene Katalysator noch für einige Zeit mit einem Strippgas umspült, um flüchtige Produktkomponenten zu entfernen, die von der Oberfläche des Katalysators adsorbiert wurden. Die Zeitdauer für die Behandlung des Katalysators in der Abscheidevorrichtung nach Abschluss der Katalysatorzufuhr liegt im Bereich von 0 bis 600 Sekunden, vorzugsweise im Bereich von 30 bis 300 Sekunden.

Vorzugsweise werden alle bei der Reaktion entstandenen Produkte einer qualitativen und einer quantitativen Bestimmung unterzogen, wobei auch die Menge an nicht umgesetztem Edukt ermittelt wird. Bei der Umsetzung von Ölen wird die Menge an Kohlenstoff auf dem Katalysator bestimmt, die Mengen an gasförmigen und flüssigen Komponenten sowie deren Zusammensetzung. Anhand der Analysenergebnisse werden Umsätze und Selektivitäten für die einzelnen Produktkomponenten bestimmt und diese in Bezug zu dem jeweils gewählten Satz von experimentellen Verfahrensparametern gesetzt, der für die Crackung gewählt wurde.

Natürlich ist es auch denkbar, das Verfahren in einer Weise durchzuführen, dass während der Durchführung des Verfahrens mehrere unterschiedliche Verfahrensparameter hintereinander eingestellt werden. Wenn die Menge an flüssigem Produkt durch eine Wägung bestimmt wird muss der Flüssigkeitsabscheider ausgebaut werden. Prinzipiell existieren Möglichkeiten, wie das Verfahren durch eine Umgestaltung und Automatisierung weiter verbessert werden kann, so dass beispielsweise eine kontinuierliche Verfolgung des Umsatzes ermöglicht wird.

Als weiterer Vorteil der erfindungsgemäßen Vorrichtung ist auch zu nennen, dass das erfindungsgemäße Verfahren eine hohe Flexibilität, bezüglich des Werts des Überdrucks bietet, bei dem das Verfahren durchgeführt wird. Das erfindungsgemäße Verfahren lässt sich bei jedem Druck durchführen, für den die drucktragenden Komponenten ausgelegt sind. In einer bevorzugten Ausführungsform wird das Verfahren bei einem Druck durchgeführt, der im Bereich von 0,1 bis 10 barg liegt, vorzugsweise im Bereich von 0,3 bis 5 barg. Ein Aspekt des erfindungsgemäßen Verfahrens ist dadurch gegeben, dass das Verfahren im Hochdruckbereich durchgeführt werden kann, wobei der Hochdruckbereich durch einen Druck im Bereich von 1,5 bis 10 barg, vorzugsweise ein Druck im Bereich von 2 bis 8 barg gegeben ist. Von zentraler Bedeutung für die Erfindung ist es in diesem Zusammenhang, dass es die Druckregelung über das Ventil des Druckreglers ermöglicht, dass an dieser Position in der Ausgangsleitung ein weiter Stellbereich realisiert werden kann. Weiter vorzugsweise weist das Ventil des Druckreglers bei der Regelung Einschwingzeiten auf, bei denen sich der Druckregelkreis innerhalb einer Zeit von weniger als 100 ms, vorzugsweise einer Zeit von weniger als 70 ms und weiter vorzugsweise in einer Zeit von weniger als 50 ms einschwingt. Die schnellen Einschwingzeiten der Druckregelstrecke sind insbesondere bei Crack-Reaktionen von Bedeutung, da die Crack-Reaktionen mit einer großen Volumenzunahme verbunden sind. Bei Crack-Reaktionen ist es in Abhängigkeit der jeweiligen Crackaktivität möglich, dass der Volumenstrom um die fünffache Menge gegenüber dem Volumenstrom des im Trägergas zugeführten flüssigen Edukts zunimmt.

Die Abscheidevorrichtung weist vorzugsweis ein Volumen im Bereich von 0,1 bis 2 Liter auf, weiter vorzugsweise im Bereich von 0,2 bis 1 Liter.

Der Gesamtdruck während der Durchführung des Verfahrens kann entweder durch Führen des Flusses der zugeführten Inertgase oder durch Führen der abströmenden Gase in Abhängigkeit des einströmenden Flusses und der durch die Reaktion zusätzlich entstehenden Gase konstant gehalten werden.

Die Führung der eingehenden Inertgasflüsse führt zu einer Veränderung der Partialdrücke, da die Ströme geändert werden. Wenn große Mengen an gasförmigen Produkten gebildet werden, dann kann die Menge an Inertgas stark reduziert werden. Als Folge dessen würden sich der Umsatz, die Ausbeuten und die Selektivitäten während der Reaktion verändern. Zusätzlich ändert sich der Katalysatorfluss in den Reaktor hinein, da die Inertgasströme zusätzlich die Funktion haben, den Druckabfall zwischen Katalysatorreservoir und Reaktor aufrechtzuerhalten und sind somit für die kontinuierliche und konstante Dosierung des Katalysators verantwortlich. Würden die eingehenden Inertgasströme entsprechend den Änderungen des Drucks des Systems geregelt, wäre eine kontinuierliche und konstante Dosierung nicht mehr möglich. Somit ist Die Führung der eingehenden Inertgasflüsse eine weniger bevorzugte Ausführung.

Bevorzugt ist die Führung der abströmenden Gase in Abhängigkeit des einströmenden Flusses und der durch die Reaktion zusätzlich entstehenden Gase. Der Druckregelkreis wird dabei entweder einzeln aus den Komponenten Drucksensor als Istwertgeber, Regler und Stellglied realisiert. Als Istwertgeber ist jeder Drucksensor geeignet, der in direkter Wirkverbindung mit dem Reaktor, der Abscheidevorrichtung, dem Flüssigkeitsabscheider, respektive den verbindendenden Leitungen dieser Komponenten steht. Bei dem Druckregler handelt es sich vorzugweise um einen Regler aus der Gruppe pneumatischer Regler, elektrischer oder digitaler Regler. Weiter vorzugsweise wird in der Ausgangsleitung ein Druckregler eingesetzt, der als Überströmventil, weiter vorzugsweise als Membranüberströmventil, ausgestaltet ist. Das Überströmventil bildet einen Regelkreis, wobei das Stellelement zugleich der Istwertgeber ist. Bei dem Membranüberströmventil erfolgt die Übertragung des Sollwerts durch Auflasten der Membran mit einem Gasdruck von der dem Reaktionsraum abgewandten Seite.

In einer bevorzugten Ausführungsform ist das erfindungsgemäße Verfahren dadurch gekennzeichnet, dass der Istwert für den Druckregler durch Kombination des Signals von mindestens zwei unterschiedlichen Drucksensoren gewonnen wird, wobei die Signale kombiniert werden. Als Verfahren zur Kombination der Signale der Drucksensoren wird eine Mittelwertbildung bevorzugt, weiterhin wird eine gewichtete Mittelwertbildung bevorzugt.

Um auch den durch den Reaktor geströmten Katalysator untersuchen zu können ist es erfindungsgemäß vorgesehen, dass die Abscheidevorrichtung mit einer Katalysatorentnahmevorrichtung verbunden ist, mit der Katalysatorproben aus der Abscheidevorrichtung entnommen werden können. Die Katalysatorproben können dann in Probengefäße transferiert werden. Der in den Probengefäßen gesammelte Katalysator lässt sich dann mit geeigneten Analysemethoden untersuchen, zum Beispiel hinsichtlich seiner Zusammensetzung. Damit unterschiedliche Proben in unterschiedliche Probengefäße transferiert werden können oder zu unterschiedlichen Zeiten Proben genommen werden können, kann der Katalysator von der Katalysatorentnahmevorrichtung in verschiedene Probengefäße transferiert werden. Hierzu sind die Probengefäße auf einer Transportvorrichtung so angeordnet, dass jeweils ein Probengefäß so an der Katalysatorentnahmevorrichtung positioniert werden kann, dass dieses mit Katalysator befüllt werden kann und sobald eine Katalysatorprobe in ein Probengefäß eingefüllt wurde, ein neues Probengefäß an der Katalysatorentnahmevorrichtung positioniert werden kann. Erfindungsgemäß ist die Transportvorrichtung ein Karussell, auf dem die Probengefäße angeordnet sind, das sich nach Befüllen eines Probengefäßes weiterdreht, so dass das nächste Probengefäß auf dem Karussell zur Katalysatorentnahmevorrichtung bewegt wird.

Erfindungsgemäß ist der Reaktor ein Rohrreaktor, den der partikelförmige Katalysator von oben nach unten durchströmen kann und die Abscheidevorrichtung mit einer Katalysatorentnahmevorrichtung verbunden, über die Katalysator in Probengefäße, die auf dem Karussell angeordnet sind, transferiert werden kann. Die Abscheidevorrichtung ist weiterhin mit einem Verteilerkanal verbunden, mit dem mehrere Flüssigkeitsabscheider verbunden sind, wobei jeweils ein Flüssigkeitsabscheider mit einem Probengefäß zur Aufnahme von gasförmigem Reaktionsprodukt verbunden ist und/oder wobei mehrere Flüssigkeitsabscheider über einen Verteilerkanal mit mehreren Probengefäßen zur Aufnahme des gasförmigen Reaktionsprodukts verbunden sind. Besonders bevorzugt sind alle Flüssigkeitsabscheider über einen gemeinsamen Verteilerkanal mit mehreren Probengefäßen zur Aufnahme des gasförmigen Reaktionsprodukts verbunden.

Ausführungsbeispiele der Erfindung sind in den Figuren dargestellt und werden in der nachfolgenden Beschreibung näher erläutert.

Es zeigen:
- Figur 1: eine Vorrichtung mit einem von oben nach unten durchströmten Reaktor mit Vorheizstrecke für den Katalysator,
- Figur 2: eine Vorrichtung mit einem von oben nach unten durchströmten Reaktor mit zwei Katalysatorvorlagebehältern,
- Figur 3: eine erfindungsgemäße Vorrichtung mit einem von oben nach unten durchströmten Reaktor mit mehreren Probeentnahmestellen,
- Figur 4: eine Vorrichtung mit einem von unten nach oben durchströmten Reaktor,
- Figur 5: einen Flüssigkeitsabscheider,
- Figur 6: ein Probengefäß mit Analyseeinheit in einer ersten Ausführungsform,
- Figur 7: ein Probengefäß mit Druckregelung,
- Figur 8: eine Auswerteeinheit mit mehreren Probengefäßen,
- Figur 9: eine Auswerteeinheit mit mehreren Probengefäßen und mehreren Analyseeinrichtungen,
- Figur 10: den Umsatz von Schweröl in Abhängigkeit vom Verhältnis Katalysator zu Edukt,
- Figur 11: die Ausbeute an Benzin in Abhängigkeit vom Umsatz,
- Figur 12: die Ausbeute an Propen in Abhängigkeit vom Umsatz.

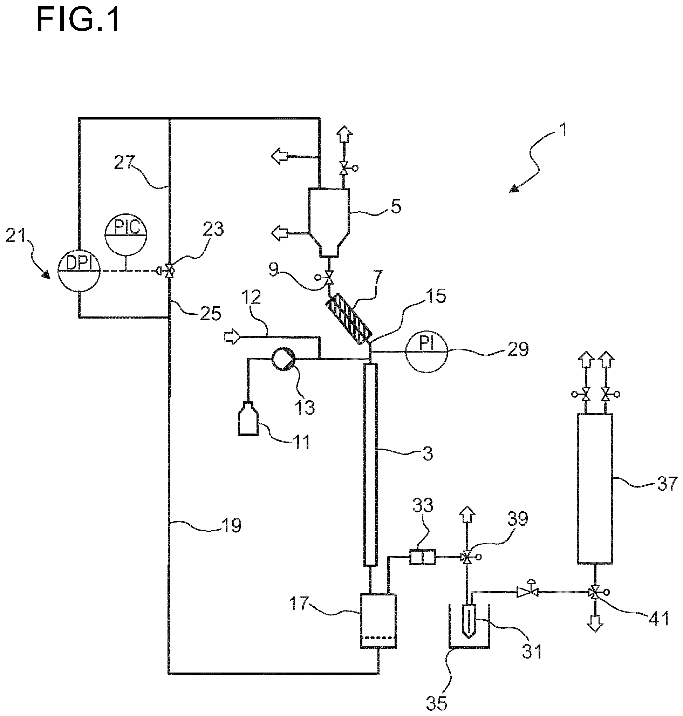

Figur 1 zeigt eine Vorrichtung zur Untersuchung heterogen katalysierter Reaktionen mit einem von oben nach unten durchströmten Reaktor und einer Vorheizstrecke für den Katalysator.

Eine Vorrichtung 1 zur Untersuchung heterogen katalysierter Reaktionen umfasst einen Reaktor 3, der von einem partikelförmigen Katalysator durchströmt wird. Hierzu ist der Reaktor 3 vorzugsweise ein Rohrreaktor, der in einem Winkel von 45° bis 90° zur Horizontalen und besonders bevorzugt in einem Winkel von 90° zur Horizontalen, wie hier dargestellt, ausgerichtet ist. An seinem oberen Ende ist der Reaktor 3 mit einem Katalysatorvorlagebehälter 5 verbunden.

Um insbesondere endotherme Reaktionen, beispielsweise katalytische Crack-Reaktionen durchführen zu können wird der im Katalysatorvorlagebehälter 5 enthaltene partikelförmige Katalysator aufgeheizt, bevor dieser in den Reaktor 3 strömt. Hierzu ist es bevorzugt, den Katalysator im Katalysatorvorlagebehälter auf eine Temperatur aufzuheizen, bei der der Katalysator nicht geschädigt wird. Wenn diese Temperatur unterhalb der Temperatur liegt, mit der der Katalysator in den Reaktor einströmen soll, ist zusätzlich eine Vorheizstrecke 7 zwischen dem Katalysatorvorlagebehälter 5 und dem Reaktor 3 vorgesehen, in der der Katalysator während des Durchströmens weiter aufgeheizt wird. Hierbei wird der Katalysator vorzugsweise auf eine Temperatur gebracht, die ausreichend hoch ist, um die für die endotherme Reaktion erforderliche Energie in den Reaktor einzubringen. Insbesondere bei katalytischen Crack-Reaktionen wird hierzu der Katalysator im Katalysatorvorlagebehälter 5 auf eine Temperatur im Bereich von 500 bis 800°C aufgeheizt und in der nachfolgenden Vorheizstrecke 7 weiter auf eine Temperatur im Bereich von 1000 bis 1200°C.

Zur Steuerung der Zufuhr des Katalysators in den Reaktor 3 befindet sich vorzugsweise zwischen der Vorheizstrecke 7 und dem Katalysatorvorlagebehälter 5 ein erstes Ventil 9. Das erste Ventil 9 wird vor Beginn einer Untersuchung geöffnet, so dass der Katalysator durch die Vorheizstrecke 7 in den Reaktor 3 strömen kann. Sobald ein Versuch beendet wird, wird das erste Ventil 9 wieder geschlossen. Es kann kein weiterer Katalysator in den Reaktor 3 strömen und damit wird auch die Reaktion abgeschlossen.

Damit eine Reaktion durchgeführt werden kann, ist es weiterhin erforderlich, die für die Reaktion notwendigen Edukte zuzuführen. Hierzu wird vorzugsweise flüssiges Edukt aus einem Eduktvorlagebehälter 11 über eine geeignete Fördereinrichtung, beispielsweise eine Pumpe 13 dem Reaktor 3 zugeführt. Hierbei kann das Edukt entweder direkt am oberen Ende des Reaktors 3 zugeführt werden oder, wie in Figur 1 dargestellt, in eine Verbindungsleitung 15 über die der partikelförmige Katalysator aus der Vorheizstrecke 7 in den Reaktor 3 strömt. Zusätzlich oder alternativ zu dem flüssigen Edukt aus dem Eduktvorlagebehälter 11 kann auch weiteres Edukt, insbesondere gasförmiges Edukt oder ein Inertgas über eine Zuführung 12 zugeführt werden. Hierbei mündet die Zuführung 12 vorzugsweise vor der Zugabe des Edukts zum partikelförmigen Katalysator in eine Zufuhrleitung zum Reaktor 3. Die Zugabe eines Inertgases über die Zuführung 12 ist insbesondere dann vorteilhaft, wenn das flüssige Edukt fein zerstäubt mit dem partikelförmigen Katalysator in Kontakt gebracht werden soll. In diesem Fall dient das Inertgas zur Zerstäubung des flüssigen Edukts in einem geeigneten Injektor.

Nach dem Durchströmen des Reaktors 3 wird der Katalysator mit einem gegebenenfalls flüssige und/oder kondensierbare Komponenten enthaltenden gasförmigen Reaktionsprodukt in eine Abscheidevorrichtung 17 zur Abtrennung des partikelförmigen Katalysators geleitet.

Zur Einstellung des Drucks im Reaktor 3 ist die Abscheidevorrichtung 17 über eine Wirkverbindung 19 mit dem Katalysatorvorlagebehälter 5 verbunden. In der Wirkverbindung 19 ist ein Differenzdruckregler 21 aufgenommen, der ein kontinuierlich wirkendes Ventil 23 ansteuert, wobei die Ausgangsseite des Ventils 23 eine Verbindungsleitung 25 zur Abscheidevorrichtung 17 aufweist und die Eingangsseite des Ventils 23 eine Verbindungsleitung 27 zum Katalysatorvorlagebehälter.

Der Differenzdruckregler 21 ermöglicht es, ein definiertes Druckgefälle zwischen dem Katalysatorvorlagebehälter 5 und dem Reaktor 3 einzustellen. Das Druckgefälle dient dabei als Triebkraft, um den Katalysator aus dem Katalysatorvorlagebehälter 5 in den Reaktor 3 zu überführen. Zusätzlich ist ein Drucksensor 29 am Einlass in den Reaktor 3 vorgesehen, mit dem der Druck am Eintritt in den Reaktor erfasst wird. Mit Hilfe des Drucks am Eintritt in den Reaktor und dem über den Differenzdruckregler 21 geregelten Druckgefälle kann der gewünschte Reaktionsdruck geregelt werden.

Nach Abtrennung des partikelförmigen Katalysators in der Abscheidevorrichtung 17 wird das gegebenenfalls noch flüssige und/oder kondensierbare Komponenten enthaltende gasförmige Reaktionsprodukt einem Flüssigkeitsabscheider 31 zugeführt. Um gegebenenfalls noch im gasförmigen Reaktionsprodukt enthaltene Katalysatorpartikel abzutrennen, wird das gasförmige Reaktionsprodukt vor dem Flüssigkeitsabscheider 31 vorzugsweise über einen Filter 33 geführt.

Um auch kondensierbare Komponenten im Flüssigkeitsabscheider 31 abzutrennen, wird dieser vorzugsweise gekühlt. Hierzu kann der Flüssigkeitsabscheider 31 zum Beispiel in einem Kühlbad 35 aufgenommen sein. Durch die Kühlung kondensieren die kondensierbaren Komponenten aus dem gasförmigen Reaktionsprodukt und werden im Flüssigkeitsabscheider abgetrennt. Nach Abtrennung der flüssigen und/oder kondensierbaren Komponenten im Flüssigkeitsabscheider 31 wird das gasförmige Reaktionsprodukt einem Probengefäß 37 zugeführt. Wenn nur ein Teil des gasförmigen Reaktionsprodukts untersucht werden soll, besteht auch die Möglichkeit, das gasförmige Reaktionsprodukt vor Eintritt in den Flüssigkeitsabscheider über ein erstes 3-Wege-Ventil 39 oder vor Eintritt in das Probengefäß über ein zweites 3-Wege-Ventil 41 aus dem Prozess abzuziehen. Bevorzugt ist es jedoch, auch an dem ersten 3-Wege-Ventil 39 oder dem zweiten 3-Wege-Ventil jeweils eine Analyseneinheit anzuschließen, mit der Eigenschaften, insbesondere die Zusammensetzung, des gasförmigen Reaktionsprodukts bestimmt werden können.

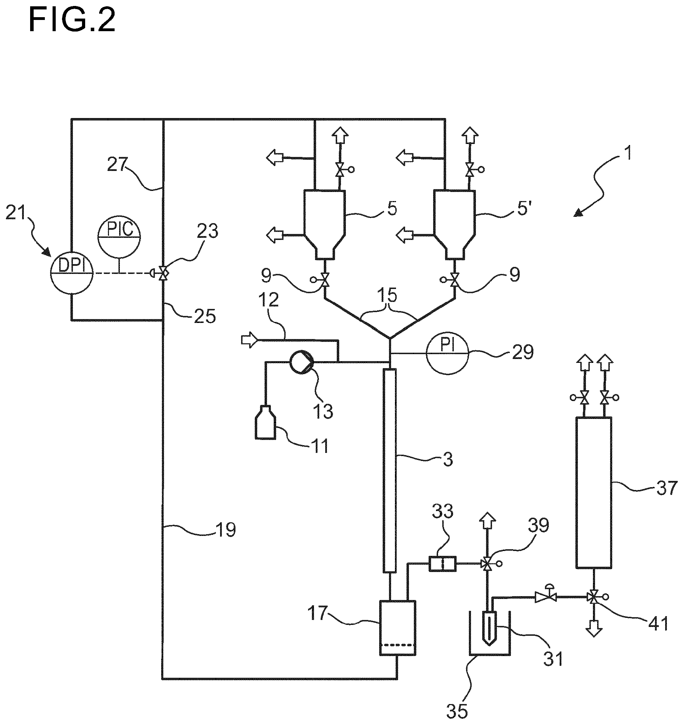

Figur 2 zeigt eine Vorrichtung zur Untersuchung heterogen katalysierter Reaktionen in einer zweiten Ausführungsform.

Im Unterschied zu der in Figur 1 dargestellten Ausführungsform weist die in Figur 2 dargestellte zwei Katalysatorvorlagebehälter 5, 5' auf. Der Einsatz des ersten Katalysatorvorlagebehälters 5 und des zweiten Katalysatorvorlagebehälters 5' erlaubt es, die Reaktion über einen längeren Zeitraum oder mit einer größeren Menge an Katalysator durchzuführen. Insbesondere besteht so die Möglichkeit, während aus einem Katalysatorvorlagebehälter 5, 5' partikelförmiger Katalysator entnommen wird, den anderen Katalysatorvorlagebehälter 5', 5 mit frischem Katalysator zu befüllen und diesen gegebenenfalls vorzuheizen. Nachdem im ersten Katalysatorvorlagebehälter 5, 5' ein minimaler Füllstand erreicht ist, kann dann auf den anderen Katalysatorvorlagebehälter 5', 5 umgeschaltet werden, so dass kontinuierlich weiter Katalysator in den Reaktor 3 strömen kann.

Neben dem Einsatz von zwei Katalysatorvorlagebehältern 5, 5', wie hier dargestellt, können auch mehr als zwei, zum Beispiel drei, vier oder mehr Katalysatorvorlagebehälter 5, 5' eingesetzt werden. Der Einsatz von mehreren Katalysatorvorlagebehältern 5, 5' hat insbesondere den Vorteil, dass die einzelnen Behälter kleiner dimensioniert werden können, wodurch auch eine schnellere Aufheizung des darin enthaltenen Katalysators möglich ist.

Wenn der Katalysator im Katalysatorvorlagebehälter 5, 5' ausreichend temperiert, insbesondere aufgeheizt, werden kann, kann, wie in Figur 2 dargestellt, auf die zusätzliche Vorheizstrecke 7 verzichtet werden. Allerdings ist es auch möglich, wie bei der in Figur 1 dargestellten Ausführungsform, jede der Verbindungsleitungen 15 vom Katalysatorvorlagebehälter 5, 5' mit einer Vorheizstrecke 7 zu versehen, um den Katalysator vor Eintritt in den Reaktor 3 weiter aufheizen zu können.

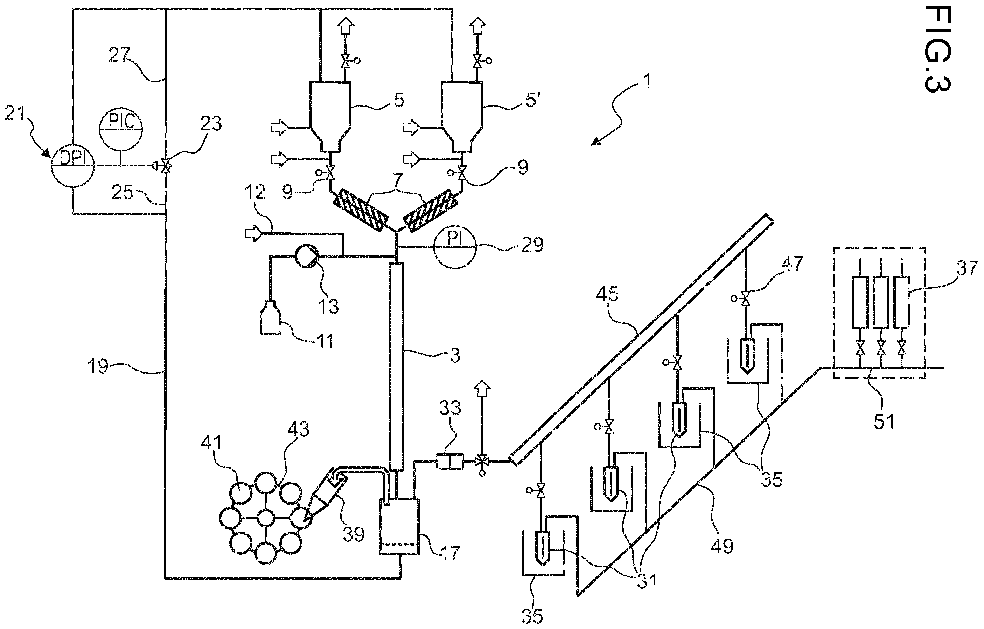

In Figur 3 ist eine Vorrichtung zur Untersuchung heterogen katalysierter Reaktionen dargestellt, die mehrere Flüssigkeitsabscheider und Probeentnahmestellen aufweist.

Die Zufuhr von Edukten und partikelförmigem Katalysator in den Reaktor 3 sowie die Differenzdruckregelung erfolgt bei der in Figur 3 dargestellten erfindungsgemäßen Ausführungsform entsprechend der in Figur 2 gezeigten, wobei in der Verbindungsleitung 15 hier jeweils eine Vorheizstrecke 7 aufgenommen ist, um den Katalysator vor Eintritt in den Reaktor 3 weiter aufzuheizen.

Um nicht nur das gasförmige Reaktionsprodukt untersuchen zu können, weist die Abscheidevorrichtung 17 für den partikelförmigen Katalysator eine Katalysatorentnahmevorrichtung 39 auf. Mit dieser kann partikelförmiger Katalysator aus der Abscheidevorrichtung 17 entnommen und in Probengefäße 41 eingefüllt werden. Die Probengefäße 41 befinden sich in der hier dargestellten Ausführungsform in einem Karussell 43, das sich nach dem Befüllen eines Probengefäßes 39 weiterdrehen kann, so dass ein leeres Probengefäß 41 zur Katalysatorentnahmevorrichtung 39 geführt und dann mit aus der Abscheidevorrichtung 17 entnommenem Katalysator befüllt werden kann.

Die befüllten Probengefäße 41 können dann dem Karussell 43 entnommen werden und der darin enthaltene Katalysator kann untersucht werden. Hierzu können die befüllten Probengefäße 41 entweder manuell entnommen werden oder die Probengefäße 41 werden automatisiert entnommen und zu entsprechenden Analyseeinrichtungen, mit denen zum Beispiel die Zusammensetzung des Katalysators oder auch Ablagerungen auf dem Katalysator untersucht werden können.

Das gegebenenfalls flüssige und/oder kondensierbare Komponenten enthaltende gasförmige Reaktionsprodukt wird in einen Verteilerkanal 45 geleitet, an den mehrere Flüssigkeitsabscheider 31 jeweils über ein Ventil 47 angeschlossen sind. Dies ermöglicht zum Beispiel die Durchführung mehrerer aufeinanderfolgender Reaktionen, wobei mit jeder Reaktion ein neuer Flüssigkeitsabscheider 31 angesteuert wird. Der jeweilige Flüssigkeitsabscheider 37 lässt sich dann zum Beispiel nach Abschluss einer Reaktion entnehmen, um die Flüssigkeitsmenge im Flüssigkeitsabscheider bestimmen zu können. Gleichzeitig können dann während einer weiteren Reaktion in einem weiteren Flüssigkeitsabscheider 31 die flüssigen und/oder kondensierbaren Komponenten abgetrennt werden. Bevorzugt ist es jedoch, zunächst mehrere Reaktionen durchzuführen, bei denen jeweils ein anderer Flüssigkeitsabscheider 31 eingesetzt wird und nach Abschluss sämtlicher Reaktionen die jeweils abgetrennte Flüssigkeit zu untersuchen.

Die Auslässe der Flüssigkeitsabscheider 31, über die das gasförmige Reaktionsprodukt nach Abtrennung der Flüssigkeit abgezogen wird, münden in einen Sammler 49. An den Sammler 49 schließt sich ein weiterer Verteilerkanal 51 oder ein Mehrwegeventil an, über das mehrere Probengefäße 37 befüllt werden können. Das Anbinden mehrerer Probengefäße 37 ermöglicht es zum Beispiel, während einer Reaktion mehrere Proben zu nehmen, um zum Beispiel einen Reaktionsverlauf und die Reaktionskinetik untersuchen zu können. Weiterhin ist es jedoch auch möglich, entsprechend dem vorstehend beschriebenen Einsatz der Flüssigkeitsabscheider 31 mehrere Reaktionen nacheinander durchzuführen und das gasförmige Reaktionsprodukt jeder Reaktion einem Probengefäß 37 zuzuführen. Nach Abschluss aller Reaktionen kann dann das gasförmige Reaktionsprodukt jeder Reaktion untersucht werden. Alternativ ist es auch möglich, eine Untersuchung des gasförmigen Reaktionsproduktes aus einem Probengefäß 37 bereits zu beginnen, während eine weitere Reaktion abläuft, deren gasförmiges Reaktionsprodukt in einem weiteren Probengefäß 37 aufgenommen wird.

Erfindungsgemäß ist es, wenn, wie in Figur 3 dargestellt, der Reaktor 3 von oben nach unten durchströmt wird und sich in Strömungsrichtung an den Reaktor 3 die Abscheidevorrichtung 17 anschließt. Die Abscheidevorrichtung ist dabei mit einer Katalysatorentnahmevorrichtung 39 verbunden, die mit mehreren Probengefäßen 41 verbunden ist, wobei die Probengefäße 41 auf einem Karussell 43 angeordnet sind, so dass der Katalysator aus der Abscheidevorrichtung 17 mittels der Katalysatorentnahmevorrichtung 39 in die Probengefäße 41, vorzugsweise in mehr als zwei Probengefäße 41, insbesondere vier oder mehr Probengefäße 41 transferiert werden kann. Weiterhin ist die Abscheidevorrichtung 17 über einen Verteilerkanal 45, der auch als Manifold bezeichnet wird, mit mehreren Flüssigkeitsabscheidern 31 verbunden, wobei die Flüssigkeitsabscheider 31 besonders bevorzugt als Sammelbehälter für die Flüssigkeit genutzt werden. Bevorzugt ist der Verteilerkanal 45 mit zwei oder mehr Flüssigkeitsabscheidern 31 verbunden und insbesondere mit vier oder mehr Flüssigkeitsabscheidern 31. Besonders bevorzugt ist es weiterhin, wenn die Flüssigkeitsabscheider mit mehreren Probengefäßen 37, vorzugsweise zwei oder mehr Probengefäße 37 und insbesondere vier oder mehr Probengefäße 37, in Wirkverbindung stehen, wobei in den Probengefäße 37 gasförmiges Reaktionsprodukt gesammelt wird.

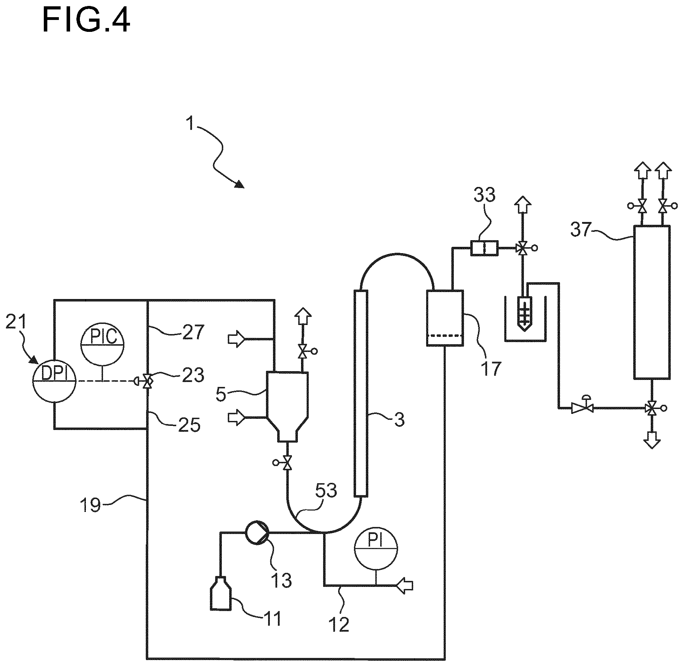

Figur 4 zeigt eine Vorrichtung zur Untersuchung heterogen katalysierter Reaktionen mit einem von unten nach oben durchströmten Reaktor.

Der in Figur 4 dargestellte Reaktor 3 unterscheidet sich von dem der Figur 1 durch die Strömungsrichtung des partikelförmigen Katalysators. Um eine gleichmäßige Katalysatorströmung im Reaktor 3 zu erhalten, wird der Katalysatorvorlagebehälter 5 über einen Rohrbogen 53 mit einem Radius im Bereich von 25 bis 75 mm mit dem Reaktor 3 verbunden. Die Zugabe des Edukts aus dem Eduktvorlagebehälter 11 oder über die Zuführung 12 kann, wie hier dargestellt, in den Rohrbogen 53 erfolgen. Alternativ ist es auch möglich, das Edukt bereits vor dem Rohrbogen 53 oder erst kurz vor Eintritt in den Reaktor 3 zuzuführen.

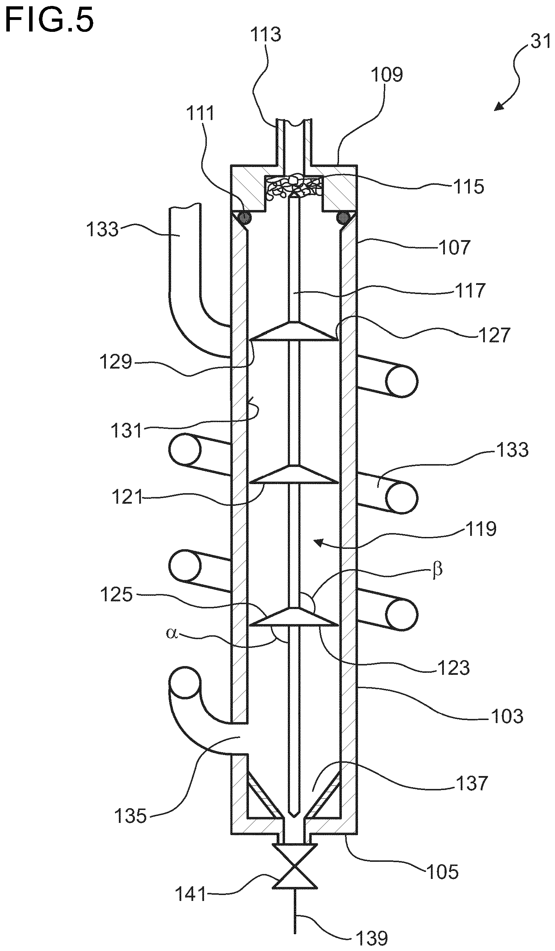

Ein Flüssigkeitsabscheider, wie er erfindungsgemäß in der Vorrichtung 1 eingesetzt wird, ist in Figur 5 dargestellt.

Der Flüssigkeitsabscheider 31 umfasst ein metallisches Rohr 103 mit einem ersten Ende 105 und einem zweiten Ende 107. In der hier dargestellten Ausführungsform ist das metallische Rohr 103 an seinem ersten Ende 105 geschlossen. Das zweite Ende 107 ist mit einem abnehmbaren Deckel 109 verschlossen. Der abnehmbare Deckel kann auf jede beliebige, dem Fachmann bekannte Weise befestigt werden, zum Beispiel durch Verschrauben oder die Verwendung eines Bajonettverschlusses oder einer Klemme oder Klammer. Für eine gasdichte Verbindung ist zwischen dem metallischen Rohr 103 und dem abnehmbaren Deckel 109 ein Dichtungselement 111 aufgenommen. Ein geeignetes Dichtungselement 111 ist insbesondere ein O-Ring.

Im abnehmbaren Deckel 109 ist ein Gasauslass 113 ausgebildet. Auf der Seite, die in das metallische Rohr 103 weist, ist der Gasauslass 113 mit einem Tropfenabscheider 115 versehen. Der Tropfenabscheider 115 ist vorzugsweise aus Glaswolle gefertigt, auf der sich Tröpfchen abscheiden wenn das gasförmige Reaktionsprodukt durch den Tropfenabscheider 115 in den Gasauslass 113 strömt.

Der Tropfenabscheider 115 wird an seiner Position im Deckel 109 durch eine Achse 117 eines Umlenkkörpers 119 gehalten. Der Umlenkkörper 119, der in Figur 5 gezeigt ist, umfasst drei Ablenkplatten 121. Neben drei Ablenkplatten 121, wie hier dargestellt, kann der Umlenkkörper 117 auch mehr oder weniger Ablenkplatten 121 aufweisen, beispielsweise 1 bis 20 Ablenkplatten 121, bevorzugt 1 bis 10 Ablenkplatten 121 und insbesondere 3 bis 6 Ablenkplatten 121. Die Seite 123 jeder Ablenkplatte 121, die zum ersten Ende 105 des metallischen Rohrs 103 weist, schließt einen Winkel α von 90° mit der Achse 117 des Umlenkkörpers 119 ein.

Die Seite 125 der Ablenkplatten 121, die zum zweiten Ende 107 des metallischen Rohres 103 weist, schließt einen Winkel β zwischen 90° und 150° mit der Achse 117 des Umlenkkörpers 119 ein, wobei der Winkel vorzugsweise größer als 90° ist.

Jede Ablenkplatte 121 ist so gestaltet, dass sich ein 0,05 bis 1 mm breiter Spalt 127 zwischen dem Rand 129 jeder Ablenkplatte 121 und der inneren Wandung 131 des metallischen Rohrs 103 bildet.

Der Flüssigkeitsabscheider 31 umfasst weiterhin eine Zufuhrleitung 133, durch die das flüssige und/oder kondensierbare Komponenten enthaltende Reaktionsprodukt zu einem Seitenzulauf 135 im metallischen Rohr 103 zugeführt wird. Die Zufuhrleitung 133 windet sich dabei spiralförmig um das metallische Rohr 103.

Während des Betriebs strömt das flüssige und/oder kondensierbare Komponenten enthaltende gasförmige Reaktionsprodukt in die Zufuhrleitung 133 und fließt durch die Zufuhrleitung 133 zum Seitenzulauf 135, durch den es in das Innere des metallischen Rohrs 103 strömt. Insbesondere wenn das gasförmige Reaktionsprodukt kondensierbare Komponenten enthält, wird das gasförmige Reaktionsprodukt in der Zufuhrleitung 133 gekühlt, so dass die kondensierbaren Komponenten beginnen zu kondensieren und flüssige Tropfen bilden. Zur Kühlung ist es zum Beispiel möglich, den gesamten Flüssigkeitsabscheider 31 in ein Kühlbad 35 einzubringen. Nachdem das gasförmige Reaktionsprodukt in das Innere des metallischen Rohrs 103 geströmt ist, fließt dieses in Richtung des Gasauslasses 113. Um den Gasauslass 113 zu erreichen muss das gasförmige Reaktionsprodukt die Ablenkplatten 121 passieren, wobei das gasförmige Reaktionsprodukt durch den Spalt 127 strömt. Dies führt zu einer Umlenkung und Beschleunigung des Gasstroms. Nach Durchströmen des Spalts 127 verlangsamt sich der Gasstrom und öffnet sich in den gesamten Raum oberhalb der Ablenkplatte 121. Dies wiederholt sich an jeder Ablenkplatte 121. Aufgrund ihrer Masse lagern sich die Tropfen, die sich im gasförmigen Reaktionsprodukt gebildet haben auf der Seite 123 der Ablenkplatten 121, die in Richtung des ersten Endes 105 des metallischen Rohrs 103 weist, ab. Die Tropfen, die sich auf den Ablenkplatten 121, der Achse 117 und der inneren Wandung 131 des metallischen Rohrs ablagern, agglomerieren und fließen zum unteren Ende 137 des metallischen Rohrs 103. Vom unteren Ende 137 des metallischen Rohrs 103 kann die Flüssigkeit durch einen Flüssigkeitsauslass 139 entnommen werden.

Um zu verhindern, dass Gas aus dem Flüssigkeitsabscheider 31 durch den Flüssigkeitsauslass 139 entnommen werden kann oder, wenn die Abtrennung der Flüssigkeit bei erhöhtem Druck oder einem Druck unterhalb des Umgebungsdrucks durchgeführt wird, kann der Flüssigkeitsauslass 139 durch ein geeignetes Ventil 141 verschlossen werden. Das Ventil 141 ermöglicht zum Beispiel die Entnahme von Flüssigkeit zu vorgegebenen Zeitpunkten oder sobald ein vorgegebener Füllstand erreicht ist. Wenn Flüssigkeit entnommen werden soll, sobald ein vorgegebener Füllstand erreicht ist, ist es besonders bevorzugt, einen Füllstandssensor einzusetzen, mit dem der Füllstand bestimmt werden kann. Hierzu kann entweder ein Füllstandssensor eingesetzt werden, der kontinuierlich den Füllstand im unteren Teil 137 des metallischen Rohrs 103 misst oder ein Sensor, der nur ein Signal liefert, sobald ein Füllstand erreicht wurde, bei dem der Sensor mit Flüssigkeit in Kontakt kommt. Um die Flüssigkeit aus dem Flüssigkeitsabscheider zu entnehmen, kann das Ventil 141 entweder manuell oder automatisiert betrieben werden. Wenn ein automatisches Ventil eingesetzt wird, ist es besonders bevorzugt, wenn es schließt, sobald ein vorgegebener unterer Füllstand erreicht wurde.

Insbesondere wenn nicht alle flüssigen Komponenten durch den Umlenkkörper 119 abgetrennt wurden, werden verbleibende Tropfen durch den Tropfenabscheider 115 abgetrennt, wenn das gasförmige Reaktionsprodukt durch den Tropfenabscheider 115 zum Gasauslass 113 strömt.

Wenn die Flüssigkeit im Tropfenabscheider 115 verbleibt und der Tropfenabscheider 115 sich mit Flüssigkeit vollsaugt oder der Tropfenabscheider 115 durch Ablagerungen den Gasauslass 113 verstopft, ist es notwendig den Tropfenabscheider 115 zu tauschen. Ein Vollsaugen oder Verstopfen des Tropfenabscheiders 115 kann zum Beispiel durch einen zunehmenden Druckverlust im Flüssigkeitsabscheider oder durch einen reduzierten Gasstrom erfasst werden.

Um den Tropfenabscheider 115 zu tauschen wird der abnehmbare Deckel 109 entfernt, so dass der Tropfenabscheider 115 zugänglich ist und entfernt werden kann. Der Tropfenabscheider 115 kann dann aus dem Deckel 109 entfernt und gereinigt oder durch einen neuen Tropfenabscheider 115 ersetzt werden.

Neben einem abnehmbaren Deckel 105 am zweiten Ende 107 des metallischen Rohrs ist es alternativ oder zusätzlich auch möglich, das metallische Rohr 103 am ersten Ende 105 mit einem abnehmbaren Deckel zu verschließen.

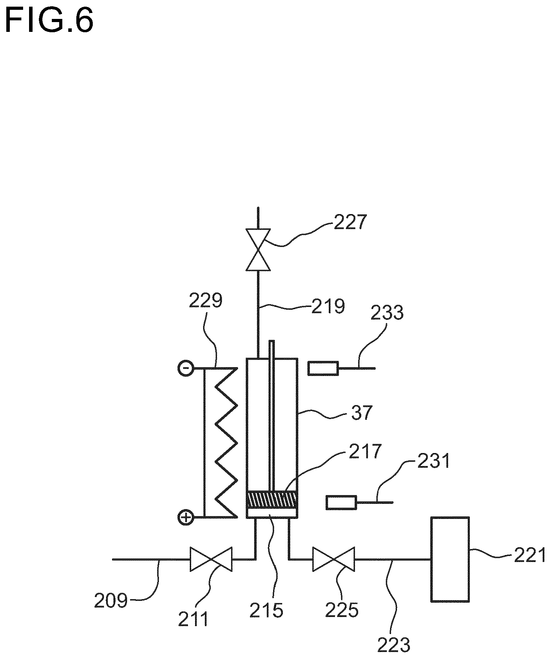

Figur 6 zeigt ein Probengefäß mit Analyseneinheit in einer ersten Ausführungsform.

Um das gasförmige Reaktionsprodukt untersuchen zu können, wird dieses im Probengefäß 37 gesammelt. Hierzu wird das gasförmige Reaktionsprodukt über eine Probenleitung 209 über ein erstes Ventil 211 in das Probengefäß 37 eingeleitet.

Um eine Probe zu entnehmen, wird das erste Ventil 211 geöffnet. Bei geöffnetem ersten Ventil 211 kann dann gasförmiges Reaktionsprodukt über die Probenleitung 209 in einen Probenraum 215 im Probengefäß 37 strömen. Der Probenraum 215 wird vorzugsweise, wie hier dargestellt, auf einer Seite von einem im Probengefäß 37 verschiebbaren Kolben 217 begrenzt. Mit dem Kolben 217 kann das Volumen des Probenraums 215 im Probengefäß 37 eingestellt werden. Zu Beginn der Probennahme ist der Kolben 217 vorzugsweise in einer ersten Position, in der das Volumen des Probenraums 215 minimal ist. Mit Beginn der Probennahme verschiebt sich dann der Kolben 217 in Richtung einer zweiten Position, in der das Volumen des Probenraums 215 maximal ist. Sobald der Kolben 217 die zweite Position erreicht hat oder die Probennahme beendet werden soll, bevor der Kolben die zweite Position 217 erreicht hat, wird das Ventil 211 geschlossen, so dass kein weiteres gasförmiges Reaktionsprodukt in den Probenraum 215 im Probengefäß 217 strömen kann.

Die Bewegung des Kolbens 217 kann zur Probennahme unterstützt werden, indem auf der dem Probenraum 215 abgewandten Seite des Kolbens 217 ein Druck angelegt wird, der niedriger ist als der Druck des gasförmigen Reaktionsprodukts. Dies führt gleichzeitig dazu, dass gasförmiges Reaktionsprodukt in den Probenraum 215 gesaugt wird. Um den niedrigeren Druck auf der dem Probenraum 215 abgewandten Seite des Kolbens 217 anzulegen, kann beispielsweise eine Gasleitung 219 auf der dem Probenraum 215 abgewandten Seite des Kolbens 217 in das Probengefäß 37 münden. Um den niedrigeren Druck anzulegen, wird durch die Gasleitung 219 Gas aus dem Probengefäß abgesaugt, so dass sich der Kolben 217 in Richtung seiner zweiten Position bewegt. Sobald die Probennahme beendet werden soll, wird das Absaugen des Gases beendet.

Das in dem Probenraum 215 enthalte gasförmige Reaktionsprodukt wird dann in einem nächsten Schritt einer Analyseneinheit 221 zugeführt. Hier kann jede beliebige Analyseneinheit eingesetzt werden, mit der die gewünschten Untersuchungen am Gasgemisch durchgeführt werden können. Übliche Analyseneinheiten sind insbesondere solche, mit denen die Zusammensetzung des gasförmigen Reaktionsprodukts bestimmt werden kann. Um das gasförmige Reaktionsprodukt der Analyseneinheit 221 zuführen zu können, ist die Analyseneinheit 221 über eine Messleitung 223 mit dem Probenraum 215 im Probengefäß 37 verbunden. Um die Messleitung 223 verschließen zu können, ist in der Messleitung 223 ein zweites Ventil 225 aufgenommen. Während der Probennahme ist das zweite Ventil 225 geschlossen.

Um die Probe der Analyseneinheit 221 zuzuführen, wird das zweite Ventil 225 geöffnet. Dann wird der Kolben 217 in Richtung seiner ersten Position bewegt, so dass das im Probenraum 215 enthaltene gasförmige Reaktionsprodukt durch die Bewegung des Kolbens 217 aus dem Probenraum 215 in die Messleitung 223 gedrückt und durch die Messleitung 223 der Analyseneinheit 221 zugeführt wird. Die Bewegung des Kolbens 217 kann dabei entweder mit einem geeigneten Antrieb erfolgen oder wie hier dargestellt mit Hilfe von Druckgas, das über die Gasleitung 219 in das Probengefäß einströmt und so auf die dem Probenraum 215 abgewandte Seite des Kolbens 217 wirkt. Durch den vom Druckgas ausgeübten Druck auf den Kolben 217 wird dieser in Richtung des Probenraums gedrückt, so dass das im Probenraum enthaltene gasförmige Reaktionsprodukt in die Messleitung 223 gedrückt wird. Sobald der Kolben 217 seine erste Position erreicht hat, in der das Volumen des Probenraums minimal ist, wird die Druckgaszufuhr beendet. Hierzu ist vorzugsweise ein drittes Ventil 227 in der Gasleitung 219 vorgesehen. Durch Schließen des dritten Ventils 227 wird die Druckgaszufuhr beendet.

Nach dem vollständigen Entleeren des Probenraums 215 kann dann eine erneute Probennahme erfolgen.

Insbesondere bei einem heißen gasförmigen Reaktionsprodukt ist es vorteilhaft, wenn das Probengefäß beheizbar ist. Hierzu wird vorzugsweise eine elektrische Beheizung 229 eingesetzt. Die elektrische Beiheizung kann zum Beispiel durch Heizwendeln, die das Probengefäß 37 umschließen, realisiert werden. Alternativ ist es auch möglich, einen Heizmantel einzusetzen.

Zur Steuerung der Bewegung des Kolbens 217 sind vorzugsweise Positionssensoren vorgesehen. Mit einem ersten Positionssensor 231 wird erfasst, ob sich der Kolben 217 in der ersten Position befindet und mit einem zweiten Positionssensor 233, ob sich der Kolben 217 in der zweiten Position befindet. Die Positionssensoren 231, 233 werden insbesondere genutzt, um die Bewegung des Kolbens durch Anlegen von Unterdruck oder Überdruck zu steuern. Wenn eine Probe genommen wird, wird die Gasentnahme zur Erzeugung eines Drucks unterhalb des Drucks des gasförmigen Reaktionsproduktes dann beendet, wenn der zweite Positionssensor 233 erfasst, dass der Kolben 217 seine zweite Position erreicht hat. Entsprechend wird die Druckgaszufuhr bei der Entnahme der Probe aus dem Probenraum 15 dann beendet, wenn mit dem ersten Positionssensor 231 erfasst wird, dass der Kolben 217 seine erste Position erreicht hat.

Alternativ zu der vorstehend beschriebenen Ausführungsform mit pneumatischer Bewegung des Kolbens 217 ist es auch möglich, den Kolben hydraulisch zu bewegen. In diesem Fall wird anstelle eines Gases eine Flüssigkeit eingesetzt, die aus dem Probengefäß 37 gesaugt wird, wenn sich der Kolben 217 in die zweite Position bewegen soll und in das Probengefäß 37 gedrückt wird, um den Kolben 217 in seine erste Position zu bewegen.

Neben der pneumatisch oder hydraulisch unterstützten Bewegung des Kolbens ist alternativ auch eine Bewegung des Kolbens mit Hilfe eines Antriebs, beispielsweise mit einem Schrittmotor möglich. Wenn ein Schrittmotor eingesetzt wird, kann direkt auch die Position des Kolbens erfasst werden, so dass in diesem Fall auf die Positionssensoren 231, 233 verzichtet werden kann. Wenn ein Antrieb für den Kolben eingesetzt wird, der keine Positionsbestimmung des Kolbens erlaubt, ist allerdings der Einsatz der Positionssensoren 231, 233 vorteilhaft, um die Bewegung des Kolbens in die jeweilige Richtung durch Abstellen des Antriebs zu beenden, sobald der entsprechende Positionssensor 231, 233 den Kolben erfasst hat.

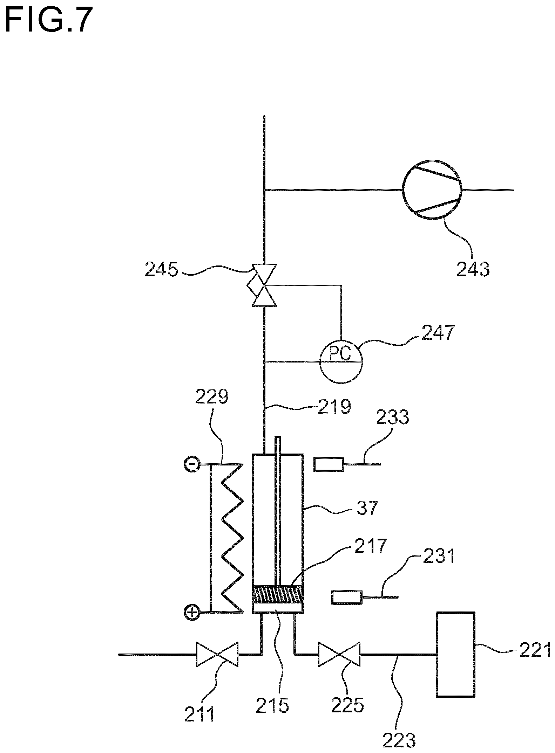

Figur 7 zeigt ein Probengefäß mit Druckregelung.

Um die Probenentnahme zu erleichtern, ist bei der in Figur 7 dargestellten Ausführungsform eine Vakuumpumpe 243 vorgesehen. Mit der Vakuumpumpe 243 kann ein Druck auf der dem Probenraum 215 abweichenden Seite des Kolbens 217 angelegt werden, der niedriger ist als der Druck im Abscheider. Hierdurch wird bei geöffnetem ersten Ventil 211 gasförmiges Reaktionsprodukt in den Probenraum 215 gesaugt. Die Vakuumpumpe 243 ist insbesondere dann vorteilhaft, wenn die Reaktion unter Umgebungsdruck oder einem Druck unterhalb des Umgebungsdrucks durchgeführt wird. Wenn die Reaktion bei einem Druck durchgeführt wird, der oberhalb dem Umgebungsdruck liegt, ist in der Regel ein Auslass an die Umgebung ausreichend, da in diesem Fall durch den Überdruck des gasförmigen Reaktionsprodukts das gasförmige Reaktionsprodukt in den Probenraum 215 gedrückt wird und den Kolben 217 nach oben bewegt. Um zu verhindern, dass der Kolben zu schnell nach oben gedrückt wird, ist es in diesem Fall möglich, den Kolben entweder mit einem Gewicht zu versehen oder vorzugsweise in dem Auslass an die Umgebung ein Ventil einzusetzen, das nur so weit geöffnet wird, dass der Kolben sich mit der gewünschten Geschwindigkeit hebt. Hierzu ist ein Aufbau ausreichend, wie er in Figur 6 dargestellt ist.

Damit das gasförmige Reaktionsprodukt aus dem Probenraum 215 entnommen werden kann, wird dann, wie vorstehend beschrieben ein Überdruck auf der dem Probenraum 215 gegenüberliegenden Seite des Kolbens 217 angelegt, so dass der Kolben 217 in Richtung des Probenraums 215 gedrückt wird und so das im Probenraum 215 enthaltene gasförmige Reaktionsprodukt aus dem Probenraum 215 durch die Messleitung 223 zur Analyseeinheit 221 geleitet wird.

Zur Steuerung des Kolbens 217 ist in der in Figur 7 dargestellten Ausführungsform ein regelbares Ventil 245 in der Gasleitung 219 aufgenommen. Hierzu wird in der Gasleitung 219 zwischen dem Probengefäß 37 und dem regelbaren Ventil 245 der Druck gemessen und mit einer Druckregelung 247 wird das Ventil gesteuert. Wenn der in der Gasleitung 219 gemessene Druck vom gewünschten Druck abweicht, wird das regelbare Ventil 245 entsprechend eingestellt. Bei einem zu niedrigen gemessenen Druck wird das regelbare Ventil 245 weiter geöffnet und bei einem zu hohen gemessenen Druck weiter geschlossen. Bei einem zu niedrigen gemessenen Druck wird während der Probenentnahme der Kolben 217 zu schnell in seine zweite Position bewegt und das Volumen des Probenraums 215 vergrößert, bei der Bewegung des Kolbens 217 in seine erste Position wird der Kolben 217 zu langsam bewegt und das im Probenraum 215 enthaltene gasförmige Reaktionsprodukt wird zu langsam aus dem Probenraum 215 in die Analyseneinheit 221 geleitet. Bei zu hohem gemessenen Druck wird während der Probenentnahme der Kolben 217 zu langsam bewegt, so dass die Probennahme nicht schnell genug erfolgt oder der Druck, der auf den Kolben 217 wirkt, sogar so hoch ist, dass sich dieser nicht bewegt und so keine Probe entnommen wird. Bei Bewegung des Kolbens 217 in seine erste Position bewirkt ein zu hoher Druck eine zu schnelle Bewegung in die erste Position, so dass das gasförmige Reaktionsprodukt aus dem Probenraum 215 zu schnell verdrängt wird.

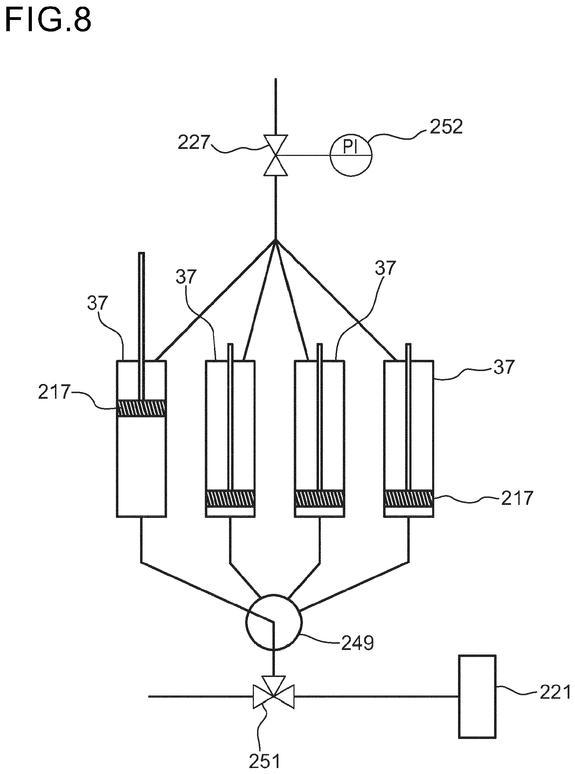

Um über einen längeren Zeitraum den Reaktionsverlauf zu analysieren oder mehrere aus mehreren aufeinanderfolgenden Reaktionen separate Proben zu entnehmen, sind mehrere Probengefäße mit mi der Probenleitung 209 verbunden, die nacheinander jeweils eine Probe aufnehmen können. Dies ist beispielhaft in Figur 8 dargestellt.

Um nacheinander mehrere Proben aus dem Reaktor entnehmen zu können, ist die Probenleitung 209 über ein Mehrwegeventil 249 mit mehreren Probengefäßen 37 verbunden. Anstelle eines Mehrwegeventils kann auch, wie in Figur 3 dargestellt, ein Verteilerkanal 51 genutzt werden, an den die Probengefäße 37 angeschlossen sind. Dem Mehrwegeventil 249 kann zusätzlich ein 3-Wege-Ventil 251 vorgeschaltet sein. Das 3-Wege-Ventil 251 wird dazu genutzt, entweder eine Verbindung aus dem Flüssigkeitsabscheider 31 zu den Probengefäßen 37 oder alternativ von den Probengefäßen 37 zur Analyseneinheit 221 herzustellen. Um eine Probe nehmen zu können, wird das 3-Wege-Ventil 251 so eingestellt, dass eine Verbindung vom Flüssigkeitsabscheider 31 zum Mehrwegeventil 249 geöffnet und die Verbindung vom Mehrwegeventil 249 zur Analyseneinheit 221 geschlossen ist. Mit dem Mehrwegeventil 249 wird dann jeweils die Verbindung in das Probengefäß 37 geöffnet, das während der Probennahme befüllt werden soll. Entsprechend wird für die Analyse der in den Probengefäßen 37 enthaltenen Proben das 3-Wege-Ventil 251 so geschaltet, dass die Verbindung vom 3-Wege-Ventil 251 zur Analyseneinheit 221 geöffnet ist und mit dem Mehrwegeventil 249 die Verbindung zu dem Probengefäß 37, aus dem die gewünschte Probe entnommen und zur Analyseneinheit 221 geleitet werden soll.

Mit dem Mehrwegeventil 249 ist es auf einfache Weise möglich, nacheinander mehrere Proben zu nehmen, indem nach Beendigung der Probennahme in ein Probengefäß 37 das Mehrwegeventil 249 umgeschaltet und die Verbindung in das nächste Probengefäß 37 geöffnet wird. Dies kann so oft wiederholt werden, bis in allen Probengefäßen 37 Proben enthalten sind. Entsprechend können dann auch die Proben aus den einzelnen Probengefäßen 37 nacheinander der Analyseneinheit 221 zugeführt werden, indem auch bei der Probenentnahme das Mehrwegeventil 249 zu einem weiteren Probengefäß 37 umgeschaltet wird, sobald ein Probengefäß 37 entleert ist. Um die Bewegung der Kolben 217 in den Probengefäßen zu unterstützen, ist auch hier jedes Probengefäß 237 mit einer Gasleitung 219 verbunden, so dass - wie vorstehend für die Figuren 6 und 7 beschrieben - die Bewegung des Kolbens 217 durch Aufbringen von Druck auf der dem Probenraum 215 abgewandten Seite oder durch Anlegen eines Unterdrucks auf der dem Probenraum 215 abgewandten Seite unterstützt werden kann. Hierbei ist es möglich, den Druck auf alle Kolben gleichzeitig auszuüben oder gleichzeitig an alle Kolben 217 Unterdruck anzulegen, da nur in dem Probengefäß 37 zu dem die Verbindung durch das Mehrwegeventil 49 geöffnet ist, der Kolben 217 zum Aufnehmen einer Probe oder zum Entleeren bewegt werden kann. In den übrigen Probengefäßen stellt sich wegen der geschlossenen Verbindung ein Druckgleichgewicht ein, durch die die Bewegung des Kolbens verhindert wird.

In der Gasleitung 219, durch die das Gas zur Unterstützung der Kolbenbewegung geleitet wird, ist auch hier das dritte Ventil 227 aufgenommen. Das Ventil kann mit einer Druckanzeige 252 ausgestattet sein, um so eine Kontrolle zu haben, ob gerade ein Probengefäß 37 befüllt oder entleert wird. Bei einem Druck unterhalb des Reaktordrucks wird ein Probengefäß 37 befüllt und bei einem Druck oberhalb des Reaktordrucks wird die Probe aus einem Probengefäß 37 der Analyseneinheit 221 zugeführt.

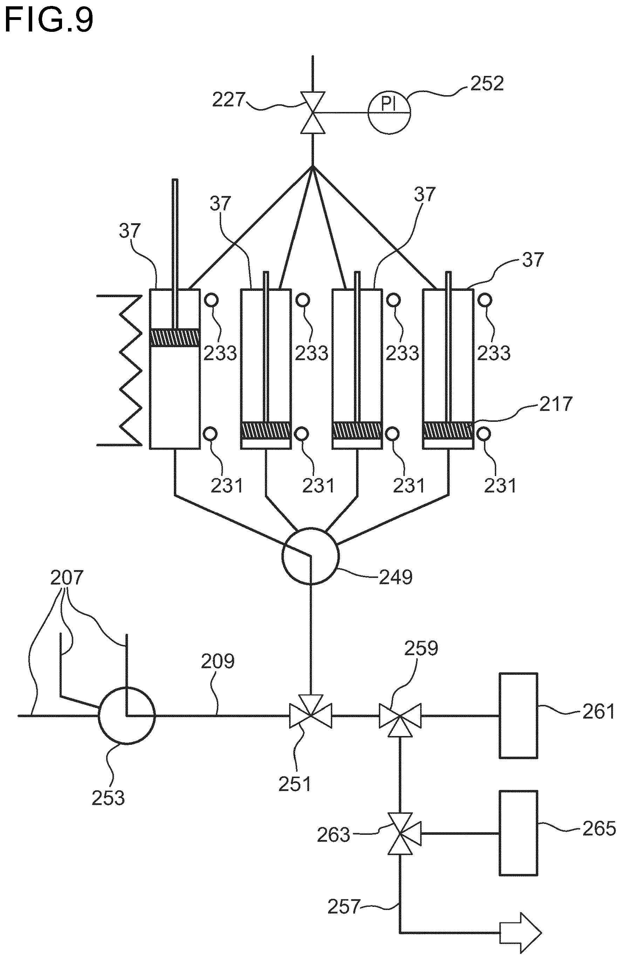

Figur 9 zeigt eine weitere Ausführungsform mit mehreren Probengefäßen und mehreren Analyseeinrichtungen.

Die in Figur 9 gezeigte Ausführungsform unterscheidet sich von der in Figur 8 dargestellten durch ein zweites Mehrwegeventil 253 über das mehrere Flüssigkeitsabscheider mit den Probengefäßen 37 verbunden werden können. Das Mehrwegeventil 253 kann in diesem Fall anstelle des in Figur 3 gezeigten Sammlers eingesetzt werden. Über das zweite Mehrwegeventil 253 gelangt das gasförmige Reaktionsprodukt zum 3-Wege-Ventil 251 und über dieses, entsprechend der Ausführungsform in Figur 8 zum Mehrwegeventil 249 und von dort in das Probengefäß 37 zu dem die Verbindung geöffnet ist. Durch das Mehrwegeventil 249 besteht die Möglichkeit, mehrere Proben nacheinander zu nehmen. Alternativ ist es auch möglich bei mehreren nacheinander durchgeführten Reaktionen in einem Reaktor jeweils nur eine Probe zu nehmen. In diesem Fall werden nach dem Nehmen einer Probe beide Mehrwegeventile 249, 253 geschaltet, um die Verbindung von einem weiteren Flüssigkeitsabscheider 31 in ein weiteres Probengefäß 37 zu öffnen. Dies kann so oft wiederholt werden, bis aus allen Flüssigkeitsabscheidern Proben genommen sind und alle Probenräume 215 eine Probe enthalten.

Anders als die vorstehend zu den Figuren 6 bis 8 beschriebenen Ausführungsformen umfasst der Analysenbereich mehrere Analyseneinheiten 261, 265. Hierzu sind in der Messleitung 223 mehrere 3-Wege-Ventile 259, 263 aufgenommen. Über jedes 3-Wege-Ventil 259, 263 kann entweder eine Verbindung zu einer Analyseneinheit 261, 265 geöffnet werden oder es wird eine Verbindung zu einem nachfolgenden 3-Wege-Ventil beziehungsweise einem Auslass 257 geöffnet. So ist es zum Beispiel möglich, zunächst das erste 3-Wege-Ventil 259 so zu schalten, dass gasförmiges Reaktionsprodukt der ersten Analyseneinheit 261 zugeführt wird. Anschließend wird das erste 3-Wege-Ventil 259 so geschaltet, dass das gasförmige Reaktionsprodukt an der ersten Analyseneinheit 261 vorbei zum zweiten 3-Wege-Ventil 263 geleitet wird. Das zweite 3-Wege-Ventil 263 ist dann so geschaltet, dass das gasförmige Reaktionsprodukt in die zweite Analyseneinheit 265 geleitet wird. Wenn keine Probe genommen werden soll, werden beide 3-Wege-Ventile 259, 263 so geschaltet, dass das gasförmige Reaktionsprodukt zum Auslass 257 gelangt. Hierbei ist es auch möglich, eine Probe jeweils nur zu einer Analyseneinheit 261, 265 zu leiten, wobei von der durchzuführenden Untersuchung abhängt, welche Analyseneinheit 261, 265 genutzt wird. Weiterhin ist es auch möglich, insbesondere bei länger dauernden Analysen, eine Probe der ersten Analyseneinheit 261 zuzuführen und während die Probe noch untersucht wird, eine weitere Probe aus einem anderen Probengefäß der zweiten Analyseneinheit 265. Wenn die Untersuchungen sehr lange dauern, ist es zur Beschleunigung der Untersuchungen auch möglich, noch weitere Analyseneinheiten einzusetzen, die jeweils parallel betrieben werden können.

### Beispiele

Um die Vorrichtung und das Verfahren beispielhaft zu illustrieren, wurden mehrere katalytische Crack-Reaktionen untersucht.

Bei der Durchführung der Untersuchungen wurde eine Vorrichtung mit einem vertikal ausgerichteten Rohrreaktor eingesetzt, wobei in einer ersten Serie von Experimenten ein Aufbau wie in Figur 1 dargestellt, in der der Katalysator von oben nach unten strömt und in einer zweiten Serie von Experimenten ein Aufbau wie in Figur 4 dargestellt, in der Katalysator von unten nach oben geströmt ist, eingesetzt wurde.

Der Reaktor wies eine Länge von 1,7 m und einen Innendurchmesser von 9,5 mm auf. Die Untersuchungen wurden bei einer Reaktortemperatur von 530°C durchgeführt, wobei sich die Temperaturangabe auf die Temperatur am Ausgang des Reaktors bezieht.

Zur Durchführung der Versuche wurde der Katalysator in den Katalysatorvorlagebehälter gefüllt. Hierbei wurde ein vorkalzinierter E-Cat verwendet, der zuvor gesiebt worden war, um die grobkörnigen Partikel mit einer Größe von 200 µm oder größer zu entfernen. Der hier eingesetzte Katalysatorvorlagebehälter wies ein Innenvolumen von einem Liter auf. Der Katalysatorvorlagebehälter ist mit einer Beheizungsvorrichtung ausgestattet, wobei der Katalysatorvorlagebehälter im unteren Teil einen konischen Auslauftrichter aufweist, der eine poröse Oberfläche aufweist. Die Außenfläche des porösen Bereichs steht mit einer Gaszufuhr in Wirkverbindung. Die Zuführung von Gas durch den porösen Bereich ermöglicht es, dass der Katalysator im Behälter in einem fluidisierten Zustand gelagert wird. Bei den hier durchgeführten Untersuchungen wurde der Katalysator bei einer Temperatur von 700°C im Katalysatorvorlagebehälter gelagert.

Zunächst wurde die Injektionseinheit kalibriert, um das als Edukt eingesetzte Öl mit einer konstanten Dosierrate von 7 g/ min in den Reaktor zu injizieren. Das eingesetzte Öl hatte eine spezifische Dichte von 0,9042 g/cm³, einen Schwefelanteil von 0,8 Gew.-%, einen UOPK-Faktor von 11,94 und einen CCR-Anteil von 0,19 Gew.-%. Der CCR-Anteil (Conradson carbon residue, auch bezeichnet als "Concarbon" or "CCR") ist ein Labortest mit dem die Verkokungsneigung eines Öls charakterisiert wird. In Tabelle 1 sind die Fraktionen, die sich bei einer Destillation ergaben, dargestellt.

**Tabelle 1: Zusammensetzung des Schweröls nach Fraktionen**

| Temperatur [°C] | verdampfter Anteil [%] |
|---|---|
| 329 | 10 |
| 385 | 30 |
| 423 | 50 |
| 471 | 70 |
| 525 | 90 |

Zur Durchführung der katalytischen Crack-Reaktion werden Katalysator und Öl im Eingangsbereich des Reaktors in Kontakt gebracht, wobei jeweils eine Crackung bei einem zuvor festgelegten Verhältnis von Katalysator zu eingesetztem Edukt (im Folgenden "Katalysator-zu-Öl-Verhältnis") durchgeführt wird. Die Einstellung des Katalysator-zu-Öl-Verhältnis erfolgt durch die Vorgabe und Variation der Dosierrate an zugeführtem Katalysator, wobei der Katalysator und Öl für eine definierte Dauer durch den Reaktor geleitet und in die Abscheidevorrichtung für den Katalysator transferiert werden. Als Zeitdauer für die Durchleitung des Katalysators durch den Reaktor wurde für jeden Versuch 1 Minute gewählt. Die Verweilzeit des Katalysators und des Öls im Reaktor, lag im Bereich von etwa 2 bis 3 Sekunden.

Insgesamt wurden dreizehn Crackungen mit dem Fließbettreaktor durchgeführt, wobei fünf Crackungen im aufwärts transportierenden Betrieb und acht Crackungen im abwärts transportierenden Betrieb durchgeführt wurden. Die Katalysator-zu-Öl-Verhältnisse lagen im Bereich von 5,4 bis 13,5 für Untersuchungen im abwärts transportierenden Betrieb und im Bereich von 9 bis 15 für die Untersuchungen im aufwärts transportierenden Betrieb. Entsprechend lagen die Mengen an eingesetztem Katalysator bei den Untersuchungen im abwärts transportierenden Betrieb im Bereich von 38 g bis 95 g und bei den Untersuchungen im aufwärts transportierenden Betrieb im Bereich von 63 g bis 105 g. Anzumerken ist hierbei, dass die Untersuchungen im aufwärts transportierenden Betrieb beim Katalysator-zu-Öl-Verhältnis dadurch limitiert sind, dass ein Teil der Transportenergie zur Beförderung des Katalysators durch die Crackprodukte geliefert wird. Ein Katalysator-zu-Ölverhältnis im Bereich von 15 oder 20 ist am Limit, da ansonsten nicht ausreichende Mengen an gasförmigem Produkt vorhanden sind, die den Katalysator nach oben treiben. Die Crackungen wurden alle bei einem Druck von 2,5 bar durchgeführt, wobei der Druck über das Druckregelventil zwischen dem Flüssigkeitsabscheider und dem Probengefäß für das gasförmige Reaktionsprodukt geregelt wurde. Der Katalysator wird in der Abscheidevorrichtung aufgefangen und das Strippen beziehungsweise das Entfernen der Crackprodukte und nicht umgesetzten Edukte beginnt bereits während des Auffangens des ersten Teils des Katalysators innerhalb der Abscheidevorrichtung.

Nach Abschluss der Crack-Reaktion wird das Abstrippen der flüchtigen Komponenten an dem in der Abscheidevorrichtung aufgesammelten Katalysator noch für eine Zeitdauer von 10 Minuten fortgesetzt, wobei zum Strippen ein trockner Stickstoffstrom mit einer Flussrate von einem Liter pro Minute gewählt wurde. Das Strippgas wurde zunächst von der Abscheidevorrichtung ausgehend durch den Flüssigkeitsabscheider geleitet und anschließend über eine mit Druckregelventil versehene Leitung zu einem Probengefäß. Im vorliegenden Fall war das Probengefäß so ausgelegt, dass dieses ein Gasvolumen von 15 Liter auffangen konnte. Nach jedem Versuch wurde jeweils sowohl die Masse des in der Abscheidevorrichtung aufgenommene Katalysatormaterials als auch die im Flüssigkeitsabscheider aufgenommene Menge an Flüssigkeit durch eine Wägung bestimmt. Darüber hinaus wurde auch die Menge an Gasvolumen bestimmt, die im Probengefäß aufgefangen wurde. Weiterhin wurde die Menge an Koks bestimmt, die sich auf dem Katalysator abgeschieden hatte.

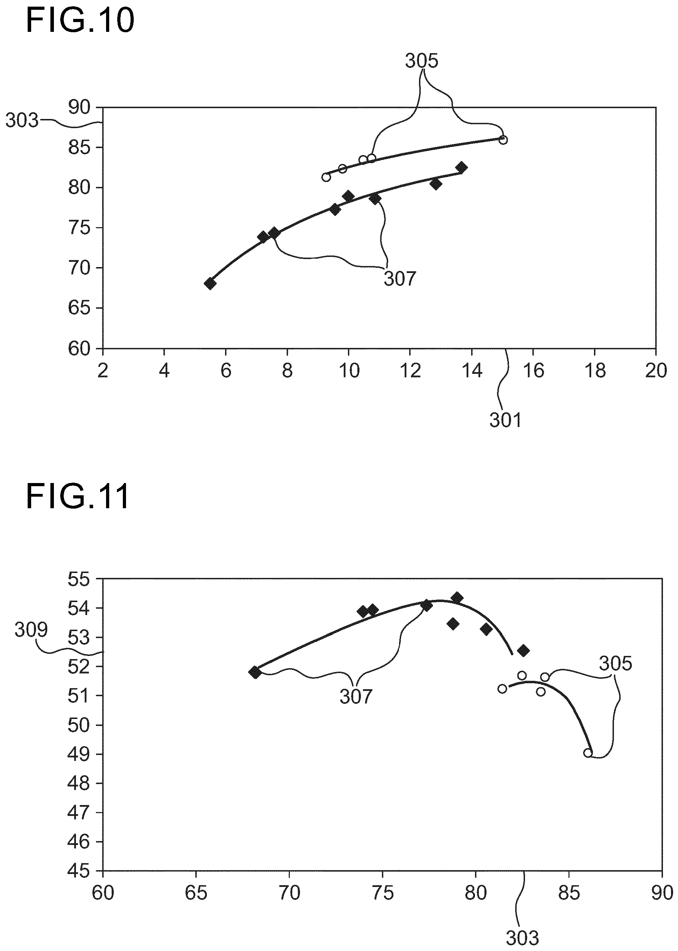

Zur Auswertung der Versuche wurde eine analytische Charakterisierung der Flüssigkeiten und der Gase mittels Gaschromatographie durchgeführt. Die Ergebnisse dieser Untersuchungen sind in den Figuren 10 bis 12 dargestellt, wobei durch Messpunkte für einen Reaktor mit von oben nach unten strömendem Katalysator einerseits und einem Reaktor mit von unten nach oben strömendem Katalysator andererseits jeweils eine Näherungskurve gelegt wurde.

Figur 10 zeigt auf der Abszisse das eingestellte Katalysator-zu-Öl-Verhältnis 301 und auf der Ordinate den Umsatz 303. Für einen Reaktor mit von unten nach oben strömendem Katalysator, dargestellt durch ungefüllte Kreise 305, ergibt sich dabei ein etwas höherer Umsatz als bei einem Reaktor mit von oben nach unten strömenden Katalysator, dargestellt durch gefüllte Rauten 307, bei gleichem Katalysator-zu-Öl-Verhältnis. Für die einzelnen Versuche wurde jeweils nur das Katalysator-zu-Öl-Verhältnis variiert, die weiteren Prozessbedingungen (Druck, Temperatur und Menge an Inertgas) wurden konstant gehalten.

Der Umsatz, der in Figur 10 dargestellt ist, ist die beim Fluid Catalytic Cracking erhaltene Ausbeute an Gasöl (Light Cycle Oil LCO) bezogen auf die eingesetzte Menge an Schweröl. Konversion bezeichnet die Summe an erhaltenen Gasen, Benzin und Koks, wobei als Benzin alle Komponenten bezeichnet werden, die einen Siedepunkt im Bereich von 28 bis 216°C aufweisen.

Der höhere Umsatz bei einem von unten nach oben strömenden Katalysator 305 ergibt sich dabei insbesondere aus der längeren Verweilzeit des Katalysators im Reaktor. Diese resultiert aus der geringeren Geschwindigkeit, mit der der Katalysator mit den durchströmenden Gasen nach oben transportiert wird. Bei einem von oben nach unten strömenden Katalysator erfolgt die Bewegung insbesondere aufgrund der Schwerkraft. Sowohl bei dem Reaktor mit von oben nach unten strömendem Katalysator als auch bei dem Reaktor mit von unten nach oben strömendem Katalysator werden Katalysator und Edukte im Gleichstrom zugeführt.

In Figur 11 ist die Ausbeute an Benzin in Bezug auf den Umsatz dargestellt, wobei der Umsatz 303 hier auf der Abszisse dargestellt ist und die Ausbeute an Benzin 309 auf der Ordinate. Es lässt sich erkennen, dass in einem Reaktor mit von unten nach oben strömendem Katalysator 305 eine geringere Ausbeute an Benzin bei höherem Umsatz erzielt wird, wohingegen bei einem Reaktor mit von oben nach unten strömendem Katalysator 307 eine höhere Ausbeute an Benzin bei niedrigerem Umsatz erzielt wird. Der Umsatz entspricht dabei dem in Figur 10 in Bezug auf das Katalysator-zu-Öl-Verhältnis dargestellten.

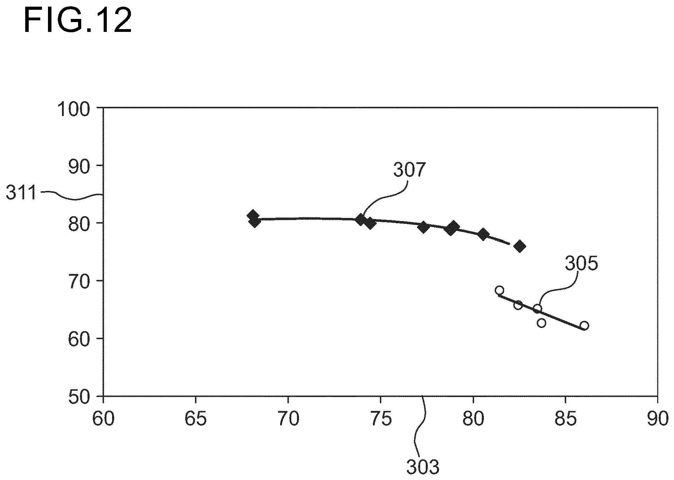

Ein ähnliches Ergebnis zeigt sich auch für die Ausbeute an Propen aus dem eingesetzten Öl, die in Figur 12 dargestellt ist. Hier ist die Ausbeute 311, die auf der Ordinate dargestellt ist, definiert als Ausbeute an Propen dividiert durch die Summe aus Ausbeute an Propen und Ausbeute an Propan. Da es sich bei Propen um einen Wertstoff handelt, der zum Beispiel bei der Herstellung von Polypropylen eingesetzt wird, ist eine möglichst hohe Ausbeute an Propen gewünscht.

Auch hier ist zu erkennen, dass in einem Reaktor mit von oben nach unten strömendem Katalysator 307 eine höhere Ausbeute bei geringerem Umsatz erzielt wird als in einem Reaktor mit von unten nach oben strömendem Katalysator 305.

Die niedrigeren Ausbeuten an Benzin und an Propen im Reaktor mit von unten nach oben strömendem Katalysator ergeben sich ebenfalls aus der längeren Verweilzeit. Nachdem ein maximaler Umsatz zu den entsprechenden Produkten erfolgt ist, führt eine längere Verweilzeit zu einer weiteren Reaktion, bei der das Benzin weiter zu kurzkettigeren Kohlenwasserstoffen gespalten wird und das Propen weiter zu Propan hydriert wird.

### Bezugszeichenliste

- 1: Vorrichtung zur Untersuchung heterogen katalysierter Reaktionen
- 3: Reaktor
- 5, 5': Katalysatorvorlagebehälter
- 7: Vorheizstrecke
- 9: erstes Ventil
- 11: Eduktvorlagebehälter
- 12: Zuführung
- 13: Pumpe
- 15: Verbindungsleitung
- 17: Abscheidevorrichtung
- 19: Wirkverbindung
- 21: Differenzdruckregler
- 23: Ventil
- 25: Verbindungsleitung zur Abscheidevorrichtung
- 27: Verbindungsleitung zum Katalysatorvorlagebehälter
- 29: Drucksensor
- 31: Flüssigkeitsabscheider
- 33: Filter
- 35: Kühlbad
- 37: Probengefäß
- 39: Katalysatorentnahmevorrichtung
- 41: Probengefäß
- 43: Karussell
- 45: Verteilerkanal
- 47: Ventil
- 49: Sammler
- 51: Verteilerkanal
- 53: Rohrbogen

- 103: metallisches Rohr
- 105: erstes Ende
- 107: zweites Ende
- 109: abnehmbarer Deckel
- 111: Dichtungselement
- 113: Gasauslass
- 115: Tropfenabscheider
- 117: Achse
- 119: Umlenkkörper
- 121: Ablenkplatte
- 123: zum ersten Ende 105 weisende Seite
- 125: zum zweiten Ende 107 weisende Seite
- 127: Spalt
- 129: Rand
- 131: innere Wandung
- 133: Zufuhrleitung
- 135: Seitenzulauf
- 137: unteres Ende
- 139: Flüssigkeitsauslass
- 141: Ventil

- 207: Ablaufleitung
- 209: Probenleitung
- 211: erstes Ventil
- 215: Probenraum
- 217: Kolben
- 219: Gasleitung
- 221: Analyseneinheit
- 223: Messleitung
- 225: zweites Ventil
- 227: drittes Ventil
- 229: Beheizung
- 231: erster Positionssensor
- 233: zweiter Positionssensor
- 243: Pumpe
- 245: regelbares Ventil
- 247: Druckregelung
- 249: Mehrwegeventil
- 251: 3-Wege-Ventil
- 252: Druckanzeige
- 253: zweites Mehrwegeventil
- 255: gemeinsamer Mischer
- 257: Auslass

## Patentansprüche

1. Vorrichtung zur Untersuchung von heterogen katalysierten Reaktionen, umfassend mindestens einen Reaktor (3), durch den ein partikelförmiger Katalysator strömt, und mindestens eine Eduktzufuhr, wobei stromab jedes Reaktors (3) eine Abscheidevorrichtung (17) zur Abtrennung des partikelförmigen Katalysators von einem kondensierbare Gase enthaltenden Reaktionsprodukt angeordnet ist und stromab der Abscheidevorrichtung (17) ein Flüssigkeitsabscheider (31) zur Abtrennung von flüssigen Bestandteilen aus dem Reaktionsprodukt, **dadurch gekennzeichnet, dass** der Flüssigkeitsabscheider (31) ein metallisches Rohr (103) und einen Umlenkkörper (119) aufweist, wobei das metallische Rohr (103) an seinen Enden geschlossen ist und der Umlenkkörper (119) im metallischen Rohr (103) aufgenommen ist, und das metallische Rohr (103) an einem ersten Ende (105) einen Seitenzulauf (135) und einen Gasauslass (113) an einem zweiten Ende (107) aufweist und der Gasauslass (113) mit mindestens einem Probengefäß (37) verbunden ist, wobei der Reaktor (3) ein Rohrreaktor ist, den der partikelförmige Katalysator von oben nach unten durchströmen kann, die Abscheidevorrichtung (17) mit einer Katalysatorentnahmevorrichtung (39) verbunden ist, über die Katalysator in Probengefäße (41), die auf einem Karussell (43) angeordnet sind, transferiert werden kann und die Abscheidevorrichtung (17) weiterhin mit einem Verteilerkanal (45) verbunden ist, mit dem mehrere Flüssigkeitsabscheider (31) verbunden sind und wobei jeweils ein Flüssigkeitsabscheider (31) mit einem Probengefäß (37) zur Aufnahme von gasförmigem Reaktionsprodukt verbunden ist und/oder wobei mehrere Flüssigkeitsabscheider (31) über einen Verteilerkanal (51) mit mehreren Probengefäßen (37) zur Aufnahme des gasförmigen Reaktionsprodukts verbunden sind.

2. Vorrichtung gemäß Anspruch 1, **dadurch gekennzeichnet, dass** ein Katalysatorvorlagebehälter (5, 5') umfasst ist, aus dem der partikelförmige Katalysator dem Reaktor (3) über eine Dosierstelle zugeführt wird und/oder dass ein Katalysatorumlauf umfasst ist, so dass der in der Abscheidevorrichtung (17) abgetrennte Katalysator wieder zu der Dosierstelle am Einlass in den Reaktor (3) zugeführt werden kann.

3. Vorrichtung gemäß Anspruch 1 oder 2, **dadurch gekennzeichnet, dass** der Katalysatorvorlagebehälter (5, 5') und die Abscheidevorrichtung (17) eine Wirkverbindung (19) aufweisen, die mit einem Differenzdruckregler (21) ausgestattet ist, der ein kontinuierlich wirkendes Ventil (23) ansteuert, wobei die Ausgangsseite des kontinuierlich wirkenden Ventils entweder eine Verbindungsleitung (25) zur Abscheidevorrichtung (17) oder eine Abluftleitung aufweist, und/oder in einer Wirkverbindung von Flüssigkeitsabscheider (17) und Probengefäß (37) ein Druckregelventil angeordnet ist.

4. Vorrichtung gemäß einem der Ansprüche 1 bis 3, **dadurch gekennzeichnet, dass** jedes Probengefäß (37) ein einstellbares Volumen aufweist.

5. Vorrichtung gemäß einem der Ansprüche 1 bis 4, **dadurch gekennzeichnet, dass** bei einer Vorrichtung mit einem Reaktor (3) der Reaktor (3) mit mindestens zwei Probengefäßen (37) verbunden ist und bei einer Vorrichtung mit mehr als einem Reaktor (3) jeder Reaktor (3) mit mindestens einem Probengefäß (37) verbunden ist.

6. Vorrichtung gemäß einem der Ansprüche 1 bis 5, **dadurch gekennzeichnet, dass** jeder Reaktor (3) ein Rohrreaktor ist, der mit einem Winkel im Bereich von 45 bis 90° zur Horizontalen ausgerichtet ist, wobei der partikelförmige Katalysator den Rohrreaktor von oben nach unten oder von unten nach oben durchströmen kann, wobei jeder Rohrreaktor vorzugsweise eine Länge im Bereich von 0,3 bis 3 m und einen Durchmesser im Bereich von 3 bis 100 mm aufweist.

7. Vorrichtung gemäß einem der Ansprüche 1 bis 6, **dadurch gekennzeichnet, dass** mindestens ein Reaktor (3) ein Rohrreaktor ist, den der partikelförmige Katalysator von unten nach oben durchströmen kann, wobei der Katalysatorbehälter (5, 5') über einen Rohrbogen (53) mit der Dosierstelle verbunden ist, wobei der Rohrbogen (53) einen Radius im Bereich von 25 bis 75 mm aufweist.

8. Vorrichtung gemäß einem der Ansprüche 1 bis 7, **dadurch gekennzeichnet, dass** alle Flüssigkeitsabscheider (31) über einen gemeinsamen Verteilerkanal (51) mit mehreren Probengefäßen (37) zur Aufnahme des gasförmigen Reaktionsprodukts verbunden sind.

9. Vorrichtung gemäß einem der Ansprüche 1 bis 8, **dadurch gekennzeichnet, dass** der Flüssigkeitsabscheider (31) einen Tropfenabscheider (115) umfasst, der zwischen dem Umlenkkörper (119) und dem Gasauslass (113) positioniert ist und/oder dass der Flüssigkeitsabscheider (31) eine Zufuhrleitung (133) umfasst, die mit dem Seitenzulauf (135) verbunden ist und das metallische Rohr (103) spiralförmig umläuft.

10. Vorrichtung gemäß einem der Ansprüche 1 bis 9, **dadurch gekennzeichnet, dass** der Umlenkkörper (119) eine zentrale Achse (117) und 1 bis 20 Ablenkplatten (121) aufweist.

11. Verfahren zur Untersuchung heterogen katalysierter Reaktionen, umfassend:
(a) Zugabe von flüssigen und/oder gasförmigen Edukten und eines partikelförmigen Katalysators in jeden der Reaktoren(3) einer Vorrichtung (1) gemäß einem der Ansprüche 1 bis 10;
(b) Umsetzen der flüssigen und/oder gasförmigen Edukte in Gegenwart des partikelförmigen Katalysators in jedem Reaktor (3), wobei ein kondensierbare und/oder flüssige Komponenten enthaltendes gasförmiges Reaktionsprodukt entsteht;
(c) Abtrennen des partikelförmigen Katalysators von dem kondensierbare und/oder flüssige Komponenten enthaltenden gasförmigen Reaktionsprodukt;
(d) gegebenenfalls Kühlen des kondensierbare und/oder flüssige Komponenten enthaltenden gasförmigen Reaktionsprodukts, um die kondensierbaren Komponenten zu kondensieren;
(e) Abtrennen der kondensierten und/oder flüssigen Komponenten in dem Flüssigkeitsabscheider (31);
(f) Entnehmen einer Probe des gasförmigen Reaktionsprodukts nach Abtrennung der kondensierten und/oder flüssigen Komponenten zu einem vorgegebenen Zeitpunkt in das Probengefäß (37), wobei aus dem gasförmigen Reaktionsprodukt jedes Reaktors (3) zum vorgegebenen Zeitpunkt eine Probe entnommen wird oder gepulste Entnahme von Proben, wobei mit jedem Entnahmepuls eine Probe des gasförmigen Reaktionsprodukts in ein neues Probengefäß (37) eingebracht wird;
(g) Untersuchung der in den Probengefäßen (37) enthaltenen Proben;
(h) gegebenenfalls Wiegen der Flüssigkeitsabscheider (31) zur Bestimmung der Masse der abgetrennten kondensierbaren und/oder flüssigen Komponenten.

12. Verfahren gemäß Anspruch 11, **dadurch gekennzeichnet, dass** der partikelförmige Katalysator aus einem Katalysatorvorlagebehälter (5, 5') zugeführt wird, wobei der partikelförmige Katalysator in dem Katalysatorvorlagebehälter (5, 5') vorzugsweise vorgewärmt wird.

13. Verfahren gemäß Anspruch 11 oder 12, **dadurch gekennzeichnet, dass** der Katalysator eine Verweilzeit im Reaktor (3) im Bereich von 0,1 bis 10 s aufweist.

14. Verfahren gemäß einem der Ansprüche 11 bis 13, **dadurch gekennzeichnet, dass** mindestens ein flüssiges oder gasförmiges Edukt zugegeben wird und, unter der Maßgabe, dass das Verfahren in einer Anordnung mit abwärts transportiertem pulverförmigen Katalysator durchgeführt wird, das Massenverhältnis von Katalysator zu Edukt im Bereich von 1 bis 100 liegt oder, unter der Maßgabe, dass das Verfahren in einer Anordnung mit aufwärts transportiertem pulverförmigen Katalysator durchgeführt wird, das Massenverhältnis von Katalysator zu Edukt im Bereich von 1 bis 20 liegt.

15. Verfahren gemäß einem der Ansprüche 11 bis 14, **dadurch gekennzeichnet, dass** die heterogen katalysierte Reaktion eine katalytische Crack-Reaktion ist.

## Claims

1. Device for investigating heterogeneously catalyzed reactions, comprising at least one reactor (3) through which a particulate catalyst flows, and at least one reactant feed, wherein downstream of each reactor (3) a separation device (17) is arranged for separating the particulate catalyst from a reaction product containing condensable gases, and downstream of the separation device (17) a liquid separator (31) for separating liquid components from the reaction product, **characterized in that** the liquid separator (31) comprises a metallic tube (103) and a deflection body (119), wherein the metallic tube (103) is closed at its ends and the deflection body (119) is received in the metallic tube (103), and the metallic tube (103) has a side inlet (135) at a first end (105) and a gas outlet (113) at a second end (107), and the gas outlet (113) is connected to at least one sample vessel (37), wherein the reactor (3) is a tubular reactor through which the particulate catalyst can flow from top to bottom, the separation device (17) is connected to a catalyst withdrawal device (39) via which catalyst can be transferred into sample vessels (41) arranged on a carousel (43), and the separation device (17) is further connected to a distribution channel (45) to which a plurality of liquid separators (31) are connected, and wherein in each case one liquid separator (31) is connected to one sample vessel (37) for receiving gaseous reaction product and/or wherein a plurality of liquid separators (31) are connected via a distribution channel (51) to a plurality of sample vessels (37) for receiving the gaseous reaction product.

2. Device according to claim 1, **characterized in that** a catalyst feed vessel (5, 5') is comprised, from which the particulate catalyst is supplied to the reactor (3) via a metering point, and/or that a catalyst recycle is comprised, so that the catalyst separated in the separation device (17) can be returned to the metering point at the inlet of the reactor (3).

3. Device according to claim 1 or 2, **characterized in that** the catalyst feed vessel (5, 5') and the separation device (17) have an operative connection (19) equipped with a differential pressure controller (21) that controls a continuously acting valve (23), wherein the outlet side of the continuously acting valve has either a connecting line (25) to the separation device (17) or an exhaust line, and/or a pressure control valve is arranged in an operative connection between the liquid separator (17) and the sample vessel (37).

4. Device according to any one of claims 1 to 3, **characterized in that** each sample vessel (37) has an adjustable volume.

5. Device according to any one of claims 1 to 4, **characterized in that** in a device with one reactor (3) the reactor (3) is connected to at least two sample vessels (37), and in a device with more than one reactor (3) each reactor (3) is connected to at least one sample vessel (37).

6. Device according to any one of claims 1 to 5, **characterized in that** each reactor (3) is a tubular reactor oriented at an angle in the range of 45 to 90° to the horizontal, wherein the particulate catalyst can flow through the tubular reactor from top to bottom or from bottom to top, wherein each tubular reactor preferably has a length in the range of 0.3 to 3 m and a diameter in the range of 3 to 100 mm.

7. Device according to any one of claims 1 to 6, **characterized in that** at least one reactor (3) is a tubular reactor through which the particulate catalyst can flow from bottom to top, wherein the catalyst vessel (5, 5') is connected to the metering point via a pipe bend (53), wherein the pipe bend (53) has a radius in the range of 25 to 75 mm.

8. Device according to any one of claims 1 to 7, **characterized in that** all liquid separators (31) are connected via a common distribution channel (51) to a plurality of sample vessels (37) for receiving the gaseous reaction product.

9. Device according to any one of claims 1 to 8, **characterized in that** the liquid separator (31) comprises a droplet separator (115) positioned between the deflection body (119) and the gas outlet (113), and/or that the liquid separator (31) comprises a feed line (133) connected to the side inlet (135) and spirally surrounding the metallic tube (103).

10. Device according to any one of claims 1 to 9, **characterized in that** the deflection body (119) has a central axis (117) and 1 to 20 deflection plates (121).

11. Method for investigating heterogeneously catalyzed reactions, comprising:
(a) adding liquid and/or gaseous reactants and a particulate catalyst into each of the reactors (3) of a device (1) according to any one of claims 1 to 10;
(b) reacting the liquid and/or gaseous reactants in the presence of the particulate catalyst in each reactor (3), whereby a gaseous reaction product containing condensable and/or liquid components is formed;
(c) separating the particulate catalyst from the gaseous reaction product containing condensable and/or liquid components;
(d) optionally cooling the gaseous reaction product containing condensable and/or liquid components in order to condense the condensable components;
(e) separating the condensed and/or liquid components in the liquid separator (31);
(f) withdrawing a sample of the gaseous reaction product after separation of the condensed and/or liquid components at a predetermined point in time into the sample vessel (37), wherein a sample is withdrawn from the gaseous reaction product of each reactor (3) at the predetermined point in time, or pulsed withdrawal of samples, wherein with each withdrawal pulse a sample of the gaseous reaction product is introduced into a new sample vessel (37);
(g) analyzing the samples contained in the sample vessels (37);
(h) optionally weighing the liquid separators (31) to determine the mass of the separated condensable and/or liquid components.

12. Method according to claim 11, **characterized in that** the particulate catalyst is supplied from a catalyst feed vessel (5, 5'), wherein the particulate catalyst in the catalyst feed vessel (5, 5') is preferably preheated.

13. Method according to claim 11 or 12, **characterized in that** the catalyst has a residence time in the reactor (3) in the range of 0.1 to 10 s.

14. Method according to any one of claims 11 to 13, **characterized in that** at least one liquid or gaseous reactant is added and, provided that the method is carried out in an arrangement with downwardly transported powdered catalyst, the mass ratio of catalyst to reactant is in the range of 1 to 100, or, provided that the method is carried out in an arrangement with upwardly transported powdered catalyst, the mass ratio of catalyst to reactant is in the range of 1 to 20.

15. Method according to any one of claims 11 to 14, **characterized in that** the heterogeneously catalyzed reaction is a catalytic cracking reaction.

## Revendications

1. Dispositif pour l'étude de réactions à catalyse hétérogène, comprenant au moins un réacteur (3) traversé par un catalyseur particulaire, et au moins une alimentation en réactifs, un dispositif de séparation (17) étant disposé en aval de chaque réacteur (3) pour séparer le catalyseur particulaire d'un produit de réaction contenant des gaz condensables, et un séparateur de liquide (31) étant disposé en aval du dispositif de séparation (17) pour séparer les constituants liquides du produit de réaction, **caractérisé en ce que** le séparateur de liquide (31) comprend un tube métallique (103) et un corps déflecteur (119), le tube métallique (103) étant fermé à ses extrémités et le corps déflecteur (119) étant logé dans le tube métallique (103), et le tube métallique (103) présentant une entrée latérale (135) à une première extrémité (105) et une sortie de gaz (113) à une seconde extrémité (107), la sortie de gaz (113) étant reliée à au moins un récipient d'échantillon (37), le réacteur (3) étant un réacteur tubulaire que le catalyseur particulaire peut traverser de haut en bas, le dispositif de séparation (17) étant relié à un dispositif de prélèvement de catalyseur (39) par lequel le catalyseur peut être transféré dans des récipients d'échantillon (41) disposés sur un carrousel (43), et le dispositif de séparation (17) étant en outre relié à un canal de distribution (45) auquel sont raccordés plusieurs séparateurs de liquide (31), chaque séparateur de liquide (31) étant relié à un récipient d'échantillon (37) pour la collecte du produit de réaction gazeux et/ou plusieurs séparateurs de liquide (31) étant reliés via un canal de distribution (51) à plusieurs récipients d'échantillon (37) pour la collecte du produit de réaction gazeux.

2. Dispositif selon la revendication 1, **caractérisé en ce qu'**il comprend un réservoir de catalyseur (5, 5') à partir duquel le catalyseur particulaire est acheminé au réacteur (3) via un point de dosage et/ou qu'il comprend une recirculation de catalyseur, de sorte que le catalyseur séparé dans le dispositif de séparation (17) peut être réacheminé vers le point de dosage à l'entrée du réacteur (3).

3. Dispositif selon la revendication 1 ou 2, **caractérisé en ce que** le réservoir de catalyseur (5, 5') et le dispositif de séparation (17) présentent une liaison fonctionnelle (19) équipée d'un régulateur de pression différentielle (21) qui commande une vanne à action continue (23), le côté sortie de la vanne à action continue présentant soit une conduite de liaison (25) vers le dispositif de séparation (17), soit une conduite d'évacuation d'air, et/ou une vanne de régulation de pression étant disposée dans une liaison fonctionnelle entre le séparateur de liquide (17) et le récipient d'échantillon (37).

4. Dispositif selon l'une des revendications 1 à 3, **caractérisé en ce que** chaque récipient d'échantillon (37) présente un volume réglable.

5. Dispositif selon l'une des revendications 1 à 4, **caractérisé en ce que**, dans le cas d'un dispositif comportant un réacteur (3), le réacteur (3) est relié à au moins deux récipients d'échantillon (37), et dans le cas d'un dispositif comportant plus d'un réacteur (3), chaque réacteur (3) est relié à au moins un récipient d'échantillon (37).

6. Dispositif selon l'une des revendications 1 à 5, **caractérisé en ce que** chaque réacteur (3) est un réacteur tubulaire orienté selon un angle compris entre 45 et 90° par rapport à l'horizontale, le catalyseur particulaire pouvant traverser le réacteur tubulaire de haut en bas ou de bas en haut, chaque réacteur tubulaire présentant de préférence une longueur comprise entre 0,3 et 3 m et un diamètre compris entre 3 et 100 mm.

7. Dispositif selon l'une des revendications 1 à 6, **caractérisé en ce qu'**au moins un réacteur (3) est un réacteur tubulaire que le catalyseur particulaire peut traverser de bas en haut, le réservoir de catalyseur (5, 5') étant relié au point de dosage via un coude de tube (53), le coude de tube (53) présentant un rayon compris entre 25 et 75 mm.

8. Dispositif selon l'une des revendications 1 à 7, **caractérisé en ce que** tous les séparateurs de liquide (31) sont reliés via un canal de distribution commun (51) à plusieurs récipients d'échantillon (37) pour la collecte du produit de réaction gazeux.

9. Dispositif selon l'une des revendications 1 à 8, **caractérisé en ce que** le séparateur de liquide (31) comprend un séparateur de gouttelettes (115) positionné entre le corps déflecteur (119) et la sortie de gaz (113) et/ou que le séparateur de liquide (31) comprend une conduite d'alimentation (133) reliée à l'entrée latérale (135) et s'enroulant en spirale autour du tube métallique (103).

10. Dispositif selon l'une des revendications 1 à 9, **caractérisé en ce que** le corps déflecteur (119) présente un axe central (117) et 1 à 20 plaques déflectrices (121).

11. Procédé pour l'étude de réactions à catalyse hétérogène, comprenant :
(a) l'ajout de réactifs liquides et/ou gazeux et d'un catalyseur particulaire dans chacun des réacteurs (3) d'un dispositif (1) selon l'une des revendications 1 à 10 ;
(b) la conversion des réactifs liquides et/ou gazeux en présence du catalyseur particulaire dans chaque réacteur (3), produisant un produit de réaction gazeux contenant des composants condensables et/ou liquides ;
(c) la séparation du catalyseur particulaire du produit de réaction gazeux contenant des composants condensables et/ou liquides ;
(d) le cas échéant, le refroidissement du produit de réaction gazeux contenant des composants condensables et/ou liquides afin de condenser les composants condensables ;
(e) la séparation des composants condensés et/ou liquides dans le séparateur de liquide (31) ;
(f) le prélèvement d'un échantillon du produit de réaction gazeux après séparation des composants condensés et/ou liquides à un instant prédéfini dans le récipient d'échantillon (37), un échantillon étant prélevé du produit de réaction gazeux de chaque réacteur (3) à l'instant prédéfini, ou le prélèvement pulsé d'échantillons, chaque impulsion de prélèvement introduisant un échantillon du produit de réaction gazeux dans un nouveau récipient d'échantillon (37) ;
(g) l'analyse des échantillons contenus dans les récipients d'échantillon (37) ;
(h) le cas échéant, la pesée des séparateurs de liquide (31) pour déterminer la masse des composants condensables et/ou liquides séparés.

12. Procédé selon la revendication 11, **caractérisé en ce que** le catalyseur particulaire est acheminé depuis un réservoir de catalyseur (5, 5'), le catalyseur particulaire étant de préférence préchauffé dans le réservoir de catalyseur (5, 5').

13. Procédé selon la revendication 11 ou 12, **caractérisé en ce que** le catalyseur présente un temps de séjour dans le réacteur (3) compris entre 0,1 et 10 s.

14. Procédé selon l'une des revendications 11 à 13, **caractérisé en ce qu'**au moins un réactif liquide ou gazeux est ajouté et, à condition que le procédé soit mis en œuvre dans une configuration avec un catalyseur pulvérulent transporté vers le bas, le rapport massique du catalyseur au réactif est compris entre 1 et 100, ou, à condition que le procédé soit mis en œuvre dans une configuration avec un catalyseur pulvérulent transporté vers le haut, le rapport massique du catalyseur au réactif est compris entre 1 et 20.

15. Procédé selon l'une des revendications 11 à 14, **caractérisé en ce que** la réaction à catalyse hétérogène est une réaction de craquage catalytique.
